(19) Europäisches Patentamt
European Patent Office
Office européen des brevets

(11) **EP 2 266 114 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(51) Int Cl.:
***G10L 19/00*** *(2013.01)*

(21) Anmeldenummer: **09721188.2**

(22) Anmeldetag: **03.03.2009**

(86) Internationale Anmeldenummer:
**PCT/EP2009/001505**

(87) Internationale Veröffentlichungsnummer:
**WO 2009/112184 (17.09.2009 Gazette 2009/38)**

(54) **EINBETTER UND DETEKTOR EINES WASSERZEICHENS MIT ZUSATZINFORMATION**

EMBEDDER AND DETECTOR OF A WATERMARK COMPRISING ADDITIONAL INFORMATION

DISPOSITIF D'INTÉGRATION D'UN FILIGRANE, ET DÉTECTEUR DE FILIGRANE, AVEC INFORMATION SUPPLÉMENTAIRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK TR**

(30) Priorität: **14.03.2008 DE 102008014311**

(43) Veröffentlichungstag der Anmeldung:
**29.12.2010 Patentblatt 2010/52**

(60) Teilanmeldung:
**11171420.0 / 2 372 702**

(73) Patentinhaber: **Fraunhofer-Gesellschaft zur Förderung der angewandten Forschung e.V.
80686 München (DE)**

(72) Erfinder:
• **GRILL, Bernhard
91207 Lauf (DE)**
• **EBERLEIN, Ernst
91091 Grossenseebach (DE)**

• **KRÄGELOH, Stefan
91056 Erlangen (DE)**
• **PICKEL, Jörg
91224 Pommelsbrunn (DE)**
• **BORSUM, Juliane
91058 Erlangen (DE)**

(74) Vertreter: **Burger, Markus et al
Schoppe, Zimmermann, Stöckeler Zinkler, Schenk & Partner mbB
Patentanwälte
Radlkoferstraße 2
81373 München (DE)**

(56) Entgegenhaltungen:
**US-A1- 2004 001 608**

• **HUA, FENG, SHI: "Public Multiple Watermarking Resistant to Cropping" PROC. OF THE 6TH INTERNATIONAL CONFERENCE ON PATTERN RECOGNITION AND INFORMATION PROCESSING, PRIP'2001, 18. Mai 2001 (2001-05-18), - 20. Mai 2001 (2001-05-20) Seiten 263-267, XP007908553 Minsk, Belarus**

## Beschreibung

Ausführungsbeispiele der vorliegenden Erfindung beziehen sich auf Einbetter zum Einbetten eines Wasserzeichens in eine Informationsdarstellung, auf Detektoren zum Detektieren eines Wasserzeichens in einer Informationsdarstellung, auf Verfahren zum Einbetten eines Wasserzeichens in eine Informationsdarstellung, auf Verfahren zum Detektieren eines Wasserzeichens in einer Informationsdarstellung, auf entsprechende Computerprogramme und auf ein Informationssignal.

Einige Ausführungsbeispiele der vorliegenden Erfindung beziehen sich auf Vorrichtungen und Verfahren zur mehrfachen Wasserzeicheneinbettung und Wasserzeichenextraktion.

In vielen Bereichen der Informationsverarbeitung ist es heute wünschenswert, zu einer Information ein Wasserzeichen hinzuzufügen. Bei einem Wasserzeichen handelt es sich beispielsweise um eine Information, die zu der eigentlichen Nutzinformation hinzugefügt werden kann, ohne die eigentliche Information im Wesentlichen zu beeinträchtigen. Bei der Hinzufügung eines Wasserzeichens kann beispielsweise das Datenformat der Nutzinformation beibehalten werden, indem beispielsweise das Wasserzeichen der Nutzinformation überlagert wird. Bei einigen bekannten Verfahren geschieht die Überlagerung des Wasserzeichens zu der Nutzinformation derart, dass eine Störung der Nutzinformation so gering ist, dass sie beispielsweise bei einer Wiedergabe der Nutzinformation nicht oder nur schwach stört.

Wasserzeichen können beispielsweise zu einer Informationsdarstellung hinzugefügt werden, die ein Audiosignal repräsentiert. Ferner können Wasserzeichen beispielsweise zu einer Informationsdarstellung hinzugefügt werden, die ein Videosignal repräsentiert. Ein Wasserzeichen kann aber auch zu einer Informationsdarstellung hinzugefügt werden, die beispielsweise ein Computerprogramm repräsentiert. Auch andere Informationsdarstellungen, die andere Datenformen repräsentieren, können mit einem Wasserzeichen versehen werden.

Besondere Herausforderungen ergeben sich, wenn mehrere Wasserzeichen in eine einzige Nutzinformation eingebettet werden sollen. In diesem Fall kommt es häufig zu einer gegenseitigen Beeinflussung der Wasserzeichen, wodurch in manchen Fällen eine Detektion erschwert wird oder gar unmöglich wird. Die gegenseitige Beeinflussung der Wasserzeichen kann auch dazu führen, dass eine Störung der eigentlichen Nutzinformation inakzeptabel groß wird.

Ferner steigt bei einigen herkömmlichen Verfahren ein Aufwand, der nötig ist, um mehrere Wasserzeichen aus einer Informationsdarstellung zu extrahieren, stark an.

Der Artikel "Public Multiple Watermarking Resistant to Cropping" von X. S. Hua und anderen (veröffentlicht in den "Proceedings of the 6th International Conference on Pattern Recognition and Information Processing, PRIP' 2001", 18. - 20. Mai 2001, Minsk, Weißrussland) beschreibt einen Bild-Wasserzeichenansatz, der mehrere Wasserzeichen in diskrete Wavelet-Domänen des Bildes gleichzeitig einbettet, indem entsprechende Koeffizienten quantisiert werden. Das Bild wird in Blöcke eingeteilt und es werden drei Klassen von Wasserzeichen, beispielsweise robuste Wasserzeichen, fragile Wasserzeichen und Überschriften-Wasserzeichen, in die Wavelet-Domäne jeden Blocks eingebettet. Zur Detektion von Wasserzeichen basiert ein Algorithmus auf Raum-Frequenzlokalisierungseigenschaften einer Wavelet-Transformation, um Wasserzeichen zu synchronisieren. Dies macht die Wasserzeichen widerstandsfähig im Hinblick auf "Cropping"-Attacken.

Die US 2004/001608 A1 beschreibt einen Bildprozessor und ein Bildverarbeitungsverfahren. Ein Mustersignal wird steganografisch in ein Inhalts-Objekt codiert, um dabei zu helfen, eine Störung (z. B. eine Bild-Rotation) zu identifizieren, der das Objekt unterworfen sein kann. Das Signal umfasst ein Merkmal, das verwendbar ist, um eine richtige Orientierung eindeutig festzustellen.

Es ist somit die Aufgabe der vorliegenden Erfindung, ein Konzept zu schaffen, das eine Einbettung eines Wasserzeichens in eine Informationsdarstellung verbessert bzw. eine Detektion eines Wasserzeichens in einer Informationsdarstellung erleichtert.

Diese Aufgabe wird durch einen Einbetter zum Einbetten eines einzubettenden Wasserzeichens in eine Eingangs-Informationsdarstellung gemäß Anspruch 1 oder 2, durch einen Detektor zum Detektieren von zumindest einem Wasserzeichen in einer Eingangs-Informationsdarstellung gemäß Anspruch 3, durch Verfahren zum Einbetten eines einzubettenden Wasserzeichens in eine Eingangs-Informationsdarstellung gemäß den Ansprüchen 4 und 5, durch ein Verfahren zum Detektieren von zumindest einem Wasserzeichen in einer Eingangs-Informationsdarstellung gemäß Anspruch 6, durch ein Computerprogramm gemäß Anspruch 7 und durch ein Informationssignal gemäß Anspruch 8 gelöst.

Gemäß einem Aspekt schafft die vorliegende Erfindung einen Einbetter zum Einbetten eines einzubettenden Wasserzeichens in eine Eingangs-Informationsdarstellung, mit einem Informations-Hinzufüger, der ausgelegt ist, um die Eingangs-Informationsdarstellung mit dem Wasserzeichen und einer hinzuzufügenden Zusatzinformation zu versehen, um eine mit dem Wasserzeichen und der hinzuzufügenden Zusatzinformation versehene Informationsdarstellung zu erhalten. Die hinzuzufügende Zusatzinformation umfasst eine beschreibende Information im Hinblick auf eine Einbettung zumindest eines Wasserzeichens in die Eingangs-Informationsdarstellung.

Der genannte Aspekt basiert auf der Erkenntnis, dass eine Extraktion eines in die Informationsdarstellung eingebetteten Wasserzeichens durch eine beschreibende Information, die die Einbettung zumindest eines Wasserzeichens in die Eingangs-Informationsdarstellung beschreibt, erleichtert werden kann. Durch das Hinzufügen der Zusatzinformation wird somit innerhalb der mit dem einzubettenden Wasserzeichen versehenen Informationsdarstellung eine Information bereitgestellt, die durch einen Wasserzeichendetektor zur Steuerung der Wasserzeichen-Detektion bzw. Wasserzeichen-Extraktion verwendet werden kann. Die beschreibende Zusatzinformation kann beispielsweise eine Information darüber tragen, ob, wie, wann oder von wem das Wasserzeichen zu der Eingangs-Informationsdarstellung hinzugefügt wurde. Somit kann die Zusatzinformation einem Wasserzeichen-Detektor bzw. Wasserzeichen-Extraktor dazu dienen, zu entscheiden, ob das Wasserzeichen extrahiert werden soll und/oder auf welche Weise (z. B. unter Verwendung welcher Detektionsparameter) das Wasserzeichen extrahiert werden soll. Durch das Vorhandensein der Zusatzinformation, die die Einbettung eines Wasserzeichens in die mit dem Wasserzeichen versehene Informationsdarstellung beschreibt, kann beispielsweise auf der Seite eines Wasserzeichendetektors darauf verzichtet werden, die mit dem einzubettenden Wasserzeichen versehene Informationsdarstellung nach allen möglichen, dem Wasserzeichendetektor bekannten Wasserzeichen zu durchsuchen. Vielmehr kann der Wasserzeichendetektor beispielsweise bereits anhand der Zusatzinformation erkennen, welche Wasserzeichen in der mit dem Wasserzeichen versehenen Informationsdarstellung überhaupt vorhanden sind. Somit kann der Wasserzeichendetektor beispielsweise eine Suche entsprechend einschränken, wodurch sich ein Aufwand bei der Suche nach Wasserzeichen in dem Wasserzeichendetektor erheblich verringert. Die Zusatzinformation kann ferner beispielsweise eine Information über bei der Einbettung verwendete Ressourcen (z. B. Frequenzressourcen, Zeitressourcen oder Code-Ressourcen) umfassen, so dass bei der Detektion eines Wasserzeichens in der mit dem einzubettenden Wasserzeichen versehenen Informationsdarstellung der Detektor die Zusatzinformation auswerten kann, um Detektionsparameter geeignet bzw. gezielt für eine Detektion der zu detektierenden Wasserzeichen einzustellen.

Die Zusatzinformation kann ferner beispielsweise eine Information darüber tragen, wie viele Wasserzeichen in der Informationsdarstellung eingebettet sind. Somit kann beispielsweise ein Wasserzeichendetektor nach Auswertung der entsprechenden Information ein Abbruchkriterium erhalten, so dass der Wasserzeichendetektor beispielsweise eine Suche nach Wasserzeichen abbrechen kann, wenn so viele Wasserzeichen gefunden wurden, wie durch die Zusatzinformation beschrieben werden.

Zusammenfassend ist somit festzuhalten, dass durch das Hinzufügen einer Zusatzinformation, die die Einbettung von Wasserzeichen in die Eingangs-Informationsdarstellung bzw. in die mit dem einzubettenden Wasserzeichen versehene Informationsdarstellung beschreibt, eine Effizienz bei einer Detektion von Wasserzeichen in einem Wasserzeichendetektor wesentlich verbessert werden kann.

Entsprechend schafft die vorliegende Erfindung gemäß einem weiteren Aspekt einen Detektor zum Detektieren von zumindest einem Wasserzeichen in einer Eingangs-Informationsdarstellung, wobei der Detektor einen Einbettungsinformations-Extraktor aufweist, der ausgelegt ist, um eine Einbettungsinformation, die eine beschreibende Information im Hinblick auf die Einbettung zumindest eines Wasserzeichens in die Eingangs-Informationsdarstellung (bzw. in die mit dem Wasserzeichen versehene Informationsdarstellung) umfasst, aus der Informationsdarstellung zu extrahieren. Der entsprechende Detektor umfasst ferner einen Wasserzeichenextraktor, der ausgelegt ist, um ein oder mehrere in der Eingangs-Informationsdarstellung enthaltene Wasserzeichen in Abhängigkeit von der Einbettungsinformation zu extrahieren.

Der entsprechende Detektor ist beispielsweise in der Lage, die durch den oben beschriebenen Einbetter zu der Informationsdarstellung hinzugefügte Zusatzinformation als Einbettungsinformation aus der Informationsdarstellung zu extrahieren und die Wasserzeichenextraktion in Abhängigkeit von der Einbettungsinformation zu steuern. Somit ist der genannte Detektor beispielsweise in der Lage, die Zusatzinformation auszunutzen und die oben im Hinblick auf den entsprechenden Einbetter beschriebenen Vorteile zu realisieren.

Gemäß einigen weiteren Ausführungsbeispielen schafft die vorliegende Erfindung eine Informationssignal, das zumindest ein Wasserzeichen und eine beschreibende Information im Hinblick auf die Einbettung des zumindest einen Wasserzeichens in das Informationssignal umfasst. Das entsprechende Informationssignal erlaubt aufgrund des Vorhandenseins der beschreibenden Information im Hinblick auf die Einbettung des zumindest einen Wasserzeichens in das Informationssignal eine wesentlich leichtere (beispielsweise schnellere bzw. ressourcensparendere) Extraktion des in das Informationssignal eingebetteten Wasserzeichens, als dies herkömmlicherweise möglich ist.

Ausführungsbeispiele der vorliegenden Erfindung werden nachfolgend Bezug nehmend auf die beiliegenden Figuren näher erläutert. Es zeigen:

Fig. 1    ein Blockschaltbild eines Wasserzeichen-Einbetters, gemäß einem Ausführungsbeispiel der Erfindung;

Fig. 2    ein Blockschaltbild eines Wasserzeichendetektors, gemäß einem Ausführungsbeispiel der Erfindung;

Fig. 3a   ein Blockschaltbild eines Wasserzeichen-Einbetters, gemäß einem Ausführungsbeispiel der Erfindung;

Fig. 3b   ein Blockschaltbild eines Wasserzeichen-Einbetters, gemäß einem Ausführungsbeispiel der vorliegenden Erfindung;

Fig. 3c    ein Blockschaltbild eines Wasserzeichen-Einbetters, gemäß einem Ausführungsbeispiel der Erfindung;

Fig. 4    ein Blockschaltbild eines Wasserzeichendetektors, gemäß einem Ausführungsbeispiel der Erfindung;

Fig. 5    ein Blockschaltbild eines Wasserzeichen-Einbetters, gemäß einem Ausführungsbeispiel der Erfindung;

Fig. 6    ein Blockschaltbild eines Wasserzeichendetektors, gemäß einem Ausführungsbeispiel der Erfindung;

Fig. 7a    ein Blockschaltbild eines Wasserzeichen-Einbetters mit einem Wasserzeichen-Informations-Erkenner und einem Einbettungsparameter-Bestimmer, gemäß einem Ausführungsbeispiel der vorliegenden Erfindung;

Fig. 7b    eine schematische Darstellung eines Informationssignals mit einem eingebetteten Wasserzeichen, gemäß einem Ausführungsbeispiel der Erfindung;

Fig. 7c    eine schematische Darstellung einer Bestimmung einer Wertefolge unter Verwendung einer Einwegsfunktion;

Fig. 7d    eine graphische Darstellung eines Ablaufs einer Berechnung eines Einbettungscodes basierend auf einem Anfangswert;

Fig. 8    ein Blockschaltbild eines Wasserzeichendetektors gemäß einem Ausführungsbeispiel der Erfindung;

Fig. 9    ein Blockschaltbild eines Wasserzeichen-Einbetters, gemäß einem Ausführungsbeispiel der Erfindung;

Fig. 10    ein Blockschaltbild eines Wasserzeichen-Detektors, gemäß einem Ausführungsbeispiel der Erfindung;

Fig. 11    ein Flussdiagramm eines Verfahrens zum Einbetten eines Wasserzeichens, gemäß einem Ausführungsbeispiel der Erfindung;

Fig. 12    ein Flussdiagramm eines Verfahrens zum Detektieren eines Wasserzeichens, gemäß einem Ausführungsbeispiel der Erfindung;

Fig. 13    eine graphische Darstellung eines Schritts zum Einbetten eines Wasserzeichens, gemäß einem Ausführungsbeispiel der Erfindung;

Fig. 14    ein Flussdiagramm eines Verfahrens zum Detektieren eines Wasserzeichens, gemäß einem Ausführungsbeispiel der Erfindung;

Fig. 15    ein Flussdiagramm eines Verfahrens zum Einbetten eines Wasserzeichens, gemäß einem Ausführungsbeispiel der Erfindung; und

Fig. 16    ein Flussdiagramm eines Verfahrens zum Detektieren eines Wasserzeichens, gemäß einem Ausführungsbeispiel der Erfindung.

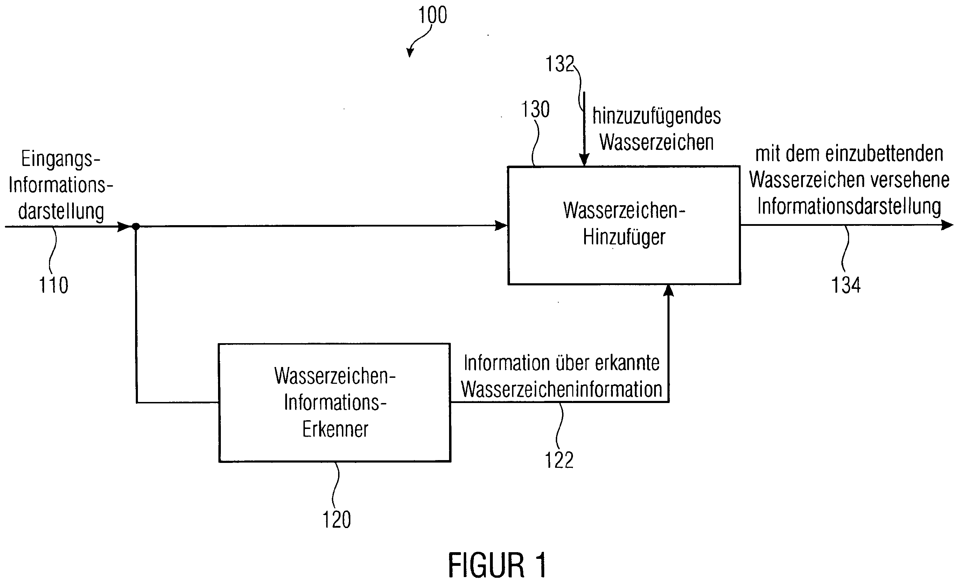

Fig. 1 zeigt ein Blockschaltbild eines Einbetters zum Einbetten eines einzubettenden beziehungsweise hinzuzufügenden Wasserzeichens in eine Eingangs-Informationsdarstellung. Der Einbetter gemäß der Fig. 1 ist in seiner Gesamtheit mit 100 bezeichnet. Der Einbetter 100 ist ausgelegt, um eine Eingangs-Informationsdarstellung 110 zu empfangen. Der Einbetter 100 umfasst einen Wasserzeichen-Informations-Erkenner 120, der ausgelegt ist, um eine bereits in der Eingangs-Informationsdarstellung 110 enthaltene Wasserzeicheninformation zu erkennen. Somit liefert der Wasserzeicheninformationserkenner 120 beispielsweise eine Information 122 über eine in der Eingangs-Informationsdarstellung 110 erkannte Wasserzeicheninformation. Der Einbetter 100 umfasst ferner einen Wasserzeichenhinzufüger 130, der ausgelegt ist, um die Eingangs-Informationsdarstellung 110 abhängig von der von dem Wasserzeichen-Informations-Erkenner 120 erkannten Wasserzeicheninformation mit einem hinzuzufügenden Wasserzeichen 132 zu versehen, um eine mit dem einzubettenden Wasserzeichen 132 versehene Informationsdarstellung 134 zu erhalten. Der Wasserzeichenhinzufüger 130 kann somit beispielsweise ausgelegt sein, um die Eingangs-Informationsdarstellung 110 sowie die Information 122 von dem Wasserzeicheninformationserkenner 120 zu empfangen. Ferner kann der Wasserzeichenhinzufüger 130 beispielsweise ausgelegt sein, um das hinzuzufügende Wasserzeichen 132 zu empfangen.

Das hinzuzufügende Wasserzeichen 132 kann aber auch fest in dem Wasserzeichen-Hinzufüger 130 gespeichert sein.

Im Hinblick auf die Funktionsweise des Einbetters 100 ist festzuhalten, dass der Wasserzeichen-Hinzufüger 130 das hinzuzufügende Wasserzeichen 132 abhängig von einer in der Eingangs-Informationsdarstellung 110 bereits enthaltenen Wasserzeicheninformation zu der Eingangs-Informationsdarstellung 110 hinzufügen kann. Der Einbetter 100 ermöglicht somit, dass das hinzuzufügende Wasserzeichen 132 der Eingangs-Informationsdarstellung 110 nicht in willkürlicher Weise sondern mit Rücksicht auf das in der Eingangs-Informationsdarstellung 110 bereits enthaltene Wasserzeichen hinzugefügt wird.

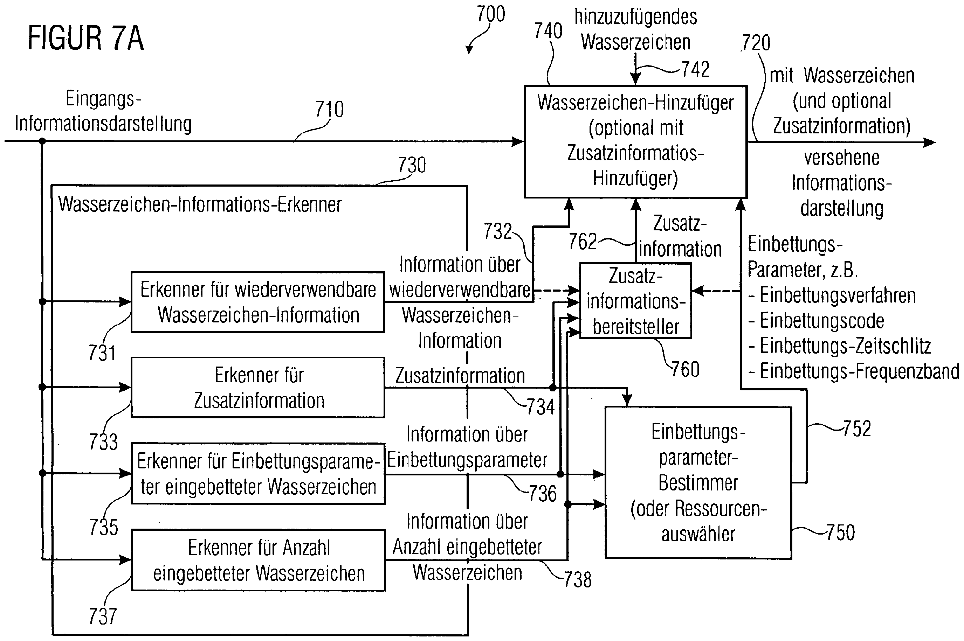

Im Hinblick auf die Art und Weise, wie das in der Eingangs-Informationsdarstellung 110 bereits enthaltene Wasserzeichen durch den Wasserzeichen-Hinzufüger 130 berücksichtigt wird, existieren verschiedene Möglichkeiten, die im Folgenden beispielsweise anhand der Fig. 7a - 7d noch näher erläutert werden.

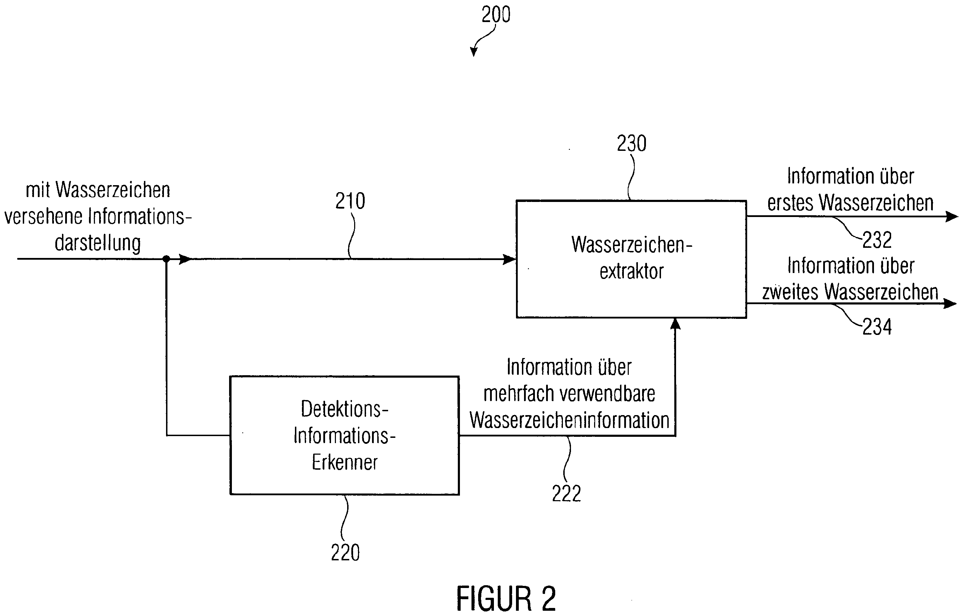

Fig. 2 zeigt ein Blockschaltbild eines Detektors zum Detektieren von zumindest zwei Wasserzeichen in einer mit einem Wasserzeichen versehenen Informationsdarstellung. Der Detektor gemäß der Fig. 2 ist in seiner Gesamtheit mit 200 bezeichnet. Der Detektor 200 ist ausgelegt, um eine mit einem Wasserzeichen versehene Informationsdarstellung 210 zu empfangen. Der Detektor 200 umfasst ferner einen Detektions-Informations-Erkenner 220, der ausgelegt ist, um eine mehrfach-verwendbare Wasserzeicheninformation in der mit dem Wasserzeichen versehene Informationsdarstellung 210 zu identifizieren. Der Detektions-Informations-Erkenner 220 ist daher beispielsweise ausgelegt, um die Informationsdarstellung 210 zu empfangen und um eine Information 222 über eine mehrfach-verwendbare Wasserzeicheninformation zu liefern. Der Detektor 200 umfasst ferner einen Wasserzeichenextraktor 230, der ausgelegt ist, um ein erstes Wasserzeichen unter Ausnutzung der mehrfach-verwendbaren Wasserzeicheninformation aus der Informationsdarstellung 210 zu extrahieren, und um ein zweites Wasserzeichen unter Ausnutzung der mehrfach-verwendbaren Wasserzeicheninformation aus der Eingangs-Informationsdarstellung 210 zu extrahieren. Der Wasserzeichenextraktor 230 ist beispielsweise ausgelegt, um die Informationsdarstellung 210 sowie die von dem Detektions-Informations-Erkenner 220 gelieferte Information 222 zu empfangen und basierend darauf eine Information 232 über ein erstes Wasserzeichen sowie eine Information 234 über ein zweites Wasserzeichen zu liefern.

Im Hinblick auf die Funktionsweise des Detektors 200 ist festzuhalten, dass der Wasserzeichenextraktor 230 beispielsweise ausgelegt ist, um für die Detektion des ersten Wasserzeichens, das durch die Information 232 beschrieben wird, und für die Detektion des zweiten Wasserzeichens, das durch die Information 234 beschrieben wird, eine den beiden Wasserzeichen gemeinsame Information zu verwenden. Beispielsweise kann es sich bei der gemeinsamen mehrfach-verwendbaren Information um eine Synchronisationsinformation handeln, die für die beiden Wasserzeichen gemeinsam ist. So ist es in diesem Fall beispielsweise ausreichend, die Synchronisationsinformation nur einmal zu erkennen, woraufhin die Detektion der zumindest zwei Wasserzeichen basierend auf der gemeinsamen Synchronisationsinformation erfolgen kann.

Bei der gemeinsamen mehrfach-verwendbaren Information kann es sich beispielsweise zusätzlich oder alternativ um eine Information handeln, die anzeigt, dass das erste Wasserzeichen und das zweite Wasserzeichen mit zumindest einem gemeinsamen Detektionsparameter detektiert werden können. Beispielsweise kann die Informationsdarstellung 210 eine Information enthalten, die anzeigt, dass zumindest zwei Wasserzeichen gemäß einem gemeinsamen Einbettungsverfahren in die Informationsdarstellung 210 eingebettet wurden, so dass der Wasserzeichenextraktor 230 davon ausgehen kann, dass zumindest zwei Wasserzeichen mit einem entsprechenden gemeinsamen Extraktionsverfahren aus der Informationsdarstellung 210 extrahiert werden können.

Ferner kann beispielsweise die Informationsdarstellung 210 eine Information darüber tragen, wie viele Wasserzeichen in der Informationsdarstellung 210 eingebettet sind. Die entsprechende Anzahl-Information kann beispielsweise als eine gemeinsame Information angesehen werden, die gemeinsam die zumindest zwei in der Informationsdarstellung 210 enthaltenen Wasserzeichen beschreibt. Die Anzahl-Informationen kann beispielsweise durch den Detektions-Informations-Erkenner 220 extrahiert werden, und kann ferner dazu herangezogen werden, um beispielsweise einen oder mehrere Extraktionsparameter für den Wasserzeichen-Extraktor 230 einzustellen, um die mehreren Wasserzeichen korrekt aus der Informationsdarstellung 210 zu extrahieren. In anderen Worten, die Anzahl-Information kann verwendet werden, um Detektionsparameter des Wasserzeichen-Extraktors 230 für die Extraktion von zweierlei Wasserzeichen korrekt einzustellen.

Ist beispielsweise bekannt, dass in der Informationsdarstellung 210 drei Wasserzeichen enthalten sind, so können beispielsweise bei der Extraktion des ersten Wasserzeichens und bei der Extraktion des zweiten Wasserzeichens solche Detektionsparamter außer Betracht gelassen werden, die für die Einbettung eines vierten bis N-ten Wasserzeichens vorgesehen sind. Vielmehr ist es ausreichend, den Bereich der zu berücksichtigenden Detektionsparameter entsprechend der Anzahl der vorhandenen Wasserzeichen zu beschränken.

Weitere Details werden im Übrigen noch im Folgenden beschrieben, beispielsweise anhand der Fig. 7a - 7d.

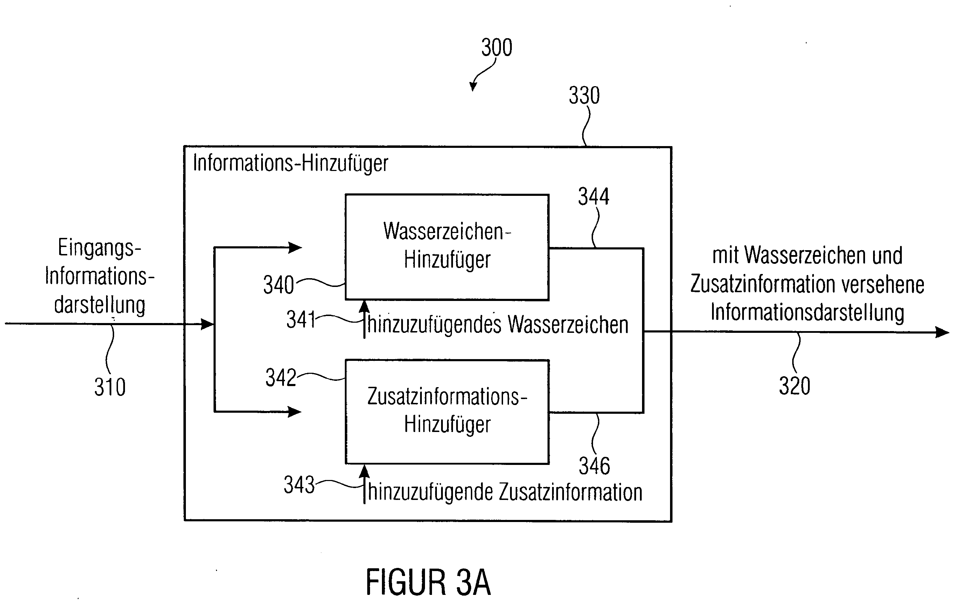

Fig. 3a zeigt ein Blockschaltbild eines Einbetters zum Einbetten eines einzubettenden Wasserzeichens in eine Eingangs-Informationsdarstellung, gemäß einem Ausführungsbeispiel der Erfindung. Der Einbetter gemäß der Fig. 3a ist in seiner Gesamtheit mit 300 bezeichnet. Der Einbetter 300 ist ausgelegt, um eine Eingangs-InformationsDarstellung 310 zu empfangen, und um eine mit einem Wasserzeichen und einer Zusatzinformation versehene Informationsdarstellung 320 zu liefern. Der Einbetter 300 umfasst eine Informations-Hinzufüger 330, der ausgelegt ist, um die Eingangs-Informationsdarstellung 310 zu empfangen und um die mit dem Wasserzeichen und der Zusatzinformation versehene Informationsdarstellung 320 zu liefern. Der Informations-Hinzufüger 330 ist insgesamt ausgelegt, um die Informationsdarstellung 310 mit dem hinzuzufügenden Wasserzeichen 341 und einer hinzuzufügenden Zusatzinformation 343 zu versehen, um die mit dem Wasserzeichen und der Zusatzinformation versehene Informationsdarstellung 320 zu erhalten. Die hinzuzufügende Zusatzinformation umfasst eine beschreibende Information im Hinblick auf eine Einbettung zumindest eines Wasserzeichens in die Informationsdarstellung. Beispielsweise beschreibt die beschreibende Information die Einbettung zumindest eines Wasserzeichens in die Informationsdarstellung.

Die Fig. 3a zeigt eine beispielhafte Topologie des Informations-Hinzufügers 330. Der Informations-Hinzufüger 330 kann beispielsweise in einer parallelen Struktur ein Wasserzeichen-Hinzufüger 340 sowie einen Zusatzinformations-Hinzufüger 342 aufweisen. Beispielsweise können sowohl der Wasserzeichen-Hinzufüger 360 als auch der Zusatzinformations-Hinzufüger 342 die Eingangs-Informationsdarstellung 310 empfangen, um dazu das hinzuzufügende Wasserzeichen bzw. die hinzuzufügende Zusatzinformation hinzuzufügen. Beispielsweise kann der Wasserzeichenhinzufüger 340 ausgelegt sein, um die Eingangs-Informationsdarstellung 310 und das hinzuzufügende oder einzubettende Wasserzeichen 341 zu empfangen und basierend darauf eine mit dem hinzuzufügenden Wasserzeichen versehene Informationsdarstellung 344 zu erzeugen. Der Zusatzinformations-Hinzufüger 342 kann beispielsweise konfiguriert sein, um die Eingangs-Informationsdarstellung 310 und die hinzuzufügende Zusatzinformation 343 zu empfangen und basierend darauf eine mit der Zusatzinformation versehene Informationsdarstellung 346 zu erzeugen. Die mit dem Wasserzeichen versehene Informationsdarstellung 344 kann ferner beispielsweise mit der mit der Zusatzinformation versehenen Informationsdarstellung 346 kombiniert werden, um die mit Wasserzeichen und Zusatzinformation versehene Informationsdarstellung 320 zu erhalten, wie dies in der Fig. 3a angedeutet ist. Alternativ dazu ist es allerdings auch möglich, dass der Wasserzeichenhinzufüger 340 als Ausgangssignal eine an die Informationsdarstellung 310 angepasste Wasserzeicheninformation liefert, dass der Zusatzinformations-Hinzufüger 342 eine an die Informationsdarstellung 310 angepasste Zusatzinformation liefert, und dass die Ausgangssignale des Wasserzeichen-Hinzufügers 340 und des Zusatzinformations-Hinzufügers 342 anschließend mit der Eingangs-Informationsdarstellung 310 kombiniert werden, um die mit Wasserzeichen und der Zusatzinformation versehene Informationsdarstellung 320 zu erhalten.

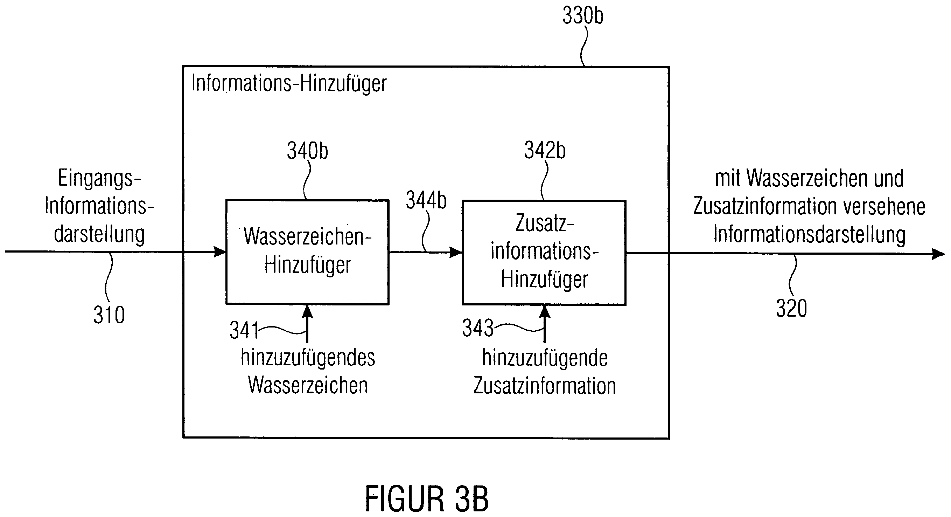

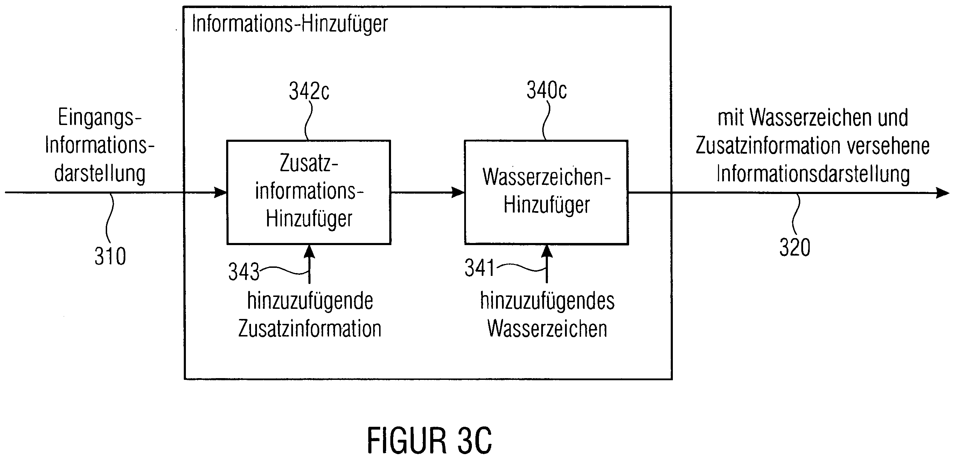

Alternativ dazu kann der Informations-Hinzufüger 330 auch andere Strukturen aufweisen, wie diese beispielsweise in den Fig. 3b und 3c beschrieben sind. Beispielsweise kann der Informations-Hinzufüger des Einbetter 300 durch einen Informations-Hinzufüger 330b gemäß Fig. 3b ersetzt werden. Der Informations-Hinzufüger 330b umfasst beispielsweise eine Serienanordnung eines Wasserzeichen-Hinzufügers 340b und eines Zusatzinformations-Hinzufügers 342b. Der Wasserzeichen-Hinzufüger 340b ist beispielsweise konfiguriert, um die Eingangs-Informationsdarstellung 310 zu empfangen und um eine mit einem Wasserzeichen versehene Eingangs-Informationsdarstellung 344b an den Zusatzinformations-Hinzufüger 342b zu liefern. Der Zusatzinformations-Hinzufüger 342b kann beispielsweise konfiguriert sein, um der mit dem Wasserzeichen versehenen Informationsdarstellung 344b die hinzuzufügende Zusatzinformation hinzuzufügen, und um somit die mit Wasserzeichen und Zusatzinformationen versehene Informationsdarstellung 320 zu liefern.

Wie aus der Fig. 3c ersichtlich, kann freilich die Reihenfolge des Zusatzinformations-Hinzufügers und des Wasserzeichen-Hinzufügers im Vergleich zu der anhand der Fig. 3b gezeigten Reihenfolge auch vertauscht werden. In diesem Fall ist beispielsweise ein Zusatzinformations-Hinzufüger 342c vor einem Wasserzeichen-Hinzufüger 340c angeordnet.

Zusammenfassend ist somit festzuhalten, dass verschiedene Strukturen verwendet werden können, um zu der Eingangs-Informationsdarstellung 310 sowohl das hinzuzufügende Wasserzeichen als auch die hinzuzufügende Zusatzinformation hinzuzufügen. Die Hinzufügung der beiden Informationen kann im Übrigen auch durch einen gemeinsamen Informations-Hinzufüger erfolgen, in dem die Blöcke "Wasserzeichen-Hinzufüger" und "Zusatzinformations-Hinzufüger" vereint bzw. zusammengefasst sind. In anderen Worten, es sind keine separaten Hinzufüger für das Wasserzeichen und die Zusatzinformationen erforderlich.

Allerdings kann die hinzuzufügende Zusatzinformation durchaus von Einbettungsparametern des Wasserzeichen-Hinzufügers abhängig sein. So kann beispielsweise die Zusatzinformation codieren, wie der Wasserzeichenhinzufüger konfiguriert bzw. parametrisiert ist, um das hinzuzufügende Wasserzeichen hinzuzufügen. Beispielsweise kann die Zusatzinformation eine Information darüber enthalten, welches Wasserzeichenverfahren der Wasserzeichen-Hinzufüger für das Hinzufügen des hinzuzufügenden Wasserzeichens verwendet. Ferner kann die Zusatzinformation auch einzelne Parameter beschreiben, die der Wasserzeichen-Hinzufüger bei dem Versehen der Eingangs-Informationsdarstellung 310 mit dem hinzuzufügenden Wasserzeichen verwendet. So kann die Zusatzinformation beispielsweise eine Information darüber tragen, welchen Einbettungscode der Wasserzeichen-Hinzufüger 340 verwendet, welche Frequenzressourcen (z. B. Frequenzbänder) der Wasserzeichen-Hinzufüger 340 für die Einbettung des Wasserzeichens verwendet, oder welche Zeitressourcen (z. B. Zeitschlitze) der Wasserzeichen-Hinzufüger für die Einbettung des Wasserzeichens verwendet. Ferner können beispielsweise der Wasserzeichen-Hinzufüger 340 und der Zusatzinformations-Hinzufüger 342 auch verschiedene Einbettungsverfahren verwenden, wenn beispielsweise gemäß einer Spezifikation gefordert ist, dass die Zusatzinformation immer, unabhängig davon, welches Einbettungsverfahren der Wasserzeichen-Hinzufüger 340 verwendet, gemäß einem vorbestimmten Einbettungsverfahren eingebettet wird. In diesem Fall sind der Wasserzeichen-Hinzufüger 340 und der Zusatzinformations-Hinzufüger 342 beispielsweise so ausgelegt, dass es zu keiner erheblichen gegenseitigen Beeinträchtigung bei dem Hinzufügen des Wasserzeichens und bei dem Hinzufügen der Zusatzinformation kommt.

Weitere Details im Hinblick auf die Einbettung eines Wasserzeichen und einer Zusatzinformation werden im Übrigen im Folgenden noch erläutert, beispielsweise anhand der Fig. 7a - 7d.

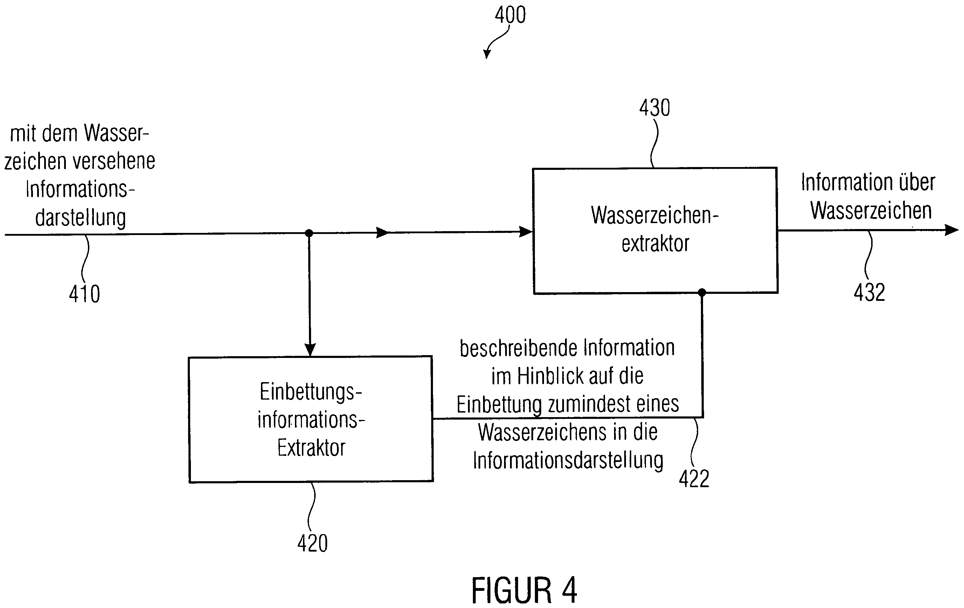

Fig. 4 zeigt ein Blockschaltbild eines Detektors zum Detektieren von zumindest einem Wasserzeichen in einer mit einem Wasserzeichen versehenen Eingangs-Informationsdarstellung. Der Detektor gemäß der Fig. 4 ist in seiner Gesamtheit mit 400 bezeichnet. Der Detektor 400 ist ausgelegt, um eine mit einem Wasserzeichen versehene Informationsdarstellung (bzw. Eingang-InformationsDarstellung) 410 zu empfangen. Der Detektor 400 umfasst einen Einbettungsinformations-Extraktor 420, der ausgelegt ist, um die mit dem Wasserzeichen versehene Informationsdarstellung 410 zu empfangen, und um eine Einbettungsinformation 422, die eine beschreibende Information im Hinblick auf die Einbettung zumindest eines Wasserzeichens in die Informationsdarstellung umfasst, aus der Informationsdarstellung 410 zu extrahieren.

Der Detektor 400 umfasst ferner einen Wasserzeichenextraktor 430, der ausgelegt ist, um die mit dem Wasserzeichen versehene Informationsdarstellung 410 sowie die beschreibende Information 422 im Hinblick auf die Einbettung zumindest eines Wasserzeichens in die Informationsdarstellung 410 zu empfangen. Der Wasserzeichenextraktor 430 ist ferner ausgelegt, um ein oder mehrere in der Informationsdarstellung 410 enthaltene Wasserzeichen in Abhängigkeit von der Einbettungsinformation 422 zu extrahieren und um somit eine Information 432 über zumindest ein Wasserzeichen bereitzustellen.

Der Wasserzeichenextraktor 430 kann somit basierend auf der Einbettungsinformation 422 gezielt ein Wasserzeichen in der Informationsdarstellung 410 identifizieren. Aufgrund der beschreibenden Information 422 liegt dem Wasserzeichenextraktor 430 beispielsweise eine Information 422 darüber vor, mit welchem Einbettungsverfahren ein in der Informationsdarstellung 410 vorhandenes Wasserzeichen in die Informationsdarstellung eingebettet ist. Alternativ oder zusätzlich kann dem Wasserzeichenextraktor 430 von dem Einbettungsinformations-Extraktor 420 beispielsweise eine Information 422 darüber geliefert werden, welcher Detektionscode beziehungsweise Extraktionscode zur Extraktion eines Wasserzeichens aus der Informationsdarstellung 410 zu verwenden ist. Ferner kann der Einbettungsinformations-Extraktor 420 an den Wasserzeichenextraktor 430 beispielsweise eine Information 422 darüber liefern, wie viele Wasserzeichen in der Informationsdarstellung 410 enthalten sind.

Der Einbettungsinformations-Extraktor 420 kann zur Bereitstellung der beschreibenden Information 422 beispielsweise eine Zusatzinformation, die in der Informationsdarstellung 410 enthalten ist, auswerten. Unter einer Zusatzinformation kann beispielsweise eine Information verstanden werden, die nicht zu dem eigentlichen Informationsinhalt des Wasserzeichens gehört, sondern die beschreibt, auf welche Weise ein oder mehrere Wasserzeichen in die Informationsdarstellung 410 eingebettet sind.

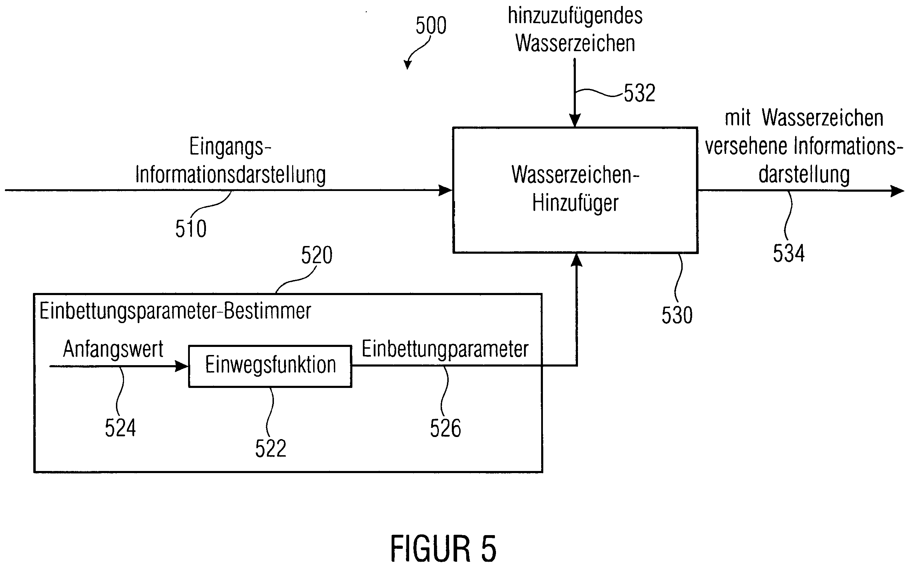

Fig. 5 zeigt ein Blockschaltbild eines Einbetters zum Einbetten eines Wasserzeichens in eine Informationsdarstellung bzw. in eine Eingangs-Informationsdarstellung, gemäß einem Ausführungsbeispiel der Erfindung. Der Einbetter gemäß der Fig. 5 ist in seiner Gesamtheit mit 500 bezeichnet. Der Einbetter 500 ist ausgelegt, um eine Eingangs-Informationsdarstellung 510 zu empfangen, und um eine mit dem einzubettenden bzw. hinzuzufügenden Wasserzeichen versehene Informationsdarstellung 534 zu erzeugen. Der Einbetter 500 umfasst einen Einbettungsparameter-Bestimmer 520. Der Einbettungsparameter-Bestimmer 520 ist ausgelegt, um eine schematisch angedeutete Ableitungsfunktion 522 auf einen Anfangswert 524 einmal oder mehrmals anzuwenden, um einen Einbettungsparameter 526 zur Einbettung des einzubettenden Wasserzeichens in die Informationsdarstellung zu erhalten. Der Einbetter 500 umfasst ferner einen Wasserzeichen-Hinzufüger 530, der ausgelegt ist, um die Eingangs-Informationsdarstellung 510 sowie den Einbettungsparameter 526 zu empfangen. Ferner kann der Wasserzeichenhinzufüger 530 ausgelegt sein, um das hinzuzufügende bzw. einzubettende Wasserzeichen 532 zu empfangen. Das hinzuzufügende oder einzubettende Wasserzeichen kann allerdings auch fest in dem Wasserzeichen-Hinzufüger 530 gespeichert sein.

Somit liefert der Wasserzeichenhinzufüger 530 beispielsweise durch Einbetten des hinzuzufügenden Wasserzeichens 532 in die Eingangs-Informationsdarstellung 510 unter Verwendung der Einbettungsparameter 526 eine mit dem einzubettenden Wasserzeichen versehene Informationsdarstellung 534.

Der Einbetter 500 ermöglicht somit die Festlegung der Einbettungsparameter 526 basierend auf einem Anfangswert 524, wobei eine Ableitungsfunktion 522 ausgewertet wird. Durch die Möglichkeit, die Ableitungsfunktion 522 mehrmals auszuwerten, besteht die Möglichkeit, basierend auf einem einzigen Anfangswert 524 verschiedene Sätze von Einbettungsparametern 526 in einfacher Weise zu erzeugen. Durch die Verwendung einer Ableitungsfunktion, bei der es sich beispielsweise um eine kryptographische Einwegsfunktion handeln kann, kann erreicht werden, dass eine Vergabe von Zugriffsrechten an verschiedene Einbetter erfolgen kann. Details diesbezüglich werden im Folgenden noch näher erläutert.

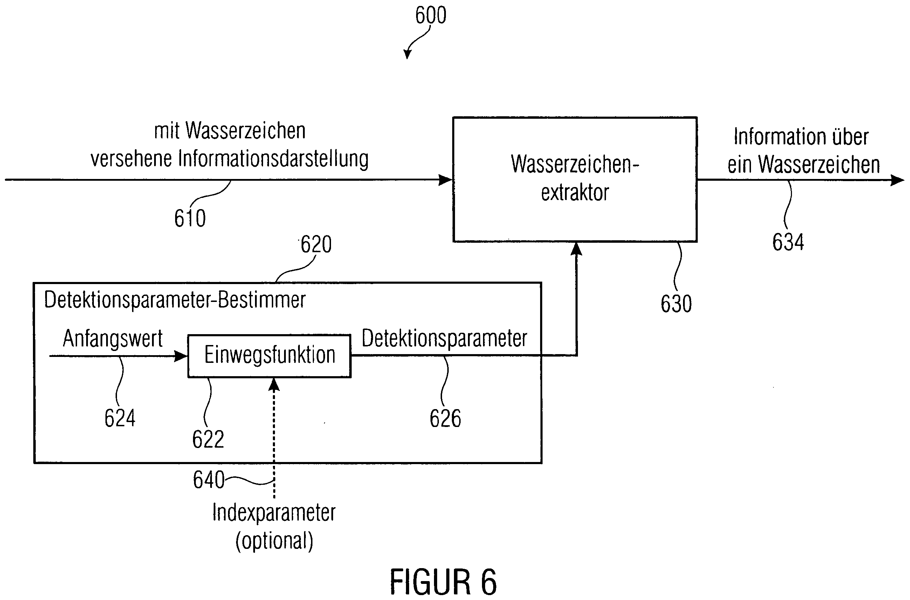

Fig. 6 zeigt ein Blockschaltbild eines Detektors zum Detektieren eines Wasserzeichens in einer mit einem Wasserzeichen versehenen Informationsdarstellung. Der Detektor gemäß der Fig. 6 ist in seiner Gesamtheit mit 600 bezeichnet. Der Detektor 600 ist ausgelegt, um eine mit einem Wasserzeichen versehene Informationsdarstellung beziehungsweise Eingangs-Informationsdarstellung 610 zu empfangen, und um eine Information 634 über ein in der Informationsdarstellung 610 enthaltenes Wasserzeichen zu liefern.

Der Detektor 600 umfasst einen Detektionsparameter-Bestimmer 620. Der Detektionsparameter-Bestimmer 620 ist ausgelegt, um eine schematisch dargestellte Ableitungsfunktion 622 auf einen Anfangswert 624, der von Außen vorgegeben werden kann, oder der in dem Detektionsparameter-Bestimmer 620 gespeichert sein kann, einmal oder mehrmals anzuwenden, um somit einen Detektionsparameter 626 zur Detektion des Wasserzeichens in der Informationsdarstellung zu erhalten.

Der Detektor 600 umfasst ferner einen Wasserzeichenextraktor 630, der ausgelegt ist, um die mit dem Wasserzeichen versehene Informationsdarstellung 610 sowie den Detektionsparameter 626 zu empfangen. Der Wasserzeichenextraktor 630 ist ferner konfiguriert, um aus der mit dem Wasserzeichen versehenen Informationsdarstellung 610 unter Verwendung des Detektionsparameters 626 die Information 634 über ein in der Informationsdarstellung 610 enthaltenes Wasserzeichen zu liefern. In anderen Worten, der Detektionsparameter 626 dient zur Einstellung des Wasserzeichen-Extraktors 630. Der Detektionsparameter kann dabei beispielsweise angeben, welche Ressourcen (z. B. welche Zeitschlitze oder Frequenzbänder) bei der Detektion des Wasserzeichens herangezogen werden. Alternativ oder zusätzlich kann der Detektionsparameter 626 beispielsweise dazu verwendet werden, um einen Detektionscode zu bestimmen, wenn beispielsweise in der Informationsdarstellung 610 verschiedene Wasserzeichen mit verschiedenen Codes voneinander getrennt sind.

Ferner kann der Detektionsparameter-Bestimmer 620 beispielsweise ausgelegt sein, um beispielsweise basierend auf einem (optionalen) Indexparameter 640 zu entscheiden, wie oft die Ableitungsfunktion 622 auf den Anfangswert 624 anzuwenden ist, um den Detektionsparameter 626 zu erhalten.

Im Übrigen sei darauf hingewiesen, dass bei der Bestimmung des Detektionsparameters 626 aus dem Anfangswert 624 beispielsweise noch zusätzliche Algorithmen eingesetzt werden können. So kann beispielsweise ein durch Anwendung der Ableitungsfunktion auf den Anfangswert erhaltenes Zwischenergebnis als Eingangswert für eine Berechnungsvorschrift dienen, die das Zwischenergebnis auf einen Detektionscode abbildet. Durch die Anwendung der entsprechenden Funktionsvorschrift kann beispielsweise erreicht werden, dass der so erhaltene Detektionsparameter bestimmte Eigenschaften aufweist, die für eine Wasserzeichen-Extraktion vorteilhaft bzw. erforderlich sind. Beispielsweise kann der durch die einmalige oder mehrmalige Anwendung der Ableitungsfunktion 622 auf den Anfangswert 624 erhaltene Zwischenwert als Startwert (Seed) für einen Spreizcode-Generator dienen, der ausgehend von verschiedenen Startwerten verschiedene Spreizcodes bestimmt, die beispielsweise zumindest näherungsweise orthogonal zueinander sind. Die entsprechenden Spreizcodes können dann beispielsweise als Detektionsparameter 626 dienen.

Allerdings sind viele andere Möglichkeiten denkbar, um das durch die Anwendung der Ableitungsfunktion auf den Anfangswert erhaltene Zwischenergebnis auf einen Detektionsparameter 626 abzubilden.

Fig. 7a zeigt ein Blockschaltbild eines Einbetters zum Einbetten eines hinzuzufügenden Wasserzeichens in eine Informationsdarstellung bzw. in eine Eingangs-Informationsdarstellung. Der Einbetter gemäß der Fig. 7a ist in seiner Gesamtheit mit 700 bezeichnet. Der Einbetter 700 ist ausgelegt, um eine Eingangs-Informationsdarstellung 710 zu empfangen und basierend darauf eine mit einem Wasserzeichen versehene Informationsdarstellung 720 zu erzeugen. Die mit dem Wasserzeichen versehene Informationsdarstellung 720 kann ferner optional mit einer Zusatzinformation versehen werden, die beispielsweise die Einbettung beschreibt.

Der Einbetter 700 umfasst einen Wasserzeichen-Informations-Erkenner 730, der ausgelegt ist, um die Eingangs-Informationsdarstellung 710 zu empfangen und daraus Informationen im Hinblick auf die Einbettung von Wasserzeichen zu erhalten. Der Einbetter 700 umfasst ferner einen Wasserzeichen-Hinzufüger 740, der ausgelegt ist, um, beispielsweise unter Verwendung von Informationen, die von dem Wasserzeichen-Informations-Erkenner 730 geliefert werden, ein hinzuzufügendes Wasserzeichen zu der Eingangs-Informationsdarstellung 710 hinzuzufügen, um die mit dem Wasserzeichen versehene Informationsdarstellung 720 zu erhalten. Der Einbetter 700 umfasst ferner beispielsweise einen Einbettungsparameter-Bestimmer 750, der ausgelegt ist, um Informationen von dem Wasserzeichen-Informations-Erkenner 730 zu empfangen und um somit einen oder mehrere Einbettungsparameter an den Wasserzeichen-Hinzufüger 740 zu liefern, so dass beispielsweise der Wasserzeichen-Hinzufüger 740 in Abhängigkeit von den durch den Einbettungsparameter-Bestimmer 750 gelieferten Einstellungsparametern einstellbar ist.

Der Einbetter 700 umfasst ferner einen Zusatzinformationsbereitsteller 760, der ausgelegt ist, um von dem Wasserzeichen-Informations-Erkenner eine Information im Hinblick auf ein in der Eingangs-Informationsdarstellung 710 enthaltenes Wasserzeichen zu empfangen und um eine Zusatzinformation an den Wasserzeichen-Hinzufüger 740 zu liefern, die von dem Wasserzeichen-Hinzufüger 740 beispielsweise zu der Eingangs-Informationsdarstellung 710 hinzugefügt werden kann, so dass die mit dem Wasserzeichen versehene Informationsdarstellung 720 ferner die Zusatzinformationen umfasst.

Im Folgenden werden Details beschrieben, welche Informationen durch den Wasserzeichen-Informations-Erkenner 730 aus der Eingangsinformationsdarstellung 710 erhalten werden können, und wie diese Information durch den Wasserzeichen-Hinzufüger 740, den Einbettungsparameter-Bestimmer 750 und den Zusatzinformationsbereitsteller 760 genutzt werden können.

Der Wasserzeichen-Informations-Erkenner 730 kann beispielsweise einen Erkenner 731 für eine Erkennung einer wiederverwendbaren Wasserzeicheninformation umfassen. Der Erkenner 731 für wiederverwendbare Wasserzeicheninformationen kann beispielsweise ausgelegt sein, um in der Eingangs-Informationsdarstellung 710 eine Synchronisations-Information zu detektieren. Die Synchronisationsinformation kann beispielsweise vorhanden sein, wenn in der Eingangs-Informationsdarstellung 710 bereits ein Wasserzeichen vorhanden ist. Bei der Synchronisationsinformation kann es sich beispielsweise um ein bestimmtes in der Eingangsinformationsdarstellung 710 enthaltenes Muster handeln, das beispielsweise einem in die Eingangs-Informationsdarstellung 710 eingebetteten Wasserzeichen vorausgehen kann, oder das beispielsweise mit einem in die Eingangs-Informationsdarstellung 710 eingebetteten Wasserzeichen verschachtelt sein kann. Bei der Synchronisationsinformation kann es sich beispielsweise um ein fest vorgegebenes Muster handeln, das gemäß einer bestimmten Codierung codiert in der Eingangs-Informationsdarstellung 710 enthalten sein kann. Beispielsweise kann die Synchronisationsinformation gemäß einem vorgegebenen Synchronisations-Einbettungscode in die Eingangs-Informationsdarstellung 710 eingebettet sein. Beispielsweise kann die Synchronisationsinformation gleichzeitig (oder zumindest zeitlich überlappend) in mehreren Einzel-Frequenzbändern der Informationsdarstellung auftreten, wodurch die Synchronisationsinformation beispielsweise besonders gut detektierbar ist. Der Erkenner 731 für die wiederverwendbare Wasserzeicheninformation kann somit beispielsweise eine Information 732 über die wiederverwendbare Wasserzeicheninformation an den Wasserzeichen-Hinzufüger 740 liefern. Der Wasserzeichen-Hinzufüger 740 kann beispielsweise ausgelegt sein, um ansprechend auf das Vorhandensein einer wiederverwendbaren Wasserzeichen-Information in der Eingangs-Informationsdarstellung eine erneute Einbettung der wiederverwendbaren Wasserzeicheninformation zu vermeiden. Beispielsweise kann der Wasserzeichen-Hinzufüger 740 konfiguriert sein, um der Eingangsinformationsdarstellung 710 nur dann eine Synchronisationsinformation hinzuzufügen, wenn die Information 732 von dem Erkenner 731 für die wiederverwendbare Wasserzeicheninformation anzeigt, dass in der Eingangs-Informationsdarstellung 710 noch keine Wasserzeicheninformation vorhanden bzw. detektierbar ist.

Zeigt die Information 732 von dem Erkenner 731 für wieder verwendbare Wasserzeicheninformation beispielsweise an, dass in der Eingangs-Informationsdarstellung 710 bereits eine Synchronisationsinformation vorhanden ist, so kann der Wasserzeichen-Hinzufüger 740 beispielsweise das hinzuzufügende Wasserzeichen synchronisiert mit der bereits in der Eingangs-Informationsdarstellung vorhandenen Snychronisationsinformation hinzufügen. Zu diesem Zweck kann beispielsweise der Erkenner 731 für die wiederverwendbare Wasserzeicheninformation dem Wasserzeichen-Hinzufüger 740 eine Information darüber liefern, wo in der Eingangs-Informationsdarstellung (beispielsweise zu welchem Zeitpunkt, oder in welchen Frequenzbändern) bereits eine Synchronisationsinformation vorhanden ist. Basierend darauf kann der Wasserzeichen-Hinzufüger 740 beispielsweise berechnen bzw. ermitteln, wo (beispielsweise in welchem Zeitintervall bzw. in welchen Frequenzbändern) das hinzuzufügende Wasserzeichen zu der Eingangs-Informationsdarstellung 710 hinzugefügt werden soll.

Ferner kann der Wasserzeichen-Hinzufüger 740 konfiguriert sein, um der Eingangsinformationsdarstellung 710 eine Synchronisationsinformation hinzuzufügen, wenn die Information 732 von dem Erkenner 731 für wiederverwendbare Wasserzeicheninformation anzeigt, dass in der Eingangs-Informationsdarstellung 710 keine wiederverwendbare Synchronisationsinformation detektiert wurde.

Durch die Wiederverwendung der Synchronisationsinformation bei der Einbettung eines weiteren Wasserzeichens durch den Wasserzeichen-Hinzufüger 740 in eine Eingangs-Informationsdarstellung, in der schon eine Synchronisationsinformation (und damit in vielen Fällen auch eine Wasserzeicheninformation) vorhanden ist, kann einerseits eine negative Beeinflussung der Informationsdarstellung 710 durch die Einbettung des hinzuzufügenden Wasserzeichens minimiert werden, und es kann andererseits eine Ressourcen sparende Detektion von mehreren Wasserzeichen in der mit einem Wasserzeichen versehenen Informationsdarstellung 720 ermöglicht werden. So ist üblicherweise die Beeinflussung einer Informationsdarstellung umso geringer, je weniger Informationen in diese eingebettet werden. Wird somit eine in der Informationsdarstellung 720 bereits vorhandene Synchronisationsinformation wiederverwendet, anstatt eine neue zusätzliche Synchronisationsinformation einzubetten, so kann ein Einfluss auf den Informationsinhalt der Informationsdarstellung minimiert werden. Auf Seiten einer Wasserzeichen-Detektion ist es im Übrigen bei Wiederverwendung der Synchronisationsinformation ausreichend, die Synchronisationsinformation einmal zu detektieren. Damit kann der Detektionsaufwand geringer gehalten werden, als wenn zwei verschiedene Synchronisationsinformationen detektiert werden müssten.

Der Wasserzeichen-Informations-Erkenner kann ferner beispielsweise einen Erkenner 733 zur Erkennung von Zusatzinformationen, die in der Eingangs-Informationsdarstellung 710 enthalten sind, aufweisen. Der Erkenner 733 kann beispielsweise eine Information 734 über die Zusatzinformation liefern. Unter der Zusatzinformation kann beispielsweise eine Seiteninformation verstanden werden, die die Einbettung eines oder mehrerer Wasserzeichen in die Eingangs-Informationsdarstellung 710 beschreibt. Beispielsweise kann die Zusatzinformation eine Information darüber tragen, wie viele Wasserzeichen bereits in der Eingangs-Informationsdarstellung 710 eingebettet sind. Die Zusatzinformation muss dabei nicht notwendigerweise die Gesamtzahl der eingebetteten Wasserzeichen beschreiben, sondern kann sich auch darauf beschränken, anzugeben, wie viele Wasserzeichen gemäß einem bestimmten Wasserzeichen-Einbettungsverfahren in die Eingangs-Informationsdarstellung eingebettet worden sind. Die Information über die Anzahl der vor-handenen Wasserzeichen kann sich ferner darauf beschränken, anzugeben, wie viele Wasserzeichen von einem bestimmten Wasserzeichen-Einbetter in die Eingangs-Informationsdarstellung eingebettet wurden. In einem Idealfall, der allerdings nicht immer erreichbar ist, kann die Information über die Anzahl von vorhanden Wasserzeichen auch eine Information über eine Gesamtzahl von Wasserzeichen tragen. Bei einigen Ausführungsbeispielen liefert somit die Information über die Anzahl von vorhandenen Wasserzeichen zumindest eine Information über eine Mindestanzahl von vorhandenen Wasserzeichen, wobei tatsächlich mehr Wasserzeichen vorhanden sein können.

Der Erkenner 733 kann ferner beispielsweise ausgelegt sein, um eine Zusatzinformation detektieren, die anzeigt, gemäß welchem Wasserzeichen-Einbettungsverfahren oder gemäß welchen Wasserzeichen-Einbettungsverfahren die in der Eingangs-Informationsdarstellung 710 vorhandenen Wasserzeichen eingebettet sind. Diese Information kann beispielsweise in Verbindung mit der Synchronisationsinformation in der Eingangs-Informationsdarstellung 710 vorhanden sein. Beispielsweise kann die Synchronisationsinformation, beispielsweise durch die Wahl des Synchronisationsmusters, eine Information darüber enthalten, gemäß welchem Wasserzeichen-Einbettungsverfahren die in der Informationsdarstellung 710 enthaltene Wasserzeicheninformation eingebettet ist. Alternativ oder zusätzlich kann auch im Anschluss an die Synchronisationsinformation oder aber parallel zu der Synchronisationsinformation eine entsprechende Zusatzinformation in der Eingangs-Informationsdarstellung 710 vorhanden sein, die angibt, gemäß welchem Wasserzeichen-Einbettungsverfahren ein oder mehrere Wasserzeichen in die Eingangs-Informationsdarstellung 710 eingebettet sind.

Alternativ oder zusätzlich kann die Zusatzinformation beispielsweise eine Information darüber tragen, welche Ressourcen (z. B. Zeitschlitze, Frequenzbänder oder Einbettungscodes bzw. Spreizcodes) für die Einbettung eines oder mehrerer Wasserzeichen in die Eingangs-Informationsdarstellung verwendet wurden. Diese Information kann in einer Zusatzinformation enthalten sein, die beispielsweise die oben beschriebene Struktur aufweisen kann. In anderen Worten, entsprechende Zusatzinformationen können beispielsweise innerhalb der Synchronisationsinformation, zeitlich parallel zu der Synchronisationsinformation oder anschließend an die Synchronisationsinformation (beispielsweise unmittelbar anschließend an die Synchronisationsinformation) in der Eingangs-Informationsdarstellung enthalten sein. Bei einigen Ausführungsbeispielen ist die Zusatzinformation getrennt von der zugehörigen Wasserzeicheninformation, die durch die Zusatzinformation beschrieben wird, codiert.

Während die Wasserzeicheninformation somit beispielsweise eine bestimmte Nutzinformation codiert, die beispielsweise Einbetter-seitig frei wählbar ist, kann die Zusatzinformation beispielsweise dadurch festgelegt sein, mit welchen Parametern die eigentliche Nutzinformation des Wasserzeichens codiert oder eingebettet ist. In anderen Worten, bei einigen Ausführungsbeispielen kann eine strikte logische Trennung zwischen der Zusatzinformation, die auf die Art der Darstellung der Nutzinformation in dem Wasserzeichen gerichtet ist, und der eigentlichen Nutzinformation selbst, die durch das Wasserzeichen codiert wird, bestehen. In anderen Worten, anhand der Zusatzinformation können beispielsweise Einbettungsparameter, unter Verwendung derer die durch das Wasserzeichen zu codierende Nutzinformation in die Informationsdarstellung eingebettet wurde, identifiziert werden, ohne die Nutzinformation des Wasserzeichens decodieren zu müssen. In anderen Worten, die Zusatzinformation ist bei einigen Ausführungsbeispielen unabhängig von der durch das Wasserzeichen codierten Nutzinformation und nur abhängig von Parametern, gemäß denen ein Einbetter betrieben wird.

Bei einigen weiteren Ausführungsbeispielen umfasst der Wasserzeichen-Informations-Erkenner 730 einen Erkenner 735 für Einbettungsparameter eingebetteter Wasserzeichen. Der Erkenner 735 kann beispielsweise die Eingangsinformationsdarstellung 710 empfangen und daraufhin eine Information 736 über Einbettungsparameter, unter Verwendung derer ein oder mehrere Wasserzeichen in die Eingangs-Informationsdarstellung 710 eingebettet sind, liefern. Der Erkenner 735 kann beispielsweise ausgelegt sein, um die Eingangs-Informationsdarstellung 710 zu analysieren, um herauszufinden, unter Verwendung welcher Einstellungen bzw. Parameter Wasserzeichen in die Eingangs-Informationsdarstellung 710 eingebettet wurden. Der Erkenner 735 kann zu diesem Zweck beispielsweise auch die Wasserzeichen selbst analysieren. Beispielsweise kann der Erkenner ein Mustererkennungsverfahren auf die Eingangs-Informationsdarstellung anwenden, um festzustellen, ob Wasserzeichen gemäß einem bestimmten Einbettungsverfahren in die Eingangs-Informationsdarstellung 710 eingebettet wurden. Als muster-erkennendes Verfahren kann beispielsweise ein Korrelationsverfahren verwendet werden, gemäß dem die Eingangs-Informationsdarstellung 710 mit einem oder mehreren Vergleichswerten korreliert wird. Ferner kann der Erkenner auch andere Algorithmen anwenden, um die Information 736 über einen Einbettungsparameter zumindest eines in der Eingangs-Informationsdarstellung 710 bereits enthaltenen Wasserzeichens zu erhalten.

In anderen Worten, während der Erkenner 733 beispielsweise ausgelegt sein kann, um eine Zusatzinformation auszuwerten, die sich von der durch das Wasserzeichen dargestellten Nutzinformation unterscheidet, kann der Erkenner 735 beispielsweise ausgelegt sein, um die Wasserzeicheninformationen, die die Nutzinformationen darstellen, zu analysieren. Somit bestehen verschiedene Möglichkeiten, auf welchem Weg eine Information über eine in der Eingangs-Informationsdarstellung 710 enthaltenes Wasserzeichen erhalten werden kann. Neben der Auswertung der Zusatzinformation durch den Erkenner 733 steht auch eine direkte Analyse der Wasserzeicheninformation (bzw., bei einigen Ausführungsbeispielen, der gesamten Wasserzeicheninformation einschließlich der Nutzinformation) zur Verfügung.

Bei einem weiteren Ausführungsbeispiel kann der Wasserzeichen-Informations-Erkenner 730 (alternativ oder zusätzlich) einen Erkenner 737 umfassen, der ausgelegt ist, um eine Anzahl von in der Eingangs-Information eingebetteten Wasserzeichen zu bestimmen. Der Erkenner 737 kann beispielsweise ausgelegt sein, um die Eingangs-Informationsdarstellung 710 zu empfangen, und eine Information 738 über die Anzahl eingebetteter Wasserzeichen (bzw. erkannter eingebetteter Wasserzeichen) zu liefern.

Wie schon oben beschrieben, ist es nicht zwingend erforderlich, dass die Information 738 sämtliche in der Eingangs-Informationsdarstellung 710 enthaltenen Wasserzeichen beschreibt. Vielmehr ist es bei einigen Ausführungsbeispielen ausreichend, wenn die Information 738 eine Anzahl von in der Eingangs-Informationsdarstellung erkannten Wasserzeichen beschreibt.

Zusammenfassend ist festzuhalten, dass vielseitige Möglichkeiten bestehen, im durch den Wasserzeichen-Informations-Erkenner 730 eine Information zu erhalten, die eine Einbettung von Wasserzeichen in der Eingangs-Informationsdarstellung 710 beschreibt. Die entsprechenden Informationen 732, 734, 736, 738 können in verschiedener Weise verwendet werden, wie im Folgenden beschrieben wird.

Beispielsweise kann die Information 732 über wiederverwendbare Wasserzeicheninformationen unmittelbar an den Wasserzeichen-Hinzufüger 740 weitergeleitet werden, so dass dieser beispielsweise basierend auf der Information über wiederverwendbare Wasserzeicheninformation entscheiden kann, ob in der Eingangs-Informationsdarstellung 710 eine wiederverwendbare Wasserzeicheninformation vorhanden ist. Die gegebenenfalls wiederverwendbare Information kann dann durch den Wasserzeichen-Hinzufüger 740 unmittelbar ausgenutzt werden.

Ferner kann der Zusatzinformations-Bereitsteller 760 die von dem Wasserzeichen-Informations-Erkenner 730 gelieferten Informationen 732, 734, 736, 738 (oder auch nur eine oder einige der genannten Informationen) empfangen und daraus eine zu der Eingangs-Informationsdarstellung 710 hinzuzufügende Zusatzinformation ableiten. Die Zusatzinformation kann beispielsweise eine Information im Hinblick auf die Einbettung von in der Eingangs-Informationsdarstellung 710 bereits enthaltenen Wasserzeichen oder Wasserzeicheninformationen umfassen. Beispielsweise kann die Zusatzinformation 762 eine Bezugnahme auf die bereits in der Eingangs-Informationsdarstellung 710 enthaltene und durch den Erkenner 733 erkannte Zusatzinformation 734 aufweisen. Ferner kann die hinzuzufügende Zusatzinformation 762 beispielsweise eine Kopie der in der Eingangs-Informationsdarstellung 710 enthaltenen Zusatzinformationen 734 umfassen und ferner um eine weitere Information, die beispielsweise auf die Einbettung des hinzuzufügenden Wasserzeichens bezogen ist, ergänzt sein. Ferner kann die Zusatzinformation 732 beispielsweise eine Anzahl von in der mit dem hinzuzufügenden Wasserzeichen versehenen Informationsdarstellung 720 enthaltenden Wasserzeichen beschreiben. Wird somit durch den Wasserzeichen-Informations-Erkenner 730 eine Information über eine Anzahl von in der Eingangs-Informationsdarstellung 710 eingebetteten Wasserzeichen geliefert, so kann beispielsweise der Zusatzinformations-Bereitsteller 760 die genannte Anzahl inkrementieren und somit die Zusatzinformation 762 so erzeugen, dass diese eine nach dem Hinzufügen des hinzuzufügenden Wasserzeichens in der Informationsdarstellung 720 enthaltene Anzahl von Wasserzeichen beschreibt. Ferner kann die Zusatzinformation 762 eine Information über Einbettungsparameter von bereits in der Eingangs-Informationsdarstellung 710 enthaltenen Wasserzeichen beschreibt über Einbettungsparameter, gemäß denen das hinzuzufügende Wasserzeichen eingebettet wird, umfassen.

Es sei darauf hingewiesen, dass die Zusatzinformation 762 selbstverständlich nicht alle der genannten Information umfassen muss, sondern dass es ausreichend ist, wenn die Zusatzinformation auch nur eine oder mehrere der genannten Informationen umfasst.

Bei einigen Ausführungsbeispielen ergeben sich allerdings Vorteile daraus, wenn die Zusatzinformation 762 nicht nur beschreibt, wie das hinzuzufügende Wasserzeichen zu der Eingangs-Informationsdarstellung 710 hinzugefügt wird, sondern wenn die Zusatzinformationen 762 weiterhin auch eine Information über die bereits in der Eingangs-Informationsdarstellung 710 enthaltenen Wasserzeichen umfasst. Diese kombinierte Informationen, die sowohl die bereits in der Eingangs-Informationsdarstellung 710 vorhandenen Wasserzeichen als auch die Einbettung des einzubettenden Wasserzeichens beschreibt, ist in besonders effizienter Weise durch einen Detektor auswertbar. So kann ein Detektor beispielsweise durch Auswertung einer einzigen Zusatzinformation eine umfassende Information über die Einbettung aller in der Eingangs-Informationsdarstellung 710 enthaltenen Wasserzeichen (oder zumindest im Hinblick auf eine Mehrzahl von in der Eingangs-Informationsdarstellung enthaltenen Wasserzeichen) erhalten. Damit ist es nicht erforderlich, viele einzelne Zusatzinformationen auszuwerten und deren Informationen zusammenzutragen.

Der Einbettungsparameter-Bestimmer 750 kann ferner ausgelegt sein, um Einbettungsparameter für die Einbettung des hinzuzufügenden Wasserzeichens durch den Wasserzeichenhinzufüger 740 in Abhängigkeit von einer oder mehreren der von dem Wasserzeichen-Informations-Erkenner 730 gelieferten Informationen 732, 734, 736, 738 einzustellen bzw. anzupassen. Umfasst beispielsweise die Zusatzinformation 734 eine Information darüber, unter Verwendung welcher Ressourcen (z. B. unter Verwendung welcher Zeitschlitze, unter Verwendung welcher Frequenzbänder oder unter Verwendung welcher Einbettungscodes) die in der Eingangs-Informationsdarstellung 710 bereits enthaltenen Wasserzeichen eingebettet sind, so kann der Einbettungsparameter-Bestimmer 750 beispielsweise geeignete Einbettungsparameter bzw. Einbettungsressourcen für die Einbettung des hinzuzufügenden Wasserzeichens auswählen. Beispielsweise kann der Einbettungsparameter-Bestimmer 750 konfiguriert sein, um die Ressourcen für die Einbettung des hinzuzufügenden Wasserzeichens so auszuwählen, dass es zu keinerlei inakzeptablen Überschneidungen zwischen den bei der Einbettung des hinzuzufügenden Wasserzeichens verwendeten Ressourcen und den bei der Einbettung der schon vorhandenen Wasserzeichen verwendeten Ressourcen kommt. Basierend auf der Information, welche Zeitschlitze durch die in der Eingangs-Informationsdarstellung 710 bereits enthaltenen Wasserzeichen benutzt werden, kann der Einbettungsparameter-Bestimmer 750 beispielsweise einen freien Zeitschlitz für die Einbettung des hinzuzufügenden Wasserzeichens auswählen. In ähnlicher Weise kann der Einbettungsparameter-Bestimmer 750 geeignete (freie oder nur relativ schwach belegte) Frequenzbänder für die Einbettung des hinzuzufügenden Wasserzeichens auswählen, wenn die durch den Wasserzeichen-Informations-Erkenner 730 gelieferte Information eine Belegung von Frequenzbändern anzeigt.

Gibt die durch den Wasserzeichen-Informations-Erkenner 730 gelieferte Information an, welcher Einbettungscode bzw. welche Einbettungscodes zur Einbettung von Informationen in die Eingangs-Informationsdarstellung 710 verwendet wurden, so kann der Einbettungsparameter-Bestimmer 750 ferner beispielsweise einen Einbettungscode zur Einbettung des hinzuzufügenden Wasserzeichens auswählen, der sich beispielsweise von den in der Eingangs-Informationsdarstellung 710 verwendeten Einbettungscodes ausreichend unterscheidet. Beispielsweise kann der Einbettungsparameter-Bestimmer 750 für die Einbettung des hinzuzufügenden Wasserzeichens einen Einbettungscode auswählen, der zumindest näherungsweise orthogonal zu Einbettungscodes ist, die für die Einbettung von in der Eingangs-Informationsdarstellung 710 bereits vorhandenen Wasserzeichen verwendet wurden. Somit kann beispielsweise durch die Auswertung der Eingangs-Informationsdarstellung 710 durch den Wasserzeichen-Informations-Erkenner 730 sichergestellt werden, dass das hinzuzufügende Wasserzeichen mit einem Einbettungscode eingebettet wird, der sich von den Einbettungscodes der bereits vorhandenen Wasserzeichen unterscheidet.

Bei einem Ausführungsbeispiel kann der Einbettungsparameter-Bestimmer ausgelegt sein, um auch Einbettungsparameter für eine Einbettung von Zusatzinformationen, wie sie beispielsweise durch den Zusatzinformationsbereitsteller 760 bereitgestellt werden, zu erzeugen. In diesem Fall kann der Einbettungsparameter-Bestimmer 750 beispielsweise konfiguriert sein, um die Einbettungsparameter für die Einbettung der Zusatzinformation 762 so einzustellen, dass die Zusatzinformation 762 im Wesentlichen mit den gleichen Einbettungsparametern eingebettet wird wie eine bereits in der Eingangs-Informationsdarstellung 710 enthaltene Zusatzinformation. Zu diesem Zweck kann beispielsweise der Wasserzeichen-Informations-Erkenner 730 auch eine Information über Einbettungsparameter liefern, unter Verwendung derer eine bereits in der Informationsdarstellung 710 enthaltenden Zusatzinformation in die Eingangs-Informationsdarstellung 710 eingebettet wurde. Dadurch kann beispielsweise ermöglicht werden, dass sowohl die bereits in der Eingangs-Informationsdarstellung 710 enthaltene Zusatzinformation als auch die hinzuzufügende Zusatzinformation 762 in effizienter Weise von einem Detektor detektiert werden können.

Bei einem weiteren Ausführungsbeispiel kann die Information 738 über die Anzahl eingebetteter Wasserzeichen ausgewertet werden, um die Einbettungsparameter zu bestimmen bzw. festzulegen. Beispielsweise kann der Einbettungsparameter-Bestimmer 750 eine Funktionalität aufweisen, die eine Funktionalität des Einbettungsparameter-Bestimmers 520 aufweisen, wie er anhand der Fig. 5 erläutert wurde, entspricht. Die Information 738 über die Anzahl eingebetteter Wasserzeichen (die beispielsweise entweder basierend auf einer Zusatzinformation in der Eingangs-Informationsdarstellung, oder basierend auf einer Analyse der Eingangs-Informationsdarstellung bestimmt werden kann) kann beispielsweise verwendet werden, um zu entscheiden, wie oft die Ableitungsfunktion 522 auf den Anfangswert 524 angewendet wird, um den Einbettungsparameter 526 zu erhalten.

Zusammenfassend ist somit festzuhalten, dass durch den Einbettungsparameter-Bestimmer 750 beispielsweise ein oder mehrere Einbettungsparameter 752 erzeugt werden können, die dann dem Wasserzeichen-Hinzufüger 740 zugeführt werden können. Die Einbettungs-Parameter können dabei beispielsweise basierend auf einer Information 732, 734, 736, 738 über in der Eingangs-Informationsdarstellung 710 bereits enthaltene Wasserzeichen ausgewählt werden. Die Einbettungsparameter können beispielsweise der Auswahl eines Einbettungsverfahrens dienen. Ferner können die Einbettungsparameter auch Details im Hinblick auf die Einbettung, z. B. einen Einbettungscode, einen Einbettungs-Zeitschlitz oder eine Einbettungs-Frequenzband beschreiben.

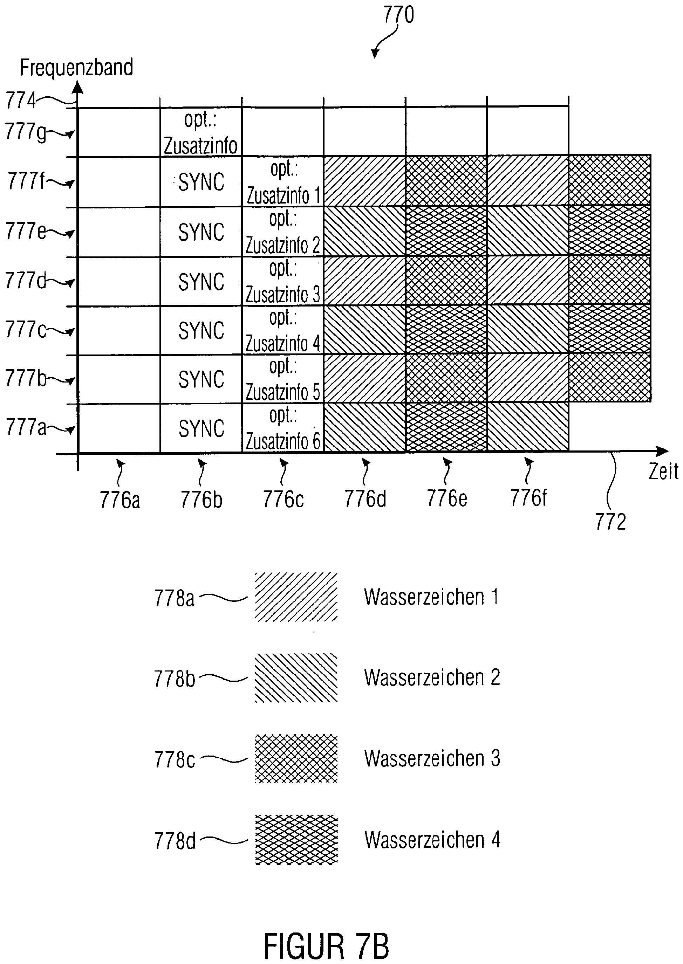

Weitere Details im Hinblick auf einzelne Aspekte des Einbetters 700 werden im Folgenden anhand der Fig. 7b - 7d beschrieben. So zeigt die Fig. 7b eine graphische Darstellung von Ressourcen, die für eine Einbettung von Wasserzeicheninformationen zur Verfügung stehen. Die graphische Darstellung der Fig. 7b ist in ihrer Gesamtheit mit 770 bezeichnet. Die graphische Darstellung 770 zeigt eine Zeit-Frequenzband-Darstellung einer Informationsdarstellung. An einer Abszisse 772 ist beispielsweise die Zeit angetragen, und an einer Ordinate 774 ist beispielsweise die Frequenz angetragen. Die Zeit-Frequenz-Darstellung kann beispielsweise ein Audiosignal repräsentieren, das in einzelne Zeitabschnitte und Frequenzbänder aufteilbar ist. Eine entsprechende Darstellung eines Audiosignals kann beispielsweise durch eine spektrale Analyse erfolgen, wie sie beispielsweise durch eine Filterbank erzielt werden kann. Verschiedene Zeitabschnitte sind beispielsweise mit 776a - 776f bezeichnet. Verschiedene Frequenzbänder sind im Übrigen mit 777a - 777g bezeichnet.

In einem Zeitabschnitt 776b sind beispielsweise in den Frequenzbändern 777a - 777f im Wesentlichen Synchronisationsinformation (SYNC) enthalten. Ferner kann beispielsweise in einem weiteren Frequenzband 777g in dem Zeitabschnitt 776b (also zeitlich parallel zu der Synchronisationsinformation) eine Zusatzinformation enthalten sein, die eine Einbettung eines Wasserzeichens beschreibt. Die Zusatzinformationen in dem Frequenzband 777g während des Zeitintervalls 776b ist freilich als optional anzusehen. Ferner kann eine Zusatzinformation auch beispielsweise in einem Zeitschlitz nach der Synchronisationsinformation (SYNC) enthalten sein. Beispielsweise kann die Synchronisationsinformation in den Frequenzbändern 777a - 777f während des Zeitabschnitts 776c enthalten sein.

Beispielsweise kann die Zusatzinformation für verschiedene eingebettete Wasserzeichen in verschiedenen Frequenzbändern (oder Zeitschlitzen) enthalten sein. Beispielsweise kann die Zusatzinformation, die ein erstes eingebettetes Wasserzeichen beschreibt, oder die bei einer ersten Wasserzeicheneinbettung eingefügt wird, in dem Frequenzband 777f während des Zeitabschnitts 776c enthalten sein. Eine Zusatzinformation, die eine Einbettung eines zweiten Wasserzeichens betrifft bzw. die bei einer Einbettung eines zweiten Wasserzeichens hinzugefügt wird, kann beispielsweise in dem Frequenzband 776e während des Zeitabschnitts 776c eingefügt werden. Allgemein können Zusatzinformationen, die die Einbettung von verschiedenen Wasserzeichen beschreiben, bzw. die bei verschiedenen Einbettungsschritten eingebettet werden, unter Verwendung unterschiedlicher Ressourcen (hier: unter Verwendung unterschiedlicher Frequenzbänder) zu der Informationsdarstellung hinzugefügt werden. Somit wird beispielsweise bei der Hinzufügung eines weiteren Wasserzeichens die vorhandene Zusatzinformation durch Hinzufügen einer weiteren Zusatzinformation unter Verwendung von beispielsweise bisher unbenutzten Ressourcen ergänzt. Damit wird beispielsweise eine Überlappung von Zusatzinformationen vermieden, wodurch es beispielsweise erreicht wird, dass die Informationsdarstellung nicht unnötig stark beeinträchtigt wird, und wodurch ferner erreicht wird, dass die einzelnen Zusatzinformationen ohne gegenseitige Beeinträchtigungen auslesbar sind. Diesbezüglich sei darauf hingewiesen, dass es bei der Einbettung von Wasserzeicheninformationen in einer Informationsdarstellung in der Regel schwierig oder gar unmöglich ist, eine einmal in die Informationsdarstellung eingefügte Information (z. B. Zusatzinformation) wieder zu entfernen oder zu ändern. Aus diesem Grund wird bei einigen Ausführungsbeispielen der Erfindung bei einem Hinzufügen eines hinzuzufügenden Wasserzeichens eine zusätzliche Zusatzinformation zu einer möglicherweise bereits bestehenden Zusatzinformation hinzugefügt.

Die graphische Darstellung 770 zeigt ferner verschiedene Ressourcen, die für die Einbettung verschiedener Wasserzeichen verwendet werden. Beispielsweise kann eine Nutzinformation des ersten Wasserzeichens in Ressourcen-Abschnitte eingefügt werden, die mit einer ersten Schraffur 778a gekennzeichnet sind. Beispielsweise kann die Information des ersten Wasserzeichens in dem ersten Zeitabschnitt 776d in den Frequenzbändern 777b, 777d und 777f enthalten sein. Ferner kann die Information des ersten Wasserzeichens während des vierten Zeitabschnitts 776f in den Frequenzbändern 777b, 777d und 777f enthalten sein. Eine Information eines zweiten Wasserzeichens kann beispielsweise unter Verwendung der mit einer zweiten Schraffur 778b gekennzeichneten Ressourcen (Zeitabschnitt 776d: Frequenzbänder 777a, 777c, 777e; Zeitabschnitt 776f: Frequenzbänder 777a, 777c, 777e) enthalten bzw. codiert sein. Nutzinformationen des dritten Wasserzeichens können beispielsweise in Ressourcen enthalten sein, die mit einer dritten Schraffur 778c gekennzeichnet sind, und Nutzinformationen eines vierten Wasserzeichens können beispielsweise in Ressourcen enthalten sein, die durch eine vierte Schraffur 778d gekennzeichnet sind.

Aus der graphischen Darstellung 770 ist beispielsweise ersichtlich, dass die Nutzinformationen der Wasserzeichen (beschrieben durch die mit Schraffuren 778a, 778b, 778c, 778d gekennzeichneten Felder der graphischen Darstellung 770) getrennt von einer entsprechenden Zusatzinformation in dem Wasserzeichen abgelegt sein können.

Zusammenfassend kann festgestellt werden, dass die graphische Darstellung der Fig. 7b ein Informationssignal beschreiben kann, wobei zusätzlich zu einer zugrundeliegenden Nutzinformation (die beispielsweise ein Audiosignal, eine Bildinformation, eine Textinformation oder eine Computerprogramminformation umfasst) ein Wasserzeichen und beispielsweise eine Zusatzinformation in dem Informationssignal enthalten sind. Das Informationssignal kann um all diejenigen Merkmale und Aspekte ergänzt werden, die im Rahmen der vorliegenden Beschreibung im Hinblick auf die Einbetter oder Detektoren beschrieben sind.

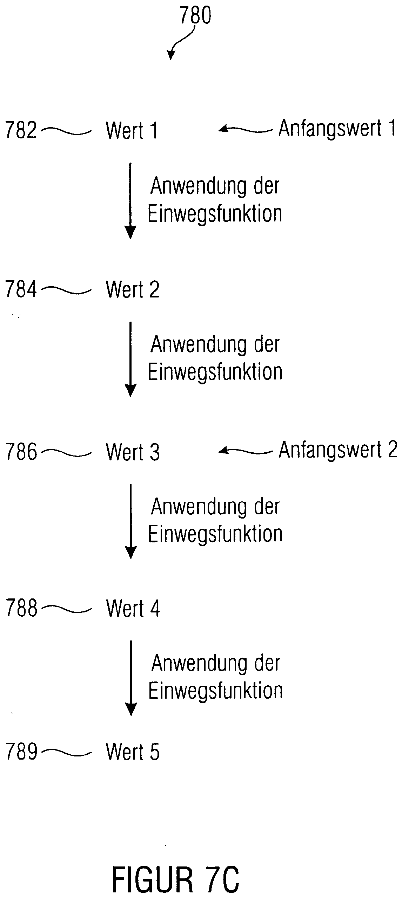

Fig. 7c zeigt eine graphische Darstellung einer Vorgehensweise bei einer Bestimmung eines Einbettungsparameters unter Verwendung einer Einwegsfunktion. Die graphische Darstellung gemäß der Fig. 7c ist in ihrer Gesamtheit mit 780 bezeichnet. Im Folgenden wird zunächst davon ausgegangen, dass einem Einbetter (oder einem Detektor) ein erster Wert 782 bekannt ist, wobei der erste Wert 782 auch als erster Anfangswert bzw. "Anfangswert 1" aufgefasst werden kann. Durch eine Anwendung der genannten Einwegsfunktion kann aus dem ersten Wert 782 beispielsweise ein zweiter Wert 784 erhalten werden. Dabei ist beispielsweise ein Algorithmus bekannt, wie der zweite Wert 784 ausgehend von dem ersten Wert 782 mit vergleichsweise geringem Rechenaufwand erhalten werden kann. Andererseits ist es bei einigen Ausführungsbeispielen nicht bzw. nur mit extremem Aufwand möglich, aus dem zweiten Wert 784 den ersten Wert 782 zu berechnen. Aus diesem Grund wird die Einwegsfunktion teilweise auch als "kryptographische Einwegsfunktion" bezeichnet.

Aus dem zweiten Wert 784 kann allerdings durch nochmalige Anwendung der Einwegsfunktion beispielsweise ein dritter Wert 786 erhalten werden. In anderen Worten, wird auf den zweiten Wert 784 der gleiche Algorithmus angewendet, der auf den ersten Wert 782 zur Bestimmung des zweiten Werts 784 angewendet wurde, so wird beispielsweise aus dem zweiten Wert 784 der dritte Wert 786 erhalten. Durch nochmalige Anwendung der Einwegsfunktion auf den dritten Wert 786 kann man beispielsweise einen vierten Wert 788 erhalten. Wird auf den vierten Wert 788 die Einwegsfunktion nochmals angewendet, so wird beispielsweise ein fünfter Wert 789 erhalten. Somit ist festzuhalten, dass es ausreichend ist, den ersten Wert 782 sowie die Einwegsfunktion (bzw. den durch die Einwegsfunktion beschriebenen Algorithmus) zu kennen, um aus dem ersten Wert 782 durch wiederholte Anwendung der Einwegsfunktion den zweiten bis fünften Wert 784 - 789 zu erhalten.

Die Werte 782 - 789 können im Übrigen beispielsweise verwendet werden, um als Beschreibung für Einbettungsparameter oder Detektionsparameter eines Einbetters oder Detektors zu dienen, wie dies bereits oben schon erläutert wurde.

Ferner kann eine Verwaltung von verschiedenen Zugriffsrechten implementiert werden. Kennt beispielsweise ein erster Einbetter (oder Detektor) den ersten Wert 782 (Anfangswert 1) so kann er ausgehend davon unter Verwendung der Einwegsfunktion sämtliche Werte 782 - 789 mit geringem Rechenaufwand bestimmen. Kennt hingegen ein Einbetter (oder Detektor) nur den dritten Wert 786 (Anfangswert 2) so kann der entsprechende Einbetter (oder Detektor) mit vertretbarem Rechenaufwand nur den vierten Wert 788 oder den fünften Wert 789 (oder folgende Werte) ermitteln. Der genannte Detektor, der nur den dritten Wert 786 (Anfangswert 2) und die Einwegsfunktion kennt, nicht aber den ersten Wert 782 oder den zweiten Wert 784, kann somit bei vertretbarem Rechenaufwand den ersten Wert 782 und den zweiten Wert 784 nicht ermitteln. Dementsprechend kann der genannte Detektor, der nur den Anfangswert 2 kennt, keine Einbettung oder Detektion eines Wasserzeichens vornehmen, so dass die Einbettungsparameter den zu dem ersten Wert 782 oder dem zweiten Wert 784 gehörigen Einbettungsparametern entsprechen. Somit kann beispielsweise sichergestellt werden, dass ein Einbetter, der nur den dritten Wert 786 (Anfangswert 2) kennt, nicht in unberechtigter Weise eine Einbettung eines Wasserzeichens gemäß den zu dem ersten Wert 782 gehörigen Einbettungsparametern oder gemäß den zu dem zweiten Wert 784 gehörigen Einbettungsparametern vornimmt.

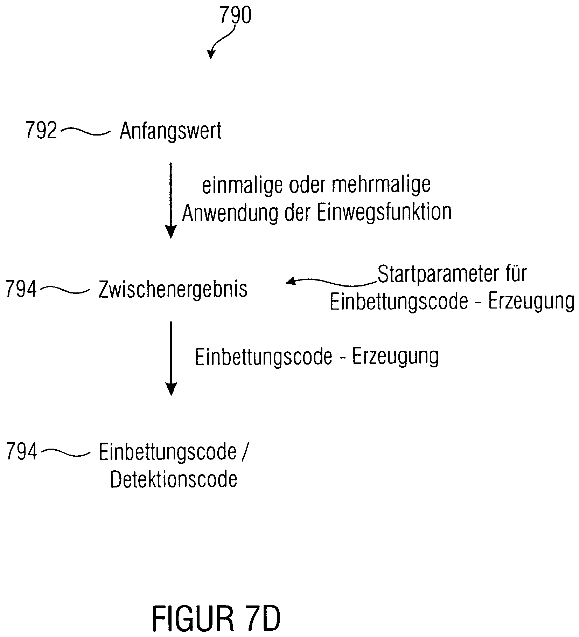

Im Folgenden wird anhand der Fig. 7d kurz beschrieben, wie unter Verwendung einer Einwegsfunktion ein Einbettungsparameter erhalten werden kann. Zu diesem Zweck zeigt die Fig. 7d eine graphische Darstellung einer Vorgehensweise bei einer Bestimmung eines Einbettungscodes oder eines Detektionscodes aus einem Anfangswert unter Verwendung einer Einwegsfunktion. Die graphische Darstellung gemäß der Fig. 7d ist in ihrer Gesamtheit mit 790 bezeichnet. Die graphische Darstellung 790 zeigt, dass ausgehend von einem Anfangswert 792 durch einmalige oder mehrmalige Anwendung einer Einwegsfunktion ein Zwischenergebnis 794 erhalten werden kann. Das Zwischenergebnis 794 entspricht beispielsweise dem zweiten Wert 784, dem dritten Wert 786, dem vierten Wert 788 oder dem fünften Wert 789 gemäß Fig. 7c. Das Zwischenergebnis 794 kann freilich auch anderen Werten entsprechen, die beispielsweise durch mehr als viermalige Anwendung der Einwegsfunktion auf den ersten Wert 782 bzw. auf den Anfangswert 782 erhalten werden können. Das Zwischenergebnis 794 kann beispielsweise als Startparameter (Seed) für eine Einbettungscode-Erzeugung dienen. Beispielsweise kann basierend auf dem Zwischenergebnis 794 ein Einbettungscode erzeugt werden, indem das Zwischenergebnis als Startwert einem Codegenerator zugeführt wird. Als Codegenerator kann dabei beispielsweise eine rückgekoppelte Schieberegisteranordnung dienen, wie diese beispielsweise für eine Erzeugung von Pseudo-Zufallszahlen bekannt ist. Unterschiedliche Startwerte für die rückgekoppelte Schieberegisteranordnung führen bei einigen Ausführungsbeispielen zu unterschiedlichen Codesequenzen an einem Ausgang der rückgekoppelten Schieberegisteranordnung, wobei die unterschiedlichen Codesequenzen beispielsweise die unterschiedlichen Einbettungscodes bilden können. In anderen Worten, durch eine rückgekoppelte Schieberegisteranordnung wird beispielsweise eine erste Codefolge erzeugt, wenn die rückgekoppelte Schieberegisteranordnung mit dem ersten Startwert beaufschlagt wird. Ferner wird eine zweite Bitfolge beziehungsweise Codefolge erzeugt, wenn die rückgekoppelte Schieberegisteranordnung mit einem zweiten Startwert beaufschlagt wird. Die verschiedenen Bitfolgen bilden beispielsweise die verschiedenen Codefolgen.

Für die Bestimmung des Einbettungscodes oder Detektionscodes 796 aus dem Zwischenergebnis 794 kann allerdings ganz allgemein jeder Algorithmus verwendet werden, der es ermöglicht, basierend auf verschiedenen Startparametern 794 verschiedene Codes zu erhalten, die beispielsweise zumindest näherungsweise vorgegebene Eigenschaften (z. B. stochastische Eigenschaften) aufweisen. Zur Ableitung eines Einbettungsparameters aus dem Zwischenergebnis 794 können auch andere Algorithmen eingesetzt werden. Beispielsweise können unmittelbar einzelne Bits des Zwischenergebnisses 794 herangezogen werden, um unmittelbar die Einbettungsparameter zu bilden. Ferner sind verschiedene Abbildungen (die beispielsweise durch zugehörige Abbildungstabellen oder Logiktabellen definiert sein können) möglich, um aus dem Zwischenergebnis 794 einen Einbettungsparameter zu bestimmen.

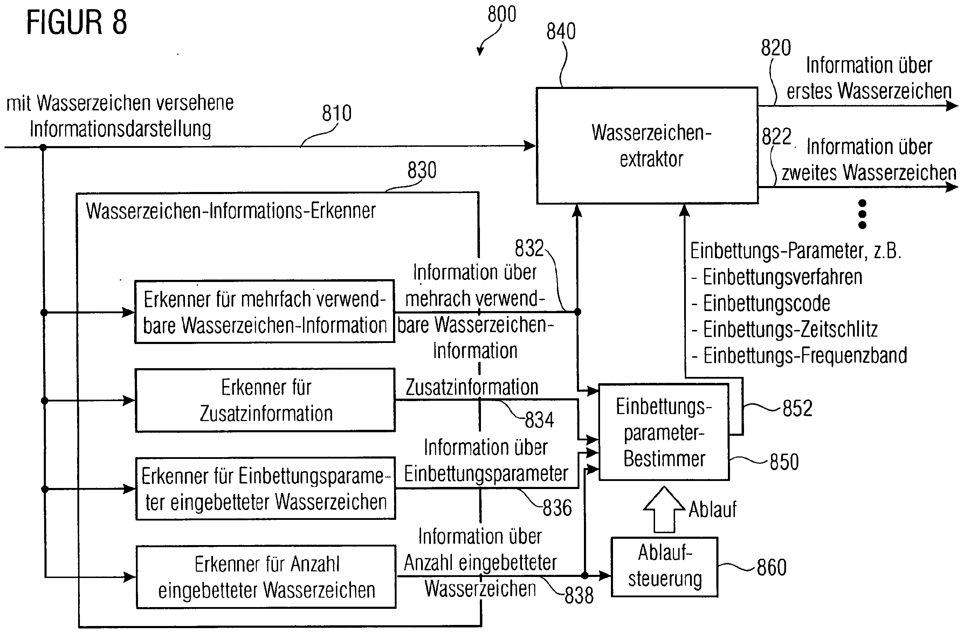

Fig. 8 zeigt ein Blockschaltbild eines Detektors zum Extrahieren eines Wasserzeichens aus einer mit einem Wasserzeichen versehenen Informationsdarstellung. Der Detektor gemäß der Fig. 8 ist in seiner Gesamtheit mit 800 bezeichnet. Der Detektor 800 ist beispielsweise ausgelegt, um eine mit einem Wasserzeichen versehene Informationsdarstellung 810 zu empfangen und um eine Information 820 über zumindest ein in der Informationsdarstellung 810 enthaltenes Wasserzeichen zu liefern. Bei einigen Ausführungsbeispielen kann der Detektor 800 jedoch ausgelegt sein, um Information über eine Mehrzahl von in der Informationsdarstellung 810 enthaltenen Wasserzeichen zu liefern. Beispielsweise kann der Detektor 800 ausgelegt sein, um eine Information 820 über ein erstes Wasserzeichen zu liefern, und um eine Information 822 über ein zweites Wasserzeichen zu liefern.

Der Detektor 800 umfasst beispielsweise einen Wasserzeichen-Informations-Erkenner 830, der ausgelegt ist, um die mit dem Wasserzeichen versehene Informationsdarstellung 810 zu empfangen und um basierend darauf eine Information über eine in der Informationsdarstellung 810 enthaltene Wasserzeichen-Information zu liefern. Beispielsweise kann der Wasserzeichen-Informations-Erkenner 830 dieselbe grundsätzliche Funktionalität aufweisen wie der Wasserzeichen-Informations-Erkenner 730 des Einbetters 700. Im übrigen kann der Wasserzeichen-Informations-Erkenner 830 beispielsweise dem Detektions-Informations-Erkenner 220 gemäß Fig. 2 entsprechen.

So kann der Wasserzeichen-Informations-Erkenner 830 beispielsweise ausgelegt sein, um eine Information 832 über die mehrfach-verwendbare Wasserzeicheninformation zu liefern. Ferner kann der Wasserzeichen-Informations-Erkenner 830 ausgelegt sein, um basierend auf der mit zumindest einem Wasserzeichen versehenen Informationsdarstellung 810 eine Zusatzinformation 834 zu liefern, die beispielsweise der Zusatzinformation 734 entspricht. Ferner kann der Wasserzeichen-Informations-Erkenner 830 ausgelegt sein, um basierend auf der Informationsdarstellung 810 eine Information 836 über Einbettungsparameter zu liefern, die beispielsweise im Wesentlichen der Information 736 entsprechen kann. Alternativ oder zusätzlich kann der Wasserzeichen-Informations-Erkenner 830 basierend auf der Informationsdarstellung 810 eine Information 838 über eine Anzahl von in der Informationsdarstellung 810 eingebetteten Wasserzeichen liefern. Diesbezüglich ist festzuhalten, dass es beispielsweise ausreichend ist, wenn der Wasserzeichen-Informations-Erkenner eine der genannten Informationen 832, 834, 836, 838 liefert. Allerdings gibt es auch Ausführungsbeispiele, bei denen der Wasserzeichen-Informations-Erkenner alle genannten Informationen liefert, wobei sich in diesem Fall ein besonders leistungsfähiges Gesamtsystem ergibt.

Der Detektor 800 umfasst ferner einen Wasserzeichen-Extraktor 840, der ausgelegt ist, um die mit einem Wasserzeichen versehene Informationsdarstellung 810 zu empfangen. Der Wasserzeichenextraktor 840 kann ferner ausgelegt sein, um beispielsweise die Information 832 über mehrfach-verwendbare Wasserzeicheninformationen zu empfangen, sofern eine solche Information durch den Wasserzeichen-Informations-Erkenner 830 bereitgestellt wird. Ferner ist der Wasserzeichen-Extraktor beispielsweise ausgelegt, um von einem Einbettungsparameter-Bestimmer 850 eine Einbettungsparameter-Information 852 zu empfangen. Der Wasserzeichenextraktor 840 ist somit beispielsweise ausgelegt, um basierend auf der Informationsdarstellung 810 und in Abhängigkeit von der Information 832 und den Einbettungsparametern 852 zumindest ein Wasserzeichen zu extrahieren und eine entsprechende Information 820 über das extrahierte Wasserzeichen bereitzustellen. Eine Synchronisation des Wasserzeichen-Extraktors 840 kann dabei beispielsweise durch die Information 832 über eine mehrfach-verwendbare Wasserzeicheninformation erfolgen, wenn sich die Information 832 beispielsweise auf das Vorhandensein einer Synchronisationsinformation bezieht. In diesem Fall kann beispielsweise der Wasserzeichen-Extraktor 840 durch die Informationen 832 angewiesen werden, zwei verschiedene Wasserzeichen unter Verwendung der gleichen Synchronisationsinformation zu extrahieren. Soll allerdings nur ein Wasserzeichen extrahiert werden, so kann beispielsweise auf die Auswertung der Information 832 über mehrfach-verwendbare Wasserzeicheninformation verzichtet werden.

Der Einbettungsparameter-Bestimmer 850 kann beispielsweise ausgelegt sein, um die Einbettungsparameter beziehungsweise Detektionsparameter 852 basierend auf den Informationen 832, 834, 836, 838 zu bestimmen. Der Einbettungsparameter-Bestimmer 850 kann freilich auch nur eine der genannten Information 832, 834, 836, 838 auswerten, um den Einbettungsparameter 852 zu bestimmen. Der Einbettungsparameter-Bestimmer 850 ist beispielsweise ausgelegt, um die Einbettungsparameter 852 so einzustellen, dass ein Wasserzeichen aus der Informationsdarstellung 810 extrahiert wird, das tatsächlich in der Informationsdarstellung 810 enthalten ist bzw. dessen Vorhandensein durch zumindest eine der Informationen 832, 834, 836, 838 angezeigt wird. In anderen Worten, der Einbettungsparameter-Bestimmer 852 kann beispielsweise konfiguriert sein, um zu vermeiden, dass versucht wird, ein Wasserzeichen aus der Informationsdarstellung 810 zu extrahieren, das nicht in der Informationsdarstellung 810 enthalten ist beziehungsweise dessen Existenz nicht durch zumindest eine der Informationen 832, 834, 836, 838 angezeigt wird. Somit kann der Einbettungsparameter-Bestimmer 852 basierend auf der Information 832, 834, 836, 838 den Wasserzeichen-Extraktor 840 ansteuern, um gezielt die vorhandenen Wasserzeichen zu extrahieren. Somit kann ein erheblicher Leistungsvorteil bzw. Geschwindigkeitsvorteil gegenüber Anordnungen erreicht werden, bei denen die Informationsdarstellung 810 nach allen möglichen Wasserzeichen durchsucht wird.

Der Detektor 800 umfasst ferner beispielsweise eine Ablaufsteuerung 860, die ausgelegt ist, um beispielsweise eine Extraktion von mehreren Wasserzeichen zu steuern. Die Ablaufsteuerung 860 kann beispielsweise konfiguriert sein, um eine Wasserzeichenextraktion aus der Informationsdarstellung 810 abzubrechen, wenn alle in der Informationsdarstellung 810 vermuteten Wasserzeichen identifiziert wurden. Liefert beispielsweise der Wasserzeichen-Informations-Erkenner 830 eine Information 838 über eine Anzahl in der Informationsdarstellung eingebetteter Wasserzeichen, so kann beispielsweise die Ablaufsteuerung 860 eine Suche nach Wasserzeichen in der Informationsdarstellung beenden, wenn so viele Wasserzeichen, wie durch die Information 838 beschrieben sind, identifiziert wurden. Wenngleich der Wasserzeichen-Informations-Erkenner 830 bei der Bereitstellung der Information 838 einem Fehler unterliegen kann, also beispielsweise das Vorhandensein von weniger Wasserzeichen anzeigen kann, als tatsächlich in der Informationsdarstellung 810 enthalten sind, so kann die Information 838 doch in vielen Fällen als ein zuverlässiges Abbruchkriterium für eine Beendigung einer Suche nach weiteren Wasserzeichen angesehen werden. Durch eine entsprechende Ablaufsteuerung, die die Suche nach Wasserzeichen in Abhängigkeit von der Information 838 beendet, kann im Übrigen eine unnötige und vergebliche Suche nach weiteren Wasserzeichen vermieden werden, wenn beispielsweise bereits alle Wasserzeichen durch den Wasserzeichenextraktor 840 extrahiert wurden.

Aus der obigen Beschreibung ist ersichtlich, dass der Detektor 800 wesentliche Vorteile gegenüber herkömmlichen Detektoren bietet. Durch die Ausnutzung mehrfachverwendbarer Wasserzeicheninformationen kann eine Wasserzeichenextraktion beschleunigt werden. Durch die Ausnutzung der von dem Wasserzeichen-Informations-Erkenner 830 gelieferten Informationen kann außerdem die Suche nach eingebetteten Wasserzeichen in sehr systematischer Weise erfolgen, so dass beispielsweise nur tatsächlich vorhandene Wasserzeichen extrahiert werden, und so dass eine erfolglose Suche nach nicht vorhandenen Wasserzeichen entfällt.

Weitere Vorteile können beispielsweise (optional) erzielt werden, wenn der Einbettungsparameter-Bestimmer 850 ausgelegt ist, um einen oder mehrere Einbettungsparameter unter Verwendung einer Einwegsfunktion zu bestimmen. Dabei kann beispielsweise der Anfangswert vorgegeben sein, und die Information 838 über die Anzahl eingebetteter Wasserzeichen kann genutzt werden, um zu entscheiden, wie oft die Einwegsfunktion auf den Anfangswert angewendet werden soll. Zeigt beispielsweise die Information 838 an, dass drei Wasserzeichen in der Informationsdarstellung 810 enthalten sind, so kann beispielsweise die Einwegsfunktion einmal auf den Anfangswert angewendet werden, um die Extraktionsparameter für die Extraktion des ersten Wasserzeichens zu erhalten. Extraktionsparameter für die Extraktion des zweiten Wasserzeichens werden beispielsweise erhalten, indem die Einwegsfunktion noch einmal auf den Wert angewendet wird, der durch die erste Anwendung der Einwegsfunktion auf den Anfangswert erhalten wurde. Somit kann beispielsweise ein Detektionsparameter für die Extraktion eines nachfolgenden Wasserzeichens aus den Detektionsparametern für die Extraktion eines vorhergehenden Wasserzeichens abgeleitet werden, was eine besonders effiziente Realisierung eines Mechanismus zur Bestimmung der Detektionsparameter mit sich bringt.

Im übrigen sei darauf hingewiesen, dass die Begriffe Einbettungsparameter und Detektionsparameter im Rahmen der Detektion eines Wasserzeichens im Wesentlichen synonym gebraucht werden können. Sind beispielsweise Einbettungsparameter bekannt, unter Verwendung derer ein Wasserzeichen in eine Informationsdarstellung bzw. in ein Informationssignal eingebettet wurde, so kann in vielen Fällen davon ausgegangen werden, dass damit auch Detektionsparameter bekannt sind, mit denen das Wasserzeichen wieder detektiert bzw. extrahiert werden kann. Das Bestimmen bzw. Erkennen von Extraktionsparametern bzw. Detektionsparametern entspricht somit in vielen Fällen dem Bestimmen von Einbettungsparametern.

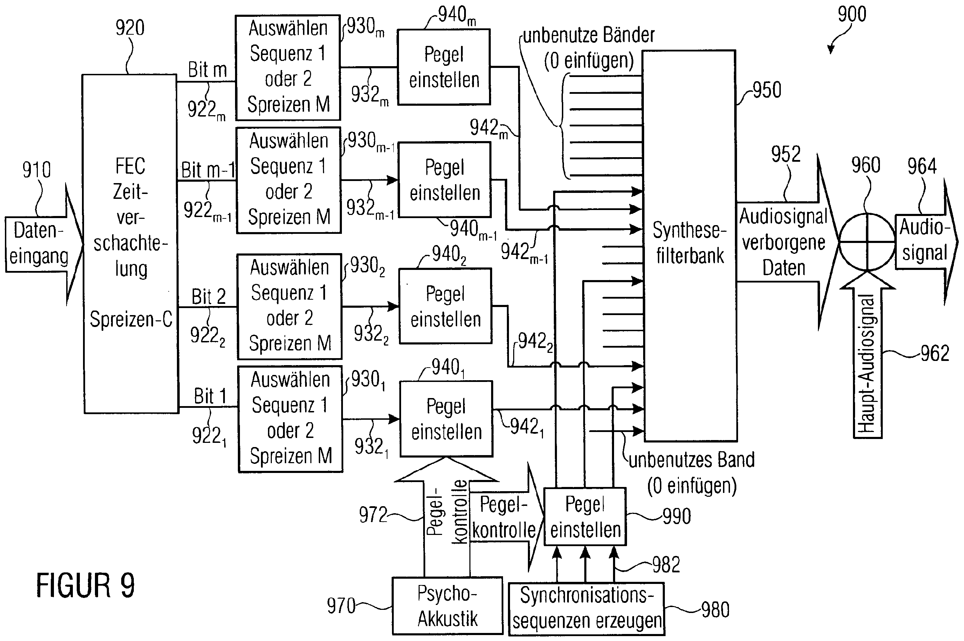

Fig. 9 zeigt ein Blockschaltbild eines Einbetters zum Einbetten eines Wasserzeichens in ein Audiosignal. Der Einbetter gemäß der Fig. 9 ist in seiner Gesamtheit mit 900 bezeichnet. Der Einbetter 900 ist ausgelegt, um eine Wasserzeicheninformation, also z. B. ein Nutzsignal, das in ein Wasserzeichen einzubetten ist, über einen Dateneingang 910 zu empfangen. Der Einbetter 900 umfasst ferner einen Datenstrom-Erzeuger 920, der ausgelegt ist, um die Wasserzeichen-Nutzinformation von dem Dateneingang 910 zu empfangen und basierend darauf einen parallelen Datenstrom zu erzeugen, der beispielsweise m Bits umfasst. Der Datenstromerzeuger 920 ist beispielsweise ausgelegt, um eine Vorwärtsfehlerkorrektur (FEC) auf die Wasserzeichen-Nutzinformation von dem Dateneingang 910 anzuwenden, um einen fehlergeschützten Datenstrom zu erhalten, der die Wasserzeichen-Nutzinformation repräsentiert. Ferner ist der Datenstromerzeuger 920 beispielsweise ausgelegt, um eine Zeitverschachtelung auf den fehlergeschützten Datenstrom anzuwenden, um so einen zeitverschachtelten Datenstrom zu erhalten. Der zeitverschachtelte Datenstrom ist unanfälliger gegenüber bestimmten Fehler (z. B. Bündelfehlern) als der bloße fehlergeschützte Datenstrom. Ferner ist der Datenstromerzeuger 920 beispielsweise ausgelegt, um den verschachtelten Datenstrom mit einem ersten Spreizcode (Spreizcode C) zu spreizen. Beispielsweise kann der Datenstromerzeuger 920 ausgelegt sein, um aus einem Bit des zeitverschachtelten Datenstroms durch Anwendung eines Spreizcodes eine Mehrzahl von Bits zu erzeugen. Somit entsteht aus der Wasserzeichen-Nutzinformation von dem Dateneingang 910 ein einmal gespreizter Datenstrom, wie dies beispielsweise aus der Nachrichtentechnik bekannt ist. Zusammenfassend kann man sagen, dass der einmal gespreizte Datenstrom durch Anwenden einer Vorwärtsfehlerkorrektur (FEC), durch Anwenden einer Zeitverschachtelung und durch Anwenden eines ersten Spreizvorgangs mit Spreizcode C aus der Wasserzeichennutzinformation von dem Dateneingang 910 entsteht. Die einzelnen Bits des einmal gespreizten Datenstroms werden dann in einen parallelen Datenstrom aufgeteilt, der beispielsweise m parallele Datenströme mit zugehörigen Bits (Bit 1, Bit 2, ..., Bit m-1, Bit m) umfasst. Die genannten Bits sind beispielsweise mit $922_1$ - $922_m$ bezeichnet. Jedes der parallelen Bits $922_1$ - $922_m$ wird dann einer Spreizung unterzogen. Die entsprechende Spreizung erfolgt in jeweiligen Spreizern $930_1$ - $930_m$. In einem der Spreizer $930_1$ - $930_m$ wird beispielsweise in Abhängigkeit von dem Wert des zugehörigen Bits $922_1$ - $922_m$ eine erste Sequenz (Sequenz 1) oder eine zweite Sequenz (Sequenz 2) ausgewählt. Die erste Sequenz und die zweite Sequenz können beispielsweise zueinander komplementär sein. Bei den Sequenzen kann es sich beispielsweise um eine Spreizsequenz M und das Inverse der Spreizsequenz M handeln. Somit wird beispielsweise jedes Bit $922_1$ - $922_m$ durch den zugehörigen Spreizer $930_1$ - $930_m$ gespreizt, so dass beispielsweise m gespreizte Bitfolgen $932_1$ - $932_m$ entstehen. Die gespreizten Bitfolgen $932_1$ - $932_m$ werden dann jeweiligen Pegeleinstellern $940_1$ - $940_m$ zugeführt, so

dass entsprechende pegelgeregelte und gespreizte Bitfolgen $942_1$ - $942_m$ entstehen. Bei einem Ausführungsbeispiel ist ein Pegel jeder pegelgeregelten, gespreizten Bitfolge $942_i$ gegenüber dem Pegel der zugehörigen nicht-pegelgeregelten gespreizten Bitfolge 932; (i = 1, ..., n) individuell einstellbar. Allerdings kann eine Pegeleinstellung auch für eine Gruppe von gespreizten Bitfolgen gemeinsam stattfinden.

Der Einbetter 900 umfasst ferner eine Synthesefilterbank 950, die beispielsweise ausgelegt sein kann, um eine inverse Fourier-Transformation durchzuführen. Die Synthesefilterbank 950 ist beispielsweise konfiguriert, um die pegelgeregelten und gespreizten Bits $942_1$ - $942_m$ zu empfangen. Ferner kann die Synthesefilterbank 950 zusätzlich ausgelegt sein, um eine oder mehrere (z. B. pegelgeregelte) Synchronisationsfrequenzen zu empfangen. Die Synthesefilterbank 950 ist somit beispielsweise ausgelegt, um die pegelgeregelten Bitfolgen $942_1$ - $942_m$ und die pegelgeregelten Synchronisationsbitfolgen beispielsweise als Frequenzbereichs-Eingangssignale zu empfangen und basierend darauf, beispielsweise durch Bildung einer inversen Fourier-Transformation, ein entsprechendes Zeitsignal 952 zu erzeugen.

Der Einbetter 900 umfasst ferner einen Summierer 960, der beispielsweise ausgelegt ist, um das Ausgangssignal 952 der Synthesefilterbank 950 zu einem Hauptaudiosignal 962 hinzuzufügen, um ein mit dem Wasserzeichen (gemäß der Wasserzeichen-Nutzinformation) versehenes Audiosignal bzw. Summen-Audiosignal 964 zu erhalten.

Der Einbetter 900 umfasst ferner beispielsweise eine psychoakustische Steuereinheit 970. Die psychoakustische Steuereinheit 970 ist beispielsweise ausgelegt, um das Hauptaudiosignal 962 zu empfangen, und um Pegel-Steuersignale 972 für die Pegeleinsteller $940_1$ - $940_m$ zu erzeugen. Zu diesem Zweck kann die psychoakustische Einheit 970 beispielsweise das Hauptaudiosignal 962 verarbeiten, um Maskierungsschwellen in dem Haupt-Audiosignal feststellen. In anderen Worten, die Psychoakustikeinheit 970 kann beispielsweise gemäß einem psychoakustischen Modell erkennen, wie laut ein zu dem Hauptaudiosignal 962 hinzugefügtes Signal (z. B. das Ausgangssignal 952 der Synthesefilterbank 950) in verschiedenen Frequenzbändern sein darf, damit es zu keiner wesentlichen Beeinträchtigung in dem Summen-Audiosignal 964 kommt. Die Psychoakustikeinheit 970 ist daher beispielsweise ausgelegt, um die Pegeleinsteller $940_1$ - $940_m$ so einzustellen, dass eine Beeinträchtigung eines Höreindrucks in dem Summenaudiosignal 964 durch das Ausgangssignal 952 der Synthesefilterbank 950 eine bestimmte Grenze nicht überschreitet. In anderen Worten, das Ausgangssignal 952 der Synthesefilterbank 950 soll so in das Hauptaudiosignal 962 eingebettet werden, dass das Signal 952 einen Höreindruck, der durch das Summen-Audiosignal 964 hervorgerufen wird, im Vergleich zu einem Höreindruck, der durch das Haupt-Audiosignal 962 hervorgerufen wird, nur geringfügig verschlechtert.

Der Einbetter 900 umfasst ferner beispielsweise einen Synchronisationssequenz-Erzeuger 980, der ausgelegt ist, um eine oder mehrere Bitfolgen zu erzeugen, die beispielsweise einer Synchronisation bei einer Wasserzeichen-Extraktion aus dem Summensignal 964 dienen. Der Synchronisationssequenz-Erzeuger 980 erzeugt somit eine oder mehrere Synchronisationssequenzen 982, die beispielsweise in einem Pegeleinsteller 990 einer Pegeleinstellung (gesteuert beispielsweise durch die Psychoakustikeinheit 970) unterzogen werden. Somit entstehen pegelgeregelte Synchronisationssequenzen, die, wie oben erläutert, der Synthesefilterbank 950 zugeführt werden können.

Der Einbetter 900 kann, wie oben schon angedeutet, in verschiedener Weise verbessert werden. Beispielsweise kann der Synchronisationssequenzerzeuger in Abhängigkeit davon gesteuert werden, ob in dem Hauptaudiosignal 962 bereits eine Synchronisationssequenz vorhanden ist. In anderen Worten, das Hauptaudiosignal 962 entspricht beispielsweise der Eingangs-Informationsdarstellung 110 gemäß Fig. 1, der Eingangs-Informationsdarstellung 310 gemäß Fig. 3a - 3c, der Eingangs-Informationsdarstellung 510 gemäß der Fig. 5 oder der Eingangs-Informationsdarstellung 710 gemäß der Fig. 7a. Wird somit der Einbetter 900 mit einem entsprechenden Wasserzeichen-Informations-Erkenner ausgestattet, der ausgelegt ist, um ein in dem Hauptaudiosignal 962 vorhandenes Synchronisationssignal zu identifizieren, so kann der Synchronisationssequenzerzeuger 980 beispielsweise in Abhängigkeit von dem Vorhandensein eines Synchronisationssignals in dem Hauptaudiosignal 962 aktiviert oder deaktiviert werden. Ist in dem Hauptaudiosignal 962 bereits eine Synchronisationssequenz vorhanden, so muss nämlich keine zusätzliche Synchronisationssequenz in das Audiosignal eingebettet werden. Ferner kann im Übrigen auch die Erzeugung der Bitströme (z. B. der Bitströme $922_1$ - $922_m$ sowie der davon abgeleiteten Bitströme) mit dem in dem Hauptaudiosignal 962 detektierten Synchronisationssignal synchronisiert werden.

Ferner können Parameter des Einbetters 900, beispielsweise die verwendeten Spreizsequenzen oder die für die Erzeugung des Signals 952 verwendeten Frequenzbänder, in Abhängigkeit von einer Information eingestellt werden, die ein in dem Hauptaudiosignal 962 enthaltenes Wasserzeichen beschreibt.

Im Übrigen kann die Auswahl dieser durch den Einbetter 900 verwendete Parameter anhand eines Einbettungsparameters erfolgen, wie dieser beispielsweise anhand der Fig. 5 und 7a erläutert wurde.

Im Hinblick auf Details, wie eine Spreizung eines Signals unter Verwendung verschiedener Spreizcodes erzeugt werden kann, sei im Übrigen beispielsweise auf das Lehrbuch "Digital Communication" von J. G. Proakis (dritte Auflage, Mc Graw-Hill, New York, 1995) verwiesen. Auch das Hinzufügen einer Vorwärtsfehlerkorrektur sowie eine Zeitverschachtelung sind in dem genannten Buch sowie ferner in den üblichen Lehrbüchern der Nachrichtentechnik beschrieben. Auch die Realisierung einer Synthesefilterbank, die beispielsweise eine inverse Fourier-Transformation oder eine ähnliche Transformation vollzieht, ist aus den Lehrbüchern der Nachrichtentechnik ersichtlich.

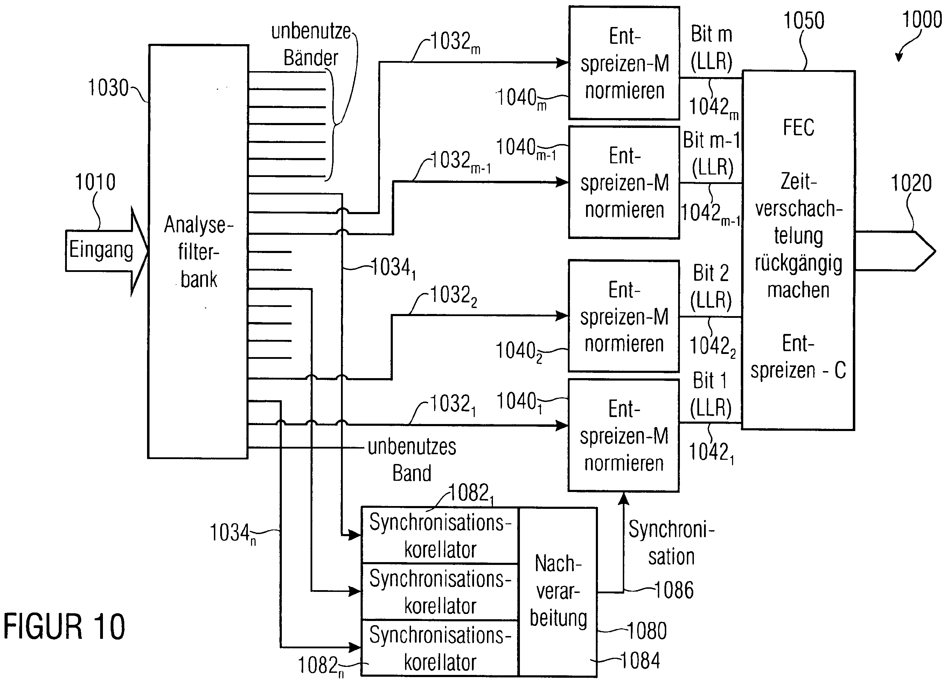

Fig. 10 zeigt ein Blockschaltbild eines Wasserzeichendetektors, gemäß einem Ausführungsbeispiel der Erfindung. Der Wasserzeichendetektor gemäß der Fig. 10 ist in seiner Gesamtheit mit 1000 bezeichnet. Der Wasserzeichendetektor 1000 ist ausgelegt, um ein mit zumindest einem Wasserzeichen versehenes Audiosignal an einem Signaleingang 1010 zu empfangen und basierend darauf eine Wasserzeichen-Nutzinformation 1020 zu bilden. Der Detektor 1000 umfasst eine Analysefilterbank 1030, die ausgelegt ist, um das mit dem Wasserzeichen versehene Audiosignal zu empfangen und in einzelne spektrale Bänder zu zerlegen. Beispielsweise kann die Analysefilterbank 1030 ausgelegt sein, um eine Fourier-Transformation oder eine schnelle Fourier-Transformation durchzuführen. An einem Ausgang der Analysefilterbank liegen somit beispielsweise Einzelsignale für eine Mehrzahl von Bändern an, von denen einige als Nutzsignal-Frequenzbandsignale $1032_1$ - $1032_m$ dienen, und von denen einige als Synchronisations-Frequenzbandsignale $1034_1$ - $1034_n$ dienen. Der Detektor 1000 umfasst ferner eine Mehrzahl von beispielsweise m Entspreizern und Normierern $1040_1$ - $1040_m$. Ein i-ter Entspreizer und Normierer $1040_i$ kann beispielsweise ausgelegt sein, um ein zugehöriges Nutzsignal-Frequenzbandsignal 1034 mit einem Detektions-Spreizcode (allgemein: ein Detektionscode bzw. Extraktionscode) zu korrelieren, um so die Spreizung durch die Spreizer $930_1$ - $930_m$ rückgängig zu machen. Durch die Korrelation mit dem entsprechenden Spreizcode bzw. Detektionscode oder Extraktionscode kann beispielsweise ein Bit detektiert werden. Die Detektion des Bits kann im Übrigen auch ein Normieren umfassen, um beispielsweise die Pegeleinstellung in den einbetter-seitigen Pegeleinstellern $940_1$ - $940_m$ rückgängig zu machen. An den Ausgängen der Entspreizer und Normierer $1040_1$ - $1040_m$ können beispielsweise Bitinformationen $1042_1$ - $1042_m$ anliegen, die beispielsweise eine durch die Entspreizer und Normierer $1040_1$ - $1040_m$ entspreizte und normierte Bitinformationen tragen. Der Detektor 1000 umfasst ferner eine Wasserzeichen-Rückgewinnungseinheit 1050, die beispielsweise ausgelegt ist, um die Bitsignale $1042_1$ - $1042_m$ zu empfangen und basierend darauf die Wasserzeichen-Nutzinformation 1020 zurückzugewinnen. Die Wasserzeichen-Rückgewinnungseinheit 1050 kann beispielsweise einen Entspreizer aufweisen, der beispielsweise ausgelegt ist, um die in den Bitstromerzeuger 920 des Wasserzeicheneinbetter 900 durchgeführte Spreizung (Spreizen-C) rückgängig zu machen. Die Wasserzeichen-Rückgewinnungseinheit 1050 kann ferner beispielsweise einen Verschachtelungs-Rückgängigmacher (auch als De-Interleaver bezeichnet) aufweisen, der ausgelegt ist, um die in dem Bitstromerzeuger 920 durchgeführte Zeitverschachtelung von Bits rückgängig zu machen. Ferner umfasst die Wasserzeichen-Rückgewinnungseinheit 1050 beispielsweise einen Fehlerkorrigierer bzw. eine Vorwärts-Fehlerkorrektur, die ausgelegt ist, um die durch den Bitstromerzeuger 920 hinzugefügte Fehlerkorrekturinformation auszunutzen, um somit basierend auf den Bitsignalen $1042_1$ - $1042_m$ die Wasserzeichen-Nutzinformationen 1020 zu erhalten, so dass in der Wasserzeichennutzinformation 1020 die Auswirkungen von Bitfehlern in den Bitsignalen $1042_1$ - $1042_m$ reduziert bzw. eliminiert sind.

Der Decoder 1000 umfasst ferner einen Synchronisierer 1080, der ausgelegt ist, um die Synchronisationssignale $1034_1$ - $1034_n$ zu empfangen. Der Synchronisierer umfasst beispielsweise einen oder mehrere Synchronisations-Korrelatoren $1082_1$ - $1082_n$, wobei die Synchronisations-Korrelatoren $1082_1$ - $1082_n$ ausgelegt sind, um jeweilige Synchronisationssignale $1034_1$. $1034_n$ zu empfangen und mit einem vorgegebenen Synchronisationssignal-Detektionscode zu korrelieren. Somit können die Synchronisations-Korrelatoren $1082_1$ - $1082_n$ das Vorhandensein einer Synchronisations-markierung in den Synchronisationssignalen $1034_1$ - $1034_n$ erkennen. Die Synchronisationseinheit 1080 umfasst ferner beispielsweise eine Nachverarbeitung 1084, die beispielsweise ausgelegt ist, um von den Synchronisations-Korrelatoren $1082_1$ - $1082_n$ eine Information darüber zu erhalten, ob eine Korrelation zwischen den Synchronisationssignalen $1034_1$ - $1034_n$ und vorgegebenen Synchronisationscodes einen Schwellenwert erreicht oder überschreitet, und um basierend auf der von den Synchronisations-Korrelatoren $1082_1$ - $1082_n$ gelieferten Information ein extrahiertes Synchronisationssignal 1086 bereitzustellen, das eine Position anzeigt, zu der in den Synchronisationssignalen $1034_1$ - $1034_n$ eine Synchronisationsmarkierung auftritt.

Das extrahierte Synchronisationssignal 1086 wird dann beispielsweise den Entspreizern und Normierern $1040_1$ - $1040_m$ zugeführt, um die Funktion der Entspreizer und Normierern $1040_1$ - $1040_m$ mit der in dem Eingangssignal 1010 enthaltenen Synchronisationsinformation zu synchronisieren.

Der Decoder 1000 kann in vielfältiger Weise erweitert werden, um eine oder mehrere der oben beschriebenen zusätzlichen Funktionalitäten zu erzielen. Beispielsweise kann der Decoder 1000 um einen Erkenner ergänzt werden, der ausgelegt ist, um eine mehrfach-verwendbare Information in dem Eingangssignal 1010 zu identifizieren und um die mehrfach-verwendbare Identifikation für eine Extraktion mehrer Wasserzeichen bereitzustellen. Erkennt beispielsweise der Erkenner für die mehrfach-verwendbare Information, dass in dem Eingangssignal 1010 eine Synchronisationsinformation enthalten ist, die für eine Detektion bzw. Extraktion mehrerer Wasserzeichen verwendbar ist, so kann der Erkenner die entsprechende Information (z. B. die entsprechende Synchronisationsinformation) für die Erkennung mehrerer Wasserzeichen bereitstellen. In diesem Fall kann beispielsweise ein erster Satz von Entspreizern und Normierern die mehrfach-verwendbare Information (z. B. Synchronisationsinformationen) empfangen, um ein erstes Wasserzeichen zu extrahieren. Ein zweiter Satz von Entspreizern und Normierern kann die mehrfach-verwendbare Information empfangen, um ein zweites Wasserzeichen zu extrahieren. Der erste Satz von Entspreizern und Normierern ist beispielsweise konfiguriert, um ein Wasserzeichen zu erkennen, das gemäß einem ersten Einbettungsverfahren oder gemäß einem ersten Einbettungscode in die Eingangsinformationen 1010 eingebettet ist. Der zweite Satz von Entspreizern und Normierern kann ferner beispielsweise ausgelegt sein, um aus der Eingangsinformation 1010 ein Wasserzeichen zu extrahieren, das gemäß einem zweiten Einbettungsverfahren oder unter Verwendung eines zweiten Einbettungscodes in die Eingangsinformation 1010 eingebettet ist. Somit kann die mehrfach-verwendbare Information wieder verwendet werden, und es ist eine einmalige Erkennung der Synchronisationsinformation für eine Detektion mehrerer verschiedener Wasserzeichen (die z. B. unter Verwendung verschiedener Einbettungsverfahren oder unter Verwendung verschiedener Einbettungscodes eingebettet sind) ausreichend.

Ferner können bei dem Decoder 1000 verschiedene vorteilhafte Konzepte eingesetzt werden, um Extraktionsparameter, die für die Extraktion eines Wasserzeichens verwendet werden, einzustellen. Beispielsweise kann der Detektor 1000 einen Wasserzeichen-Informations-Erkenner umfassen, der beispielsweise dem Wasserzeichen-Informations-Erkenner 830 des Detektors 800 entspricht. Ferner kann der Detektor 1000 beispielsweise einen Einbettungsparameter-Bestimmer aufweisen, der beispielsweise im Wesentlichen dem Einbettungsparameter-Bestimmer 850 des Detektors 800 entspricht. Im Übrigen kann der Detektor 1000 auch eine Ablaufsteuerung aufweisen, die beispielsweise im Wesentlichen der Ablaufsteuerung 860 des Detektors 800 entspricht.

Somit kann beispielsweise durch den Einbettungsparameter-Bestimmer festgelegt werden, welcher Detektionscode für das Entspreizen der Signale $1032_1$ - $1032_m$ verwendet wird. Alternativ oder zusätzlich kann beispielsweise durch den Einbettungsparameter-Bestimmer festgelegt werden, welcher Detektionscode für das Entspreizen der Signale $1042_1$ - $1042_m$ in dem Wasserzeichen-Wiederhersteller 1050 eingesetzt wird. Alternativ oder zusätzlich kann durch den Einbettungs-Parameter-Bestimmer auch festgelegt werden, welche Länge die entsprechenden Detektionscodes zum Entspreizen der betreffenden Signale aufweisen. Im Übrigen kann auch eine Information im Hinblick darauf, wie die Zeitverschachtelung in dem Wasserzeichen-Wiederhersteller 1050 rückgängig gemacht werden kann, durch den Einbettungsparameter-Bestimmer festgelegt werden. Daneben können durch den Einbettungsparameter-Bestimmer auch unterschiedliche Detektionsverfahren für unterschiedliche Wasserzeichen festgelegt werden. Daneben kann der Einbettungsparameter-Bestimmer beispielsweise auch eine Information darüber liefern, welche Frequenzbänder für die Extraktion des Wasserzeichens zu verwenden sind.

Im Folgenden werden kurz einige Details im Hinblick auf ein Gesamtsystem bestehend aus dem Einbetter 900 und dem Detektor 1000 beschrieben. An dem Eingang des Einbetters 900 stehen beispielsweise PCM-codierte Audiosignale bzw. gemäß einer Puls-Code-Modulation codierte Audiosignale an. Dieses Audiosignal (beispielsweise das Haupt-Audiosignal 962) wird mit einem psychoakustischen Verfahren analysiert, beispielsweise durch die Psychoakustikeinheit 970. Das psychoakustische Verfahren stellt beispielsweise eine Unhörbarkeit des einzubettenden Wasserzeichens sicher, bzw. sorgt dafür, dass das einzubettende Wasserzeichen nur schwach wahrgenommen werden kann. Zu übertragende Daten, die beispielsweise an den Dateneingang 910 anstehen, werden dem ursprünglichen Audiosignal (bzw. dem Hauptaudiosignal 962) hinzugefügt. Der Einbetter 900 ist beispielsweise nicht ausschließlich auf eine Offline-Signalverarbeitung zugeschnitten, d. h. für Rundfunkanwendungen kann auch eine Echtzeit-Einbettung erfolgen. Lediglich durch eine interne Blockverarbeitung ist beispielsweise eine gewisse Verzögerung zu erwarten.

Das Eingangssignal an dem Eingang 1010 des Extraktors kann beispielsweise durch ein Mikrophon aufgenommen werden. Dieses Mikrophon des Extraktors kann beispielsweise einen Frequenzgang von 10 Hz bis 10 kHz (typischerweise mit einem Frequenzgang von +/- 5 dB) aufweisen. Als Abtastrate können beispielsweise dazu passend 24 kHz gewählt werden.

Im Folgenden wird eine prinzipielle Funktionsweise des Einbetters 900 bzw. des Extraktors 1000 beschrieben. Ein Nutzband für die Wasserzeichen-Übertragung wird beispielsweise durch das Mikrophon des Extraktors auf einen Frequenzbereich von 100 Hz bis 10 kHz begrenzt. Eine untere Grenzfrequenz des Nutzbandes wird beispielsweise mit fmin bezeichnet. Eine obere Grenzfrequenz wird beispielsweise mit fmax bezeichnet. Bei einigen Ausführungsbeispielen gilt: fmin < 100 Hz und fmax > 10 kHz. Ein Frequenzband von 0 bis fmax wird beispielsweise in M gleich breite Teilbänder zerlegt, und in diesen Teilbändern werden Wasserzeichen-Teilsignale übertragen. Ein Teilband mit einer Nummer k erstreckt sich beispielsweise von (k - 1) * fmax/M bis k * fmax/M, mit k = 1, 2, ..., M. Wegen einer Dämpfung des Mikrophons bei niedrigen Frequenzen wird beispielsweise das Teilband mit der Nummer 1 (k = 1) nicht zur Datenübertragung verwendet. Ein Wasserzeichen kann somit beispielsweise aus M - 1 Teilbandsignalen bestehen. Diese Teilbandsignale werden mittels einer SyntheseFilterbank in die einzelnen Teilbänder umgesetzt. Eine Abtastrate dieser Teilbandsignale an einem Eingang der Synthesefilterbank, beispielsweise mit fs1 bezeichnet, ist ein Bruchteil einer Abtastrate am Ausgang (fs1: = 24/K kHz, mit K ganzzahlig).

Da bei einem Ausführungsbeispiel in dem Wasserzeichenextraktor 1000 die Teilbandsignale (also beispielsweise die Signale $1032_1$ - $1032_m$, bzw. $1034_1$ - $1034_m$) bei einer Abtastrate fs1 weiterverarbeitet werden, kann es im Hinblick auf eine aufwandsgünstige Realisierung des Wasserzeichen-Extraktors sinnvoll sein, fs1 möglichst klein zu wählen. Eine Bandbreite der Teilbänder kann beispielsweise fmax/M betragen, wobei fmax beispielsweise kleiner als 10 kHz sein kann. Nach dem Abtasttheorem muss beispielsweise die Bedingung fs1 $\geq$ 2 fmax/M erfüllt sein. Somit gilt beispielsweise für einen Quotienten 24 kHz/fs1 der beiden Abtastraten:

$$24 \text{ kHz/fs1} \leqq M * 12 \text{ kHz/fmax.}$$

Eine effiziente Implementierung der Synthese-Fiterbank 950 ist beispielsweise möglich, wenn der Quotient 24 kHz/fs1 ein ganzzahliges Vielfaches von M ist. Da fmax = 12 kHz ausscheidet, wird beispielsweise fmax = 6 kHz gewählt. Außerdem wird beispielsweise M = 16 gesetzt. Eine Bandbreite eines einzelnen Teilbandes beträgt somit 375 Hz, und aus der Forderung nach minimaler Abtastrate ergibt sich beispielsweise fs1 = 750 Hz.

Die M - 1 Teilbandsignale (beispielsweise die Signale $942_1$ - $942_m$, zusammen mit den durch den Synchronisationserzeuger 980 und den Pegeleinsteller 990 gelieferten Signale enthalten beispielsweise die codierte Information (beispielsweise die Nutzinformation des Wasserzeichens) und bekannte Trainingssymbole, die beispielsweise auf einer Empfängerseite, also beispielsweise in dem Wasserzeichenextraktor, zur Synchronisation verwendet werden können. Bei einem Ausführungsbeispiel können in jedem Teilband Datensymbole mit Synchronisationssymbolen in Zeitmultiplex übertragen werden. Bei einem anderen Ausführungsbeispiel werden hingegen Datensymbole und Synchronisationssymbole in getrennten Teilbändern übertragen. Es gibt somit r Synchronisationssignale (z. B. mit r = 3) und M - 1 - r Datensignale. Die entsprechenden Teilbänder werden auch als Datenkanäle bzw. Synchronisationskanäle bezeichnet.

Ein Ausgangssignal der Synthesefilterbank 950 ist beispielsweise das eigentliche Wasserzeichen (einschließlich einer Synchronisationsinformation und der Wasserzeichen-Nutzinformation), das zu dem Audiosignal (z. B. zu dem Hauptaudiosignal 962) addiert wird. Damit das Wasserzeichen nicht hörbar ist, können beispielsweise die einzelnen Teilbandsignale (beispielsweise die Signale $932_1$ - $932_m$ bzw. 982) noch in der Amplitude verändert (d. h. z. B. verkleinert) werden. Diese zeitveränderliche Gewichtung (die beispielsweise durch die Pegeleinsteller $940_1$ - $940_m$ bzw. 980 erfolgt) hängt beispielsweise von dem jeweiligen Audiosignal (z. B. von dem Haupt-Audiosignal 962) und von der psychoakustischen Wahrnehmung des Menschen ab. Man spricht in diesem Zusammenhang von psychoakustischer Gewichtung.

Fig. 9 zeigt beispielsweise den prinzipiellen Aufbau des Wasserzeichen-Einbetters. Die codierten Bits (0 und 1) (die beispielsweise durch die Bitsignale $922_1$ - $922_m$ dargestellt werden) werden beispielsweise durch zwei zueinander orthogonale Spreizsequenzen der Länge Spreizen-M (z. B. Spreizen-M = 32) repräsentiert. Diese Spreizsequenzen bestehen beispielsweise aus den Symbolen +1 oder -1. Somit sind die Teilband-Datensignale vor einer psychoakustischen Gewichtung (PAW) BPSK-Signale (jeweils mit Leistung 1). Auch die Synchronisationssignale vor der psychoakustischen Gewichtung sind beispielsweise BPSK-Signale (jeweils Leistung 1).

Im Folgenden werden kurz die Mechanismen im Hinblick jeweilig auf die Vorwärtsfehlerkorrektur (FEC), die Spreizung (Spreizen-M) und auf die Synchronisationssequenzen beschreiben. Für Details wird im Übrigen auf das Lehrbuch "Digital Communications" von J. G. Proakis (3. Auflage, Mc Graw-Hill, New York, 1995) verwiesen.

Der Bitstromerzeuger 920 besteht beispielsweise aus drei Teilen bzw. implementiert drei Verarbeitungsschritte:

1. Faltungsencoder oder Turboencoder mit Coderate R

2. Spreizung um den Faktor Spreizen-C

3. Zeitverschachteler (Interleaver).

Der Encoder (Faltungsencoder oder Turboencoder) erzeugt beispielsweise aus k Informationsbits n > k codierte Bits. Eine Coderate ist beispielsweise definiert als ein Quotient R = k/n. Wird beispielsweise der Fall k = 1 betrachtet, sowird angenommen, dass $1 < n \leqq 5$ gilt.

Niedrigere Coderaten lassen sich beispielsweise durch Spreizung der codierten Bits mit einer Bitfolge der Länge Spreizen-C erzeugen. Dabei wird beispielsweise jedes Codebit mit dem Wert 1 durch die Bitfolge sc[k] ersetzt, und jedes Codebit mit dem Wert 0 wird durch die negierte Bitfolge $sc_{not}$[k] ersetzt (k = 0, 1, ..., Spreizen-C - 1). Eine effektive Coderate ist dann beispielsweise R/Spreizen-C. Beispielsweise ergibt sich für R = 1/3 und Spreizen-C = 12 eine effektive Coderate von 1/36. In diesem Zahlenbeispiel wird ein Informationsbit durch 36 Codebits repräsentiert. Durch den Verschachteler (Interleaver) wird die Reihenfolge der Codebits in einer definierten Art und Weise geändert. Mit einer dazu inversen Operation, der Rückgängigmachung der Verschachtelung (De-Interleaver), werden die Bits in dem Empfänger (Wasserzeichen-Extraktor) wieder in die richtige Reihenfolge gebracht.

Im Folgenden wird noch kurz die Spreizung "Spreizen-M" beschrieben. Bei einem Ausführungsbeispiel werden die aus dem Bitstromerzeuger 920 bzw. aus der Vorwärtsfehlerkorrektur (FEC) kommenden codierten Bits (0 oder 1) durch zwei zueinander orthogonale Spreizsequenzen der Länge Spreizen-M (z. B. Spreizen-M = 32) repräsentiert. Diese Spreizsequenzen bestehen aus den Symbolen +1 oder -1. Somit sind beispielsweise die Teilband-Datensignale vor der psychoakustischen Gewichtung BPSK-Signale (jeweils mit Leistung 1).

Es seien beispielsweise s0[k] bzw. s1[k] (k = 0, 1, ..., Spreizen-M - 1) die Spreizsequenzen, durch die eine Null bzw. eine Eins repräsentiert werden. Orthogonalität bedeutet dabei, dass das innere Produkt <s0, s1> = 0 ist.

Im Folgenden werden noch einige Details im Hinblick auf die Synchronisationssequenzen beschrieben, wie sie beispielsweise durch den Snychronisationssequenzerzeuger 980 geliefert werden, und wie sie beispielsweise durch die Synchronisationseinheit 1080 ausgewertet werden. Für eine Decodierung der Daten auf der Empfängerseite (beispielsweise im Wasserzeichenextraktor) ist es beispielsweise vorteilhaft, wenn Zeitpunkte bekannt sind, zu denen ein Codewort beginnt. Diese Zeitpunkte lassen sich beispielsweise durch Übertragung bekannter Sequenzen und durch Korrelation auf diese Sequenzen im Empfänger ermitteln. Diese Sequenzen werden beispielsweise auf den Synchronisationskanälen übertragen. Hier kann beispielsweise die folgende Vorgehensweise gewählt werden:

Es wird eine Folge p [k] (k = 0, 1, ..., L - 1) von L BPSK-Symbolen mit guten Autokorrelationseigenschaften erzeugt. Durch periodische Wiederholung von p[k] ergibt sich das Signal u[n]: = p[n modulo L] (n = 0, 1, ...). Bei dem Ausführungsbeispiel wird auf allen Synchronisationskanälen das gleich Signal u[n] übertragen.

Im Folgenden werden kurz einige Details im Hinblick auf die psychoakustische Gewichtung beschrieben. Durch eine Spreizbandmodulation wird es beispielsweise ermöglicht, die durchschnittliche Signalleistung durch spektrale Spreizung zu verringern. Zusätzlich wird das Datensignal nach psychoakustischen Grundsätzen bewertet und modifiziert. Dadurch wird beispielsweise die Unhörbarkeit des zum originalen Audiosignal 962 addierten Signals sichergestellt. Diese Unhörbarkeit der Wasserzeicheninformation in dem kombinierten Audiosignal 964 wird beispielsweise durch die Verwendung der Pegeleinsteller $940_1$ - $940_m$ und 990 unter der Kontrolle der Psychoakustikeinheit 970 gewährleistet, wie dies oben schon kurz erläutert wurde. Auf eine detaillierte Beschreibung wird hier verzichtet, da diese für das Verständnis der vorliegenden Erfindung entbehrlich ist.

Im Folgenden werden einige Details im Hinblick auf den Wasserzeichen-Detektor bzw. Wasserzeichen-Extraktor 1000 beschrieben. Das wasserzeichenbehaftete Audiosignal, das beispielsweise durch den Einbetter 900 erzeugt wird, kann beispielsweise konventionell über bestehende Übertragungskanäle verteilt werden (z.B. über Rundfunk oder auch Internet) und wird beispielsweise letztendlich dem Wasserzeichendetektor bzw. Wasserzeichenextraktor 1000 zugeführt.

Ein Eingangssignal an dem Eingang 1010 des Detektors 1000 umfasst beispielsweise ein über den Audiokanal übertragenes Summensignal (beispielsweise das kombinierte Audiosignal 964), das ein Audiosignal und ein Wasserzeichen umfasst.

Durch die Analysefilterbank 1030 wird beispielsweise das Eingangssignal von dem Eingang 1010 in M Teilbandsignale bei einer Abtastrate von beispielsweise 12/M kHz zerlegt. Die Signale in den nicht benutzten Teilbändern (z. B. Teilbändern Nr. 17 - 32) werden beispielsweise nicht berechnet. Das Teilbandsignal Nr. 1 wird beispielsweise zwar berechnet, aber nicht ausgewertet, da es keine Information trägt. Die verbliebenen beispielsweise M - 1 Teilbandsignale werden beispielsweise aufgeteilt in M - 1 - r Datensignale und r Synchronisationssignale und anschließend weiterverarbeitet.

Aus den Synchronisationssignalen (beispielsweise aus den Signalen $1034_1$ - $1034_m$) werden beispielsweise mittels Korrelationen Zeitpunkte ermittelt, zu denen die Datensignale (beispielsweise die Signale $1032_1$ - $1032_m$) entspreizt werden (Entspreizen-M).

Ausgangssignale der mit Entspreizen-M bezeichneten Blöcke $1040_1$ - $1040_m$ sind beispielsweise logarithmische Wahrscheinlichkeits-Verhältnisse (LLR), d.h. weiche Bits bzw. Softbits. Ein positives logarithmisches Wahrscheinlichkeitsverhältnis (LLR) gibt an, dass es sich bei einem Bit um eine logische Eins handelt, und ein negatives logarithmisches Wahrscheinlichkeitsverhältnis (LLR) gibt beispielsweise an, dass es sich dabei um eine logische Null handelt. Je größer beispielsweise der Betrag eines logarithmischen Wahrscheinlichkeitsverhältnisses ist, desto zuverlässiger ist dieser Wert.

Die logarithmischen Wahrscheinlichkeitsverhältnisse werden beispielsweise in dem Wasserzeichen-Rückgewinner 1050 bzw. bei einer Vorwärtsfehlerkorrektur (FEC) weiterverarbeitet.

Im Folgenden wird kurz auf die Eigenschaften der empfangenen Teilbandsignalen (beispielsweise der Signale $1032_1$ - $1032_m$ und $1034_1$ - $1034_m$) eingegangen. Hierbei seien $X_k[n]$(k = 1, 2, ..., M) die Teilbandsignale in dem Wasserzeicheneinbetter nach dem Spreizen (Spreizen-M) und vor der psychoakustischen Gewichtung. $y_k[n]$ (k = 1, 2, ..., M) seien die Ausgangssignale der Analyse-Filterbank. Die Signale $x_k[n]$ werden durch drei Effekte gestört:

- psychoakustische Gewichtung

- Audiosignal

- Audiokanal.

Für die empfangenen Signale (die beispielsweise durch den Decoder 1000 empfangen werden) gilt beispielsweise allgemein:

$$y_k[n] = c_k[n] * x_k[n-D] + r_k[n] \quad (k = 1, 2, ..., M).$$

Hierbei ist $c_k[n]$ ein (zeitabhängier) Kanalkoeffizient und $r_k[n]$ ist additives Rauschen. Die Auswirkungen von Verzerrungen werden beispielsweise durch ein mittleres Signal-Rausch-Verhältnis pro Kanal, bzw. durch ein mittleres Signal-Rausch-Verhältnis gemittelt über alle Kanäle, charakterisiert.

Ein Nutzsignal aus nachrichtentechnischer Sicht ist beispielsweise das Signal $x_k[n-D]$. Alles andere sind rauschartige Störungen. Das Verhältnis der Nutzleistung C zu der Störleistung N, also C/N, in der Regel ausgedrückt in Dezibel, ist beispielsweise das Signal-Rausch-Verhältnis (auch als Störabstand bezeichnet).

Im Folgenden wird eine Synchronisation bei der Detektion eines Wasserzeichens bzw. eine Verarbeitung von Synchronisationssignalen (beispielsweise eine Verarbeitung der Synchronisationssignale $1034_1$ - $1034_m$) kurz beschrieben. Bei einem Ausführungsbeispiel ist eine übertragene Synchronisationssequenz p[k] (k = 0, 1, ..., L-1) bekannt. Im Folgenden bezeichnet x[n] das Eingangssignal und y[n] das Ausgangssignal eines Korrelators zur Synchronisation. Das Ausgangssignal wird beispielsweise durch Filterung des Eingangssignals mit einem FIR-Filter mit einer Impulsantwort p[L - 1-n] (n = 0, 1, ..., L-1) berechnet, d. h. nach der Vorschrift

$$y[n] = \sum_{k=0}^{L-1} p[L-1-k]\, x[n-k]$$

Ausgangsignale der einzelnen Korrelatoren werden beispielsweise kombiniert ("Post processing"), um die Lage eines Korrelationspeaks zu ermitteln. Aus der Lage der Korrelationspeaks lassen sich beispielsweise die Positionen der Synchronisationssequenz p[k] innerhalb der Synchronisationssignale ermitteln. Aus diesen Positionen kann man beispielsweise die Startzeitpunkte für das Entspreizen (entSpreizen-M) ableiten. Diese Information (beispielsweise die Information 1086) wird von der Synchronisationseinheit 1080 an die Entspreizen-M-Blöcke $1040_1$ - $1040_m$ weitergereicht.

Im Folgenden wird die Vorgehensweise bei dem Entspreizen-M beschrieben. Eine mit Entspreizen-M bezeichnete Verarbeitungseinheit (beispielsweise eine der Verarbeitungseinheiten $1040_1$ - $1040_m$) berechnet aus einem Block von Spreizen-M Eingangswerten genau einen Ausgangswert (beispielsweise in Form eines logarithmischen Wahrscheinlichkeitsverhältnisses LLR). Dies wird im Folgenden beschrieben.

Es seien im Folgenden beispielsweise x[n] (n = 0, 1, ..., Spreizen-M) die Abtastwerte eines Blocks der Länge Spreizen-M an einem Eingang von Entspreizen-M ($1040_1$ - $1040_m$). Bei einem Ausführungsbeispiel wird zunächst die Leistung des Blocks auf Eins normiert. Dazu bildet man beispielsweise ein Signal

$$y[n] = x[n]/rms_x \text{ mit } rms_x := \sqrt{\frac{1}{Spreizen-M} \sum_{n=0}^{Spreizen-M-1} x[n]^2}.$$

Das Signal y[n] wird beispielsweise mit einer Differenz s10[n]: =s1[n] - s0[n] der beiden Spreizsequenzen s1[n] und s0[n] entspreizt. Das Ergebnis ist beispielsweise ein logarithmisches Wahrscheinlichkeitsverhältnis LLR:

$$LLR = \frac{1}{Spreizen - M} \sum_{n=0}^{Spreizen-M-1} s10[n]\, y[n]$$

Wegen einer Orthogonalität der Spreizsequenzen (<s0, s1> = 0) ergibt sich beispielsweise ein logarithmisches Wahrscheinlichkeitsverhältnis LLR = 1 für y[n] = s1[n] und ein logarithmisches Wahrscheinlichkeitsverhältnis LLR = -1 für y[n] = s0[n].

Im Folgenden werden Details im Hinblick auf eine Vorwärtsfehlerkorrektur bzw. auf eine Wasserzeichen-Wiederherstellung beschrieben. Die im Folgenden beschriebenen Abläufe können beispielsweise in dem Wasserzeichen-Wiederhersteller 1050 erfolgen. Eine Vorwärtsfehlerkorrektur (FEC) in dem Wasserzeichenextraktor 1000 umfasst beispielsweise drei Teile bzw. Verarbeitungsschritte:

1. Rückgängigmachen der Zeitverschachtelung (beispielsweise durch einen so genannten De-Interleaver)

2. Entspreizung um den Faktor Spreizen-C (auch als "Entspreizen-C" bezeichnet); und

3. Vorwärtsfehlerkorrektur-Decodierung, beispielsweise in einem FEC-Decoder.

Im Folgenden werden Details im Hinblick auf das Rückgängigmachen der Zeitverschachtelung beschrieben. Der Zeitverschachtelungs-Rückgängigmacher (auch als De-Interleaver bezeichnet) macht beispielsweise eine in dem Sender (bzw. Einbetter) vorgenommene Änderung einer Reihenfolge von Bits durch eine entsprechende (beispielsweise umgekehrte) Änderung der Reihenfolge der logarithmischen Wahrscheinlichkeitsverhältnisse (LLR) rückgängig.

Im Folgenden wird das Entspreizen ("Entspreizen-C") beschrieben. Eine Entspreizung um den Faktor Spreizen-C kann beispielsweise auf die im Folgenden beschriebene Art und Weise erfolgen. Dabei sei darauf hingewiesen, dass eine in dem Wasserzeichen-Einbetter verwendete Spreizsequenz oben mit $sc[k]$ ($k = 0, 1, ..., $ Spreizen-C-1) bezeichnet wurde. Diese Folge besteht aus Nullen und Einsen. Aus $sc[k]$ wird beispielsweise gemäß der Vorschrift

$$sc1[k]: = 2 * sc[k] - 1$$

eine nur aus den Zahlen 1 und -1 bestehende Folge $sc1[k]$ erzeugt. Hierbei wird beispielsweise die Zahl $sc[k] = 0$ in die Zahl $sc1[k] = -1$ abgebildet, und die Zahl $sc[k] = 1$ wird in die Zahl $sc1[k] = 1$ abgebildet. Mit der Spreizsequenz $sc1[k]$ werden beispielsweise die logarithmischen Wahrscheinlichkeitsverhältnisse analog zu der im Hinblick auf das Entspreizen-M beschriebenen Vorgehensweise entspreizt.

Es seien im Folgenden $x_{LLR}[n]$ ($n = 0, 1, ..., $ Spreizen-C) die Abtastwerte eines Blocks von logarithmischen Wahrscheinlichkeitsverhältnissen (LLR) am Eingang von Entspreizen-C. Zunächst wird beispielsweise eine Leistung eines Blocks auf 1 normiert. Dazu bildet man beispielsweise das Signal

$$y_{LLR}[n] = x_{LLR}[n] / rms_x \text{ mit } rms_x := \sqrt{\frac{1}{Spreizen - C} \sum_{n=0}^{Spreizen-C-1} x_{LLR}[n]^2}.$$

Aus der Folge $y_{LLR}[n]$ erhält man beispielsweise mit der Spreizsequenz $sc1[k]$ die entspreizten logarithmischen Wahrscheinlichkeitsverhältnisse

$$LLR2 = \frac{1}{Spreizen - C} \sum_{n=0}^{Spreizen-C-1} sc1[n] y_{LLR}[n].$$

Diese entspreizten logarithmischen Wahrscheinlichkeitsverhältnisse werden beispielsweise in den Vorwärtsfehlerkorrektur-Decoder (FEC-Decoder) geschoben und dort decodiert.

Im Folgenden werden Details im Hinblick auf den Vorwärtsfehlerkorrektur-Decoder (FEC-Decoder) beschrieben.

Zur Decodierung der logarithmischen Wahrscheinlichkeitsverhältnisse (LLR) nach dem Entspreizen-C kann beispielsweise ein Vorwärtsfehlerkorrektur-Decoder verwendet werden. Beispielsweise kommen die folgenden Decoder, die eine geringe Komplexität und eine hohe Effizienz aufweisen, in Frage:

- Turbo-Decoder (beispielsweise mit kurzer Codewortlänge);

- Viterbi-Decoder, beispielsweise in Verbindung mit einem Reed-Solomon-Decoder (hierbei wird beispielsweise in einem Sender bzw. Einbetter dem Faltungscode ein Reed-Solomon-Code nachgeschaltet); oder

- Sequentieller Decoder mit großer Einflusslänge (z. B. K = 41; für Details siehe das Lehrbuch "Digital Communications" von J. G. Proakis).

Die logarithmischen Wahrscheinlichkeitsverhältnisse nach Entspreizen-M und Entspreizen-C repräsentieren beispielsweise mit der Coderate R (z. B. R = 1/3) codierten Informationsbits. Der Vorwärtsfehlerkorrektur-Decoder liefert beispielsweise an seinem Ausgang die decodierten Informationsbits zurück. Um die Informationsbits mit möglichst geringer Fehlerwahrscheinlichkeit zu decodieren, ist es wünschenswert, dass das Verhältnis Eb/N0 hinreichend groß ist. Hierbei bezeichnet Eb eine Energie pro Informationsbit und N0 eine einseitige Rauschleistungsdichte. Es gilt beispielsweise:

$$\text{Eb/N0/dB = C/N/dB + 10 * log10 (Spreizen-M * Spreizen-C/R).}$$

.

Dabei ist C/N ein mittlerer Störabstand über alle Datenkanäle an einem Ausgang der Analysefilterbank 1030, also vor Entspreizen-M. Der zweite Summand ist beispielsweise die Summe aus dem Spreiz-Gewinn (Spreizen-M) und dem Codierungsgewinn (Spreizen-C/R). Beispielsweise liegt für Spreizen-M = 32, Spreizen-C = 12 und R = 1/3 der Wert von Eb/N0 um 30,6 dB über C/N.

In dem genannten Lehrbuch von Proakis wurde beispielsweise anhand von Simulationsergebnissen für einen sequentiellen Decoder gezeigt, dass eine Bitfehlerwahrscheinlichkeit $P_b$ beispielsweise für die folgenden Werte von Eb/N0 den Wert Pb = 1e-6 annimmt:

- R = 1/3: Eb/N0 = 2,5 dB;

- R = 1/2: Eb/N0 = 3 dB.

Für den Turbo-Decoder gelten beispielsweise die gleichen Grenzwerte.

Addiert man beispielsweise zu den oben genannten Werten von Eb/N0 noch eine Reserve von 2 - 3 dB, um Störgeräusche zu verkraften, so lautet beispielsweise eine Forderung, dass Eb/N0 beispielsweise 5 dB betragen sollte. Mit den weiter oben genannten Zahlenwerten für Spreizen-M, Spreizen-C und R kann beispielsweise C/N vor dem Entspreizen-M bei -25 dB liegen.

Aus der obigen Beschreibung ist ersichtlich, dass gerade durch das Spreizen der Wasserzeichen-Nutzdaten bei der Einbettung und durch das Entspreizen der Wasserzeichen-Nutzinformationen bei der Decodierung erreicht werden kann, dass die Wasserzeicheninformationen beispielsweise in einem Audiosignal so eingebettet werden können, dass das Audiosignal durch die Einbettung der Wasserzeichen-Nutzinformation in nicht hörbarer bzw. nur geringfügig hörbarer Weise verändert wird. Durch die Verwendung verschiedener Spreizcodes kann ferner ermöglicht werden, verschiedene Wasserzeichen in das gleiche Audiosignal (oder in eine andere Informationsdarstellung) einzubetten. Eine zuverlässige Decodierung bzw. Extraktion des Wasserzeichens erfordert allerdings, dass auf Seiten des Decoders bzw. Extraktors das Entspreizen (sowohl das EntSpreizen-M als auch das EntSpreizen-C) unter Verwendung von geeigneten Spreizcodes erfolgen, die an die einbetter-seitigen Spreizcodes angepasst sind, oder die den einbetter-seitigen Spreizcodes entsprechen. In Anbetracht der obigen Überlegung ist unschwer erkennbar, dass die oben beschriebenen Mechanismen zur Einstellung von Extraktionsparametern, die beispielsweise auf die Auswahl von zur Extraktion verwendeten Spreizcodes geeignet sind, in vorteilhafter Weise eingesetzt werden können, um ein Entspreizen zu ermöglichen.

Im Folgenden werden einige Aspekte der vorliegenden Erfindung zusammengefasst. Das im Rahmen der vorliegenden Beschreibung beschriebene Konzept kann beispielsweise zur Wasserzeicheneinbettung in Trägerdaten sowie zur Extraktion beispielsweise von eingebetteten Wasserzeichendaten verwendet werden.

Bei einer herkömmlichen Wasserzeicheneinbettung erfolgt die Wasserzeicheneinbettung beispielsweise, ohne ein Trägersignal (z. B. ein Audiosignal, oder ein Bildsignal) auf vorhandene Wasserzeichen zu untersuchen. Bei einigen Ausführungsbeispielen hat ein Wasserzeichen die Eigenschaft, mehrere unabhängige Wasserzeichen beinhalten zu können, ohne das eine Beeinflussung eintritt. Ferner ist es bei einigen herkömmlichen Konzepten wünschenswert erforderlich, dass ein Detektor eine Kenntnis über die notwendigen Einbettungsinformationen der unterschiedlichen Einbetter hat.

Wird gewünscht, dass eine mehrfache Einbettung von Wasserzeichen möglich ist, so bestehen besondere Anforderungen. Beispielsweise darf jedes weitere eingefügte Wasserzeichen bereits bestehende Wasserzeichen nicht unbrauchbar machen. Ferner muss ein Detektor bzw. Wasserzeichen-Detektor die Wasserzeichen von verschiedenen Einbettern unterscheiden können.

Aus den einschlägigen Fachveröffentlichungen sind verschiedene Wasserzeichenverfahren bekannt. Beispielsweise können die folgenden Wasserzeichenverfahren bei herkömmlichen Einbettern oder Extraktoren und auch bei den erfindungsgemäßen Einbettern oder Extraktoren verwendet werden:

- Schmalbandverfahren

- Spreizbandverfahren

- Echo-Versteckung (auch als "Echo-Hiding" bezeichnet)

- Mehrträger-Verfahren

- Phasenmodifikation.

Bei herkömmlichen Verfahren können sich einige Nachteile ergeben. So fügt beispielsweise herkömmlicherweise jeder Einbetter voneinander unabhängig Informationen (bzw. Wasserzeicheninformationen) zu einer Informationsdarstellung (beispielsweise zu einem Audiosignal) hinzu. Somit muss herkömmlicherweise ein Detektor bzw. Wasserzeichendetektor für jeden Einbetter das vollständige Detektionsverfahren durchführen. Ferner müssen herkömmlicherweise einem Detektor auch genaue Informationen zum Einbetter vorliegen, die es ihm ermöglichen, das Wasserzeichen zu erkennen. Beispielsweise benötigt ein herkömmlicher Detektor unter Verwendung eines Spreizbandverfahrens die von dem Einbetter verwendete Spreizsequenz.

Somit nimmt bei einem herkömmlichen Detektor eine Detektionskomplexität und ein Speicherbedarf mit jedem Wasserzeichen zu, weil ein herkömmlicher Detektor beispielsweise für jeden möglichen Einbetter eine Extraktion versucht. Es ist somit herkömmlicherweise nicht möglich, dass eine Anzahl der möglichen Einbetter beispielsweise unbegrenzt ist (was nicht zwangsläufig bedeutet, dass eine unbegrenzte Anzahl von Wasserzeichen in einem Trägersignal vorkommen kann). Häufig werden daher die Einbetter herkömmlicherweise begrenzt. Ist nämlich die Anzahl der möglichen Einbetter sehr groß, so muss herkömmlicherweise nach allen Einbettern gesucht werden, auch wenn letztendlich nur ein Wasserzeichen (beispielsweise in der untersuchten Informationsdarstellung) enthalten ist.

Nachträglich hinzukommende Einbetter sind beispielsweise einem herkömmlichen Extraktor nicht bekannt, und es wird beispielsweise eine Aktualisierung der Detektoren notwendig, wenn nachträglich ein Einbetter hinzukommt.

Im Folgenden werden einige Aspekte der vorliegenden Erfindung zusammengefasst. Gemäß einigen Ausführungsbeispielen der Erfindung kann der Detektor bzw. Wasserzeichendetektor für alle Wasserzeichen notwendige Informationen und Detektionsverfahren so weit wie möglich gemeinsam nutzen, was eine Komplexität einen Speicherbedarf, einen Zeitbedarf und/oder einen Energiebedarf reduziert. Bei einigen Ausführungsbeispielen brauchen redundante Informationen nicht in dem Trägersignal (z. B. dem Audiosignal) überlagert zu werden.

Bei einigen Ausführungsbeispielen hat der Detektor bzw. Wasserzeichendetektor darüber hinaus Informationen über die Einbetter und kann beispielsweise eine Suche nach Wasserzeichen auf die wesentlichen Detektionsschritte begrenzen.

Bei einigen Ausführungsbeispielen können notwendige Detektionsinformationen (bzw. Detektionsparameter) durch definierte Ableitungsschritte der Einbetterinformationen dynamisch berechnet werden. Bei einigen Ausführungsbeispielen erfordern somit neu hinzukommende Einbetter keine nachträgliche Änderung der Detektorinformationen.

Im Folgenden werden einige Aspekte von verschiedenen Ausführungsbeispielen beschrieben. Die verschiedenen Aspekte können innerhalb eines Detektors, innerhalb eines Extraktors bzw. innerhalb eines Gesamtsystems, das einen Detektor und einen Extraktor umfasst, kombiniert werden.

1. Gemäß einem Aspekt wird vor jedem Einbettungsvorgang (bzw. zumindest vor einigen Einbettungsvorgängen) ein Trägersignal (z. B. ein Audiosignal oder ein Bildsignal, oder ein Videosignal oder ein Computerprogrammsignal, bzw. allgemein eine Informationsdarstellung) auf eventuell vorhandene Wasserzeichen untersucht. Wird ein bereits bestehendes Wasserzeichen detektiert, so werden beispielsweise die neuen Wasserzeichen abhängig von dem ursprünglichen Wasserzeichen in einer Art und Weise eingefügt, die es dem Detektor ermöglicht, gemeinsame Rechenoperationen für alle Wasserzeichen zu nutzen. Beispielsweise wird eine Synchronisationssequenz (allgemein: eine Synchronisationsinformation) nicht neu eingebettet, sondern es wird eine bestehende Synchronisationssequenz (bzw. Synchronisationsinformation) verwendet und nur die eigentlichen Daten (beispielsweise die Wasserzeichen-Nutzdaten) werden (beispielsweise synchron zu der bestehenden Sequenz bzw. Synchronisationssequenz) eingebettet.

Damit muss beispielsweise ein Extraktor nur eine einzige Synchronisationssequenz (bzw. Synchronisationsinformation) suchen, die für alle enthaltenen Wasserzeichen die gleiche (bzw. die einzige) ist. Diese Synchronisationssequenz kann beispielsweise für nachfolgende Einbetter gleichzeitig ein Hinweis für existierende Wasserzeichen sein.

2. Gemäß einem Aspekt wird mit einem für jeden Einbetter gleichen Verfahrens eine Einbetterinformation hinzugefügt. In anderen Worten, mindestens zwei verschiedene Einbetter verwenden das gleiche Verfahren zur Einbettung einer Einbetterinformation. Die Einbetterinformation kann beispielsweise eine Generationsinformation sein. Beispielsweise kann die Generationsinformation eine Anzahl von bisherigen Wasserzeichen beschreiben. Somit kann beispielsweise ein erster Einbetter anzeigen, dass er das erste Wasserzeichen hinzugefügt hat. Ein zweiter Einbetter kann beispielsweise anzeigen, dass nun zwei Wasserzeichen enthalten sind. Gemäß einem Aspekt kann diese Information (also beispielsweise die Generationsinformation) unabhängig vom Einbetter zu detektieren sein.

3. Gemäß einem Aspekt werden die Daten (bzw. die Wasserzeichen-Nutzdaten bzw. Wasserzeichen-Nutzinformationen) nun von dem Einbetter (beispielsweise zu dem Trägersignal) zugefügt, so dass sich die Wasserzeichen nicht (oder nur geringfügig) beeinflussen. Dazu können verschiedene Verfahren verwendet werden. Beispielsweise kann ein CDMA-Verfahren bzw. ein Codemultiplex-Vielfachzugriffs-Verfahren) eingesetzt werden. Bei einem entsprechenden Spreizverfahren verwendet beispielsweise jeder Einbetter (aus einer Mehrzahl von Einbettern) eine eigene Spreizsequenz, die orthogonal zu den Sequenzen bzw. Spreizsequenzen anderer Einbetter ist. Die Daten teilen sich beispielsweise (aber nicht notwendigerweise) einen gemeinsamen Frequenzbereich und auch einen gemeinsamen Zeitbereich.

Alternativ (oder zusätzlich) kann auch eine Einbettung im Zeitmultiplex, Frequenzmultiplex bzw. unter Verwendung einer Kombination daraus erfolgen. Da sich beispielsweise bei Verwendung des CDMA-Verfahrens die Sequenzen überlagern, steigt beispielsweise eine insgesamt eingebettete Signalenergie mit jedem weiteren Wasserzeichen an. Damit kann beispielsweise die Wasserzeichenenergie derart ansteigen, dass eine Wahrnehmung des Wasserzeichens wahrscheinlicher wird. Gemäß einem Aspekt könnte jedes Wasserzeichen in einem anderen Frequenzband bzw. in einem andere Zeitschlitz eingebettet werden, damit eine Überlagerung vermieden wird. Hier ist es vorteilhaft, wenn jeder Einbetter weiß, welche Wasserzeichen bereits enthalten sind, damit eine Überlagerung nicht erfolgt (bzw. nur in akzeptablem Umfang erfolgt). In anderen Worten, die oben genannte Generationsinformation ist hier beispielsweise nicht nur für den Detektor, sondern auch für jeden weiteren Einbetter hilfreich.

Soll eine mehrfache Einbettung von Wasserzeichen erfolgen, so beginnen weitere Einbetter beispielsweise wieder bei Punkt 1.

4. Bei einigen Ausführungsbeispielen extrahiert der Detektor, ähnlich wie jeder weitere Einbetter, die Einbetterinformationen (die beispielsweise eine Information über die von dem Einbetter verwendeten Einbettungsparameter oder über die von dem Detektor zu verwendenden Detektionsparameter umfasst). Gemäß einem Aspekt kann ein Detektor mit dem gleichen Verfahren bzw. mit der gleichen Spreizsequenz die Generationsinformationen aller Einbetter in gleicher Art und Weise auslesen.

Für alle Wasserzeichen verwendbare Informationen (auch als mehrfach-verwendbare Informationen bezeichnet) können beispielsweise ebenfalls aus dem Trägersignal gewonnen werden. Beispielsweise kann ein Synchronisationssignal, das für alle Wasserzeichen (bzw. zumindest für eine Mehrzahl von Wasserzeichen) gültig ist, aus dem Trägersignal gewonnen werden. Ferner kann (z. B. durch den Detektor) aufgrund der Einbetterinformationen gezielt nach enthaltenen Wasserzeichen gesucht werden.

5. Da ein herkömmlicher Detektor keine Informationen darüber besitzt, wie viele Wasserzeichen in dem Trägersignal enthalten sind, müsste der Detektor nach allen möglichen Einbetterinformationen suchen. Um diesem Problem zu begegnen, kann man beispielsweise diese Anzahl (also die Anzahl der möglichen Wasserzeichen) im Vorfeld begrenzen. Gemäß einem Aspekt der Erfindung kann man aber, beispielsweise hinter der Synchronisationssequenz, einen gewissen Zeitschlitz (oder eine andere Ressource) frei lassen, in den beispielsweise jeder Einbetter eine Generationsinformation einfügen darf.

Gemäß einem Aspekt wird es bevorzugt, dass das Einbettungsverfahren hierbei (für mehrere Einbetter) immer das gleiche ist. Beispielsweise kann jeder Einbetter von Generationsinformationen das gleiche Synchronisationsband verwenden. Ferner kann beispielsweise jeder Einbetter von Generationsinformationen die gleiche Spreizsequenz bzw. das gleiche Einbettungsverfahren verwenden. Somit kann beispielsweise ein Extraktor mit dem gleichen Verfahren (bzw. mit der gleichen Spreizsequenz) die Generationsinformationen aller Einbetter (oder zumindest einer Mehrzahl von Einbettern) in gleicher Weise auslesen, ohne die Extraktionskomplexität zu steigern. Somit ist es vorteilhaft, wenn das Einbettungsverfahren für die Generationsinformationen für alle Einbetter identisch ist.

Basierend auf der Kenntnis der Generationsinformationen (d. h. der Anzahl der Wasserzeichen) weißt ein Extraktor beispielsweise genau, nach wie vielen Wasserzeichen er suchen muss. Eine (herkömmlicherweise oft auftretende) sinnlose Suche nach nicht vorhandenen Wasserzeichen entfällt somit.

Gemäß einem weiteren Aspekt können so genannte Ableitungsfunktionen für Einbetterinformationen verwendet werden. Details diesbezüglich werden im Folgenden kurz zusammengefasst. Bei einem Spreizbandverfahren bettet ein Einbetter beispielsweise diese Sequenz (also beispielsweise eine Spreizsequenz) in das Trägersignal ein. Somit wird es bevorzugt, dass die Sequenz bzw. die Spreizsequenz dem Detektor bekannt ist, damit dieser die in dem Trägersignal vorhandene Sequenz bzw. Spreizsequenz erkennen kann, und damit der Detektor somit die in dem Trägersignal enthaltene Wasserzeicheninformation extrahieren kann. Jeder nachträglich hinzugefügte Einbetter hat somit (herkömmlicherweise) eine Aktualisierung (bzw. ein "Update") der Extraktoren zur Folge. Auch bei anderen Wasserzeichenverfahren ist es in manchen Fällen erforderlich, dass der Detektor eine bestimmte Information vom Einbetter zur Detektion kennt.

Dieses Erfordernis kann beispielsweise dann umgangen werden, wenn die genannten Informationen (in diesem Beispiel die Spreizsequenzen) aus einer festen Datenmenge (z. B. aus einem Startwert) mittels einer geeigneten Ableitungsfunktion berechnet werden. Ein neuer Einbetter kann beispielsweise die Ableitungsfunktion so oft auf den Startwert anwenden, wie es schon vergebene Einbetter und somit auch Spreizsequenzen gibt.

In einigen Fällen kann der so berechnete Wert (also der durch einmaliges oder mehrmaliges Anwenden der Ableitungsfunktion aus dem Startwert berechnete Wert) nicht direkt als Spreizsequenz verwendet werden. So bestehen bei einer Spreizsequenz diverse Anforderungen z. B. an die Korrelationseigenschaften und an das Spektrum. Bei einigen Ausführungsbeispielen kann der durch Anwendung der Ableitungsfunktion auf den Startwert berechnete Wert als Grundlage (sogenannte "Seed") zur Erzeugung der eigentlichen Spreizsequenz dienen. Bei anderen Wasserzeichenverfahren (die beispielsweise keine Spreizsequenz verwenden) kann der durch einmalige oder mehrmalige Anwendung der Ableitungsfunktion auf den Startwert erhaltene Wert ebenso als Basis für eine entsprechende Datenmodulation dienen.

Gemäß einem weiteren Aspekt ergibt sich eine weitere Eigenschaft durch die Verwendung von so genannten Einwegfunktionen für die Ableitung. So können beispielsweise aus einem abgeleiteten Wert nur jeweils die hierarchisch darunter liegenden Werte berechnet werden. Damit kann man beispielsweise dem Extraktor Zugriffsrechte erteilen. Besitzt ein Detektor beispielsweise die Kenntnis über den "obersten" Startwert, so kann er alle Wasserzeichen extrahieren. Ein Detektor, dem als Startwert z. B. nur der zweimalig abgeleitete Wert bekannt ist, kann die zwei (darüber liegenden) Sequenzen nicht erzeugen und somit die Wasserzeichen von zwei Einbettern nicht auslesen.

Wird hingegen als Ableitungsfunktion anstelle einer Einwegfunktion eine normale (beispielsweise mit geringem Rechenaufwand umkehrbare) Ableitungsfunktion verwendet, so ist beispielsweise eine unmittelbare Vergabe von Zugriffsrechten nicht möglich. Dennoch besteht die Möglichkeit, eine Folge von nahezu beliebig vielen Einbettungsparameterwerten bzw. Detektionsparameterwerten erhalten zu können.

Im Folgenden werden einige Verbesserungen und Vorteile gegenüber dem Stand der Technik beschrieben, die gemäß einigen Ausführungsbeispielen der vorliegenden Erfindung erzielt werden können.

Gemäß einigen der im Rahmen der vorliegenden Erfindung beschriebenen Ausführungsbeispiele ist es möglich, mehrere Wasserzeichen in ein Trägersignal einzubetten oder mehrere Wasserzeichen aus einem Trägersignal auszulesen. Dabei kann beispielsweise eine Detektionskomplexität gegenüber einer unabhängigen Detektion verringert bzw. minimiert werden. Gemäß einigen Ausführungsbeispielen der Erfindung sinken ein Speicherbedarf und/oder ein Energiebedarf bei einer Detektion von Wasserzeichen.

Bei einigen Ausführungsbeispielen der Erfindung ist es möglich, mehrere Wasserzeichen in ein Trägersignal einzubetten und so auszulesen, dass nur die Wasserzeichen ausgelesen werden, die tatsächlich enthalten sind, bzw. auf die man zugreifen darf. Bei einigen Ausführungsbeispielen können sinnlose Detektionsversuche entfallen.

Bei einigen Ausführungsbeispielen muss ein Detektor nicht alle zur Detektion notwendigen Einbetterinformationen kennen. Vielmehr können bei einigen Ausführungsbeispielen nachträgliche Einbetter erkannt werden, ohne dass der Detektor aktualisiert werden muss.

Bei einigen Ausführungsbeispielen kann ferner ein Detektor (bzw. sogar jeder Detektor) implizit Zugriffsrechte für diese Wasserzeichen erhalten.

Im Folgenden wird noch ein weiteres Ausführungsbeispiel der Erfindung beschrieben. Zunächst wird dabei die Einbettung beschrieben. Gemäß einem Ausführungsbeispiel sucht der Einbetter in dem Trägersignal beispielsweise nach vorhandenen Wasserzeichen, indem er eine Synchronisationssequenz sucht. Da der Einbetter (beispielsweise bei der ersten Einbettung eines Wasserzeichens in ein Trägersignal) der erste Einbetter ist, wird beispielsweise keine solche Sequenz gefunden. Der Einbetter bzw. der erste Einbetter fügt daher die Synchronisationssequenz ein. Zudem kann der Einbetter bzw. erste Einbetter zudem signalisieren, dass er der erste Einbetter ist. Dabei kann der erste Einbetter die Daten (beispielsweise die Signalisierungsdaten, die anzeigen, dass er der erste Einbetter ist) mit (beispielsweise zu dem Trägersignal) hinzufügen. Beispielsweise kann der erste Einbetter die Daten in einem freien Zeitschlitz nach der Synchronisationssequenz oder in einem separaten Band parallel zu der Synchronisationssequenz hinzufügen. Bei einem Ausführungsbeispiel werden die Daten parallel zu der Synchronisationssequenz hinzugefügt.

Im Folgenden wird eine mögliche Vorgehensweise bei einer Durchführung weiterer Einbettungen beschrieben. Der Einbetter kann auch in diesem Fall beispielsweise wieder nach der bekannten Synchronisationssequenz suchen. Die bekannte Synchronisationssequenz kann dabei im Übrigen als ein Hinweis auf die Existenz von Wasserzeichen gewertet werden. Findet der Einbetter (beispielsweise bei einer weiteren Einbettung) die bekannte Synchronisationssequenz, so kann er beispielsweise nach der Signalisierung des ersten Einbetters eine Information hinzufügen, die anzeigt, dass er der zweite Einbetter ist. Die entsprechenden Daten können wiederum parallel zu der Synchronisationssequenz hinzugefügt werden. Die Daten können aber ferner auch anderweitig zu dem Trägersignal hinzugefügt werden, z. B. in einem Zeitschlitz im Anschluss an die Synchronisationssequenz.

Im Folgenden wird noch eine beispielhafte Vorgehensweise bei der Detektion beschrieben. Ein Detektor kann beispielsweise nach den Einbetterinformationen suchen und findet (beispielsweise im Anschluss an die oben beschriebenen Einbettungen) das Synchronisationssignal und die Signalisierungen von dem ersten und dem zweiten Einbetter. Der Detektor leitet somit beispielsweise die notwendigen Extraktionsparameter ab, die er zur Detektion der Wasserzeichen benötigt. Ferner extrahiert der Detektor beispielsweise genau diese zwei Wasserzeichendaten. Da beispielsweise beide Wasserzeichen (also beispielsweise das von dem ersten Einbetter eingebettete Wasserzeichen und das von dem weiteren bzw. zweiten Einbetter eingebettete Wasserzeichen) auf das gleiche Synchronisationssignal aufbauen, wird beispielsweise die Synchronisation nur einmal für alle Wasserzeichen durchgeführt. Ferner braucht beispielsweise nicht nach weiteren Wasserzeichen gesucht werden.

Zusammenfassend ist somit festzuhalten, dass die vorliegende Erfindung gemäß einigen Aspekten eine Vorrichtung und ein Verfahren zur mehrfachen WasserzeichenEinbettung und Wasserzeichen-Extraktion schafft. Durch einige Ausführungsbeispiele der Erfindung wird die Aufgabe gelöst, eine mehrfache Wasserzeicheneinbettung in Trägerdaten bzw. in ein Trägersignal zu ermöglichen, so dass eine Detektion mit begrenzter Komplexität bzw. mit geringerer Komplexität als bei herkömmlichen Anordnungen möglich ist.

Das entsprechende Konzept ist vorteilhaft einsetzbar, da es für die verschiedensten Anwendungsfälle erwünscht oder sogar notwendig ist, nicht nur ein einziges Wasserzeichen, sonder mehrere unabhängige Wasserzeichen einzubetten. Die meisten Wasserzeichenverfahren sind im Übrigen für die Einbettung von einem Wasserzeichen ausgelegt, auch wenn das entsprechende Verfahren prinzipiell eine mehrfache Einbettung erlaubt.

Herkömmlicherweise nimmt eine Detektionskomplexität und ein Speicherbedarf mit einer Anzahl an möglichen Wasserzeichen gleichmäßig zu. Ferner besitzt herkömmlicherweise ein Detektor meist keine Informationen darüber, wie viele und welche Wasserzeichen in Trägersignalen tatsächlich vorhanden sind. Er muss somit beispielsweise versuchen, alle möglichen Wasserzeichen zu detektieren.

Gemäß einem Aspekt der in der vorliegenden Beschreibung beschriebenen Ausführungsbeispiele wird vor jedem Einbettungsvorgang das Trägersignal auf eventuell vorhandene Wasserzeichen untersucht. Wird ein bereits bestehendes Wasserzeichen detektiert, so werden beispielsweise die neuen Wasserzeichen abhängig von dem ursprünglichen Wasserzeichen in einer Art und Weise eingefügt, die es dem Detektor ermöglicht, gemeinsame Verfahren für alle Wasserzeichen gleichermaßen zu nutzen.

Gemäß einem weiteren Aspekt einiger der hier beschriebenen Ausführungsbeispiele kann eine Einbettung von zusätzlichen Informationen, die sowohl dem Extraktor Informationen über die einzelnen Einbetter liefert, als auch einem weiteren Einbetter Informationen über jeden weiteren (bzw. vorhergehenden) Einbettungsprozess liefert, erfolgen. Eine Extraktionsweise für diese Informationen kann beispielsweise unabhängig vom Einbetter sein.

Gemäß einem weiteren Aspekt einiger der hier beschriebenen Ausführungsbeispiele werden die einbetterabhängigen Informationen nicht willkürlich gewählt, sonder definiert voneinander abgeleitet.

Im Folgenden werden einige Verfahren gemäß verschiedenen Ausführungsbeispielen der Erfindung beschrieben.

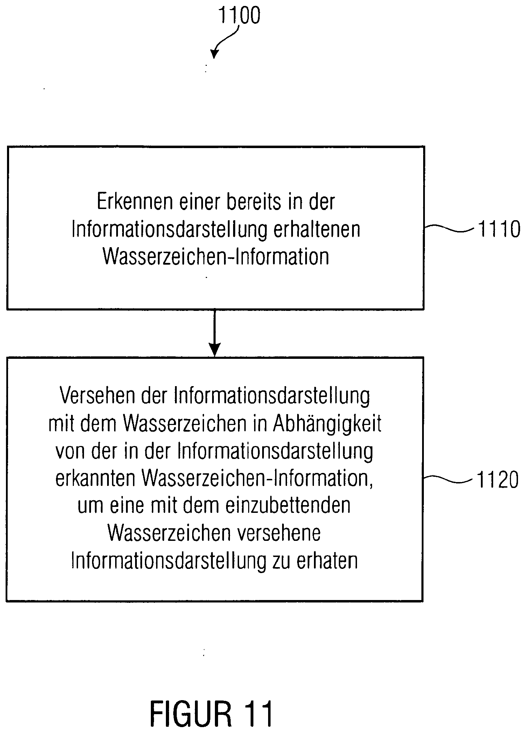

Fig. 11 zeigt ein Flussdiagramm eines Verfahrens zum Einbetten eines einzubettenden Wasserzeichens in eine Informationsdarstellung. Das Verfahren gemäß der Fig. 11 ist in seiner Gesamtheit mit 1100 bezeichnet. Das Verfahren 1100 umfasst in einem ersten Schritt 1110 ein Erkennen einer bereits in der Informationsdarstellung enthaltenen Wasserzeicheninformation. Das Verfahren 1100 umfasst ferner in dem zweiten Schritt 1120 ein Versehen der Informationsdarstellung mit dem Wasserzeichen in Abhängigkeit von der in der Informationsdarstellung erkannten Wasserzeicheninformation, um eine mit dem einzubettenden Wasserzeichen versehene Informationsdarstellung zu erhalten.

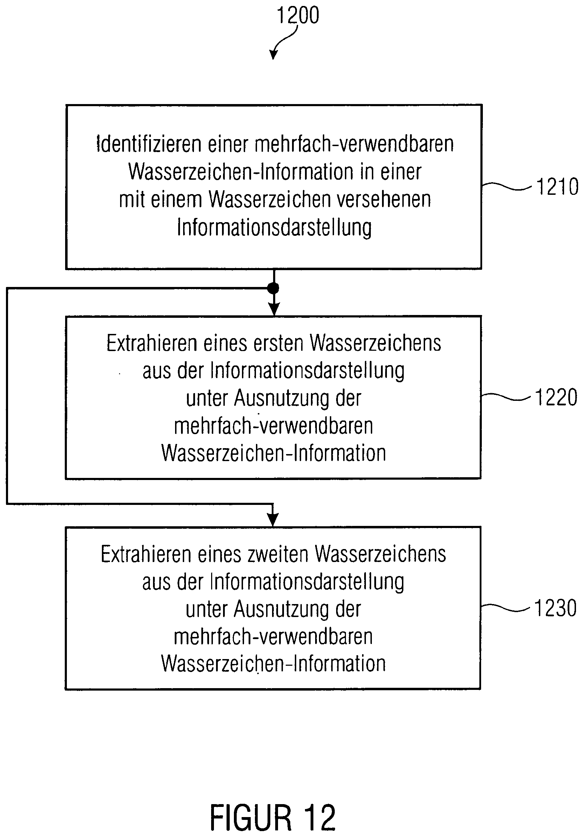

Fig. 12 zeigt ein Flussdiagramm eines Verfahrens zum Detektieren von zumindest zwei Wasserzeichen in einer mit Wasserzeichen versehenen Informationsdarstellung. Das Verfahren gemäß der Fig. 12 ist in seiner Gesamtheit mit 1200 bezeichnet. Das Verfahren 1200 umfasst in einem ersten Schritt 1210 ein Identifizieren einer mehrfach-verwendbaren Wasserzeichen-Information in der mit einem Wasserzeichen versehenen Informationsdarstellung. Das Verfahren 1210 umfasst ferner in einem zweiten Schritt 1220 ein Extrahieren eines ersten Wasserzeichens aus der Informationsdarstellung unter Ausnutzung der mehrfach-verwendbaren Wasserzeicheninformation. Das Verfahren 1200 umfasst ferner in einem dritten Schritt 1230 ein Extrahieren eines zweiten Wasserzeichens aus der Informationsdarstellung unter Ausnutzung der mehrfach-verwendbaren Wasserzeicheninformation.

Der zweite Schritt 1220 und der dritte Schritt 1230 können im Übrigen beispielsweise nacheinander ausgeführt werden. Alternativ dazu können der zweite Schritt 1220 und der dritte Schritt 1230 aber auch parallel, gleichzeitig oder zumindest zeitlich überlappend ausgeführt werden.

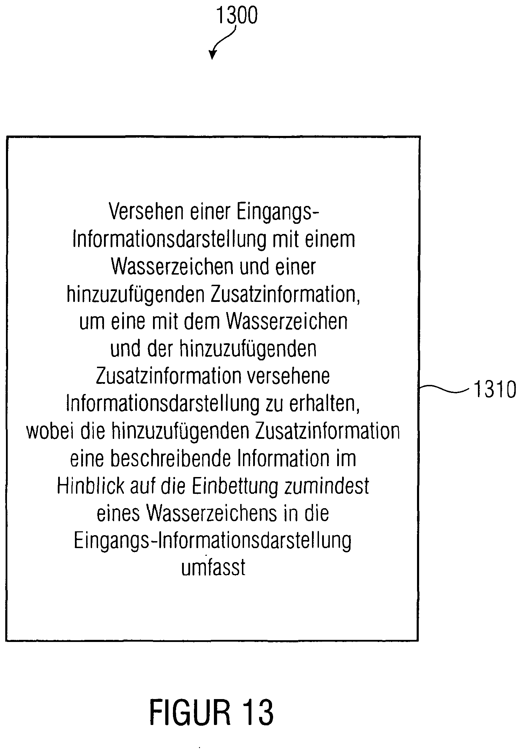

Fig. 13 zeigt eine graphische Darstellung eines Verfahrens zum Einbetten eines einzubettenden Wasserzeichens in eine Eingangs-Informationsdarstellung. Das Verfahren gemäß der Fig. 13 ist in seiner Gesamtheit mit 1300 bezeichnet. Das Verfahren 1300 umfasst ein Versehen 1310 der Eingangs-Informationsdarstellung mit einem Wasserzeichen und einer hinzuzufügenden Zusatzinformation, um eine mit dem Wasserzeichen und der hinzuzufügende Zusatzinformation versehene Informationsdarstellung zu erhalten. Die hinzuzufügende Zusatzinformation umfasst dabei eine beschreibende Information im Hinblick auf die Einbettung zumindest eines Wasserzeichens in die Eingangs-Informationsdarstellung.

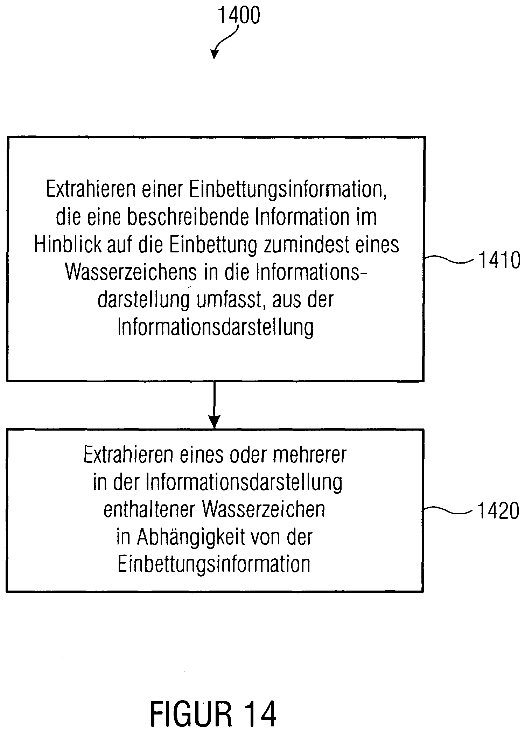

Fig. 14 zeigt ein Flussdiagramm eines Verfahrens zum Detektieren von zumindest einem Wasserzeichen in einer Eingangs-Informationsdarstellung. Das Verfahren gemäß der Fig. 14 ist in seiner Gesamtheit mit 1400 bezeichnet. Das Verfahren 1400 umfasst in einem ersten Schritt 1410 ein Extrahieren einer Einbettungsinformation, die eine beschreibende Information im Hinblick auf die Einbettung zumindest eines Wasserzeichens in die Informationsdarstellung umfasst, aus der Informationsdarstellung. Das Verfahren 1400 umfasst ferner in einem zweiten Schritt 1420 ein Extrahieren eines oder mehrerer in der Eingangs-Informationsdarstellung enthaltener Wasserzeichen in Abhängigkeit von der Einbettungsinformation.

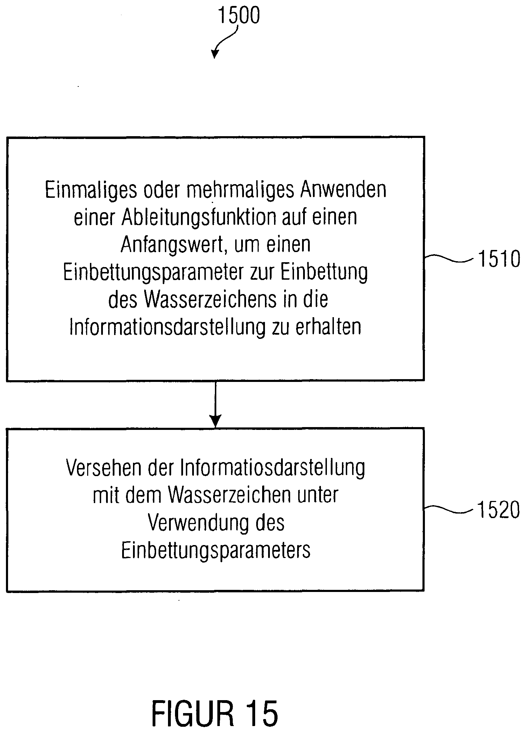

Fig. 15 zeigt ein Flussdiagramm eines Verfahrens zum Einbetten eines Wasserzeichens in eine Informationsdarstellung. Das Verfahren gemäß der Fig. 15 ist in seiner Gesamtheit mit 1500 bezeichnet. Das Verfahren 1500 umfasst in einem ersten Schritt 1510 ein einmaliges oder mehrmaliges Anwenden einer Ableitungsfunktion auf einen Anfangswert, um einen Einbettungsparameter zur Einbettung des Wasserzeichens in die Informationsdarstellung zu erhalten. Das Verfahren 1500 umfasst ferner in einem zweiten Schritt 1520 ein Versehen der Informationsdarstellung mit dem Wasserzeichen unter Verwendung des Einbettungsparameters.

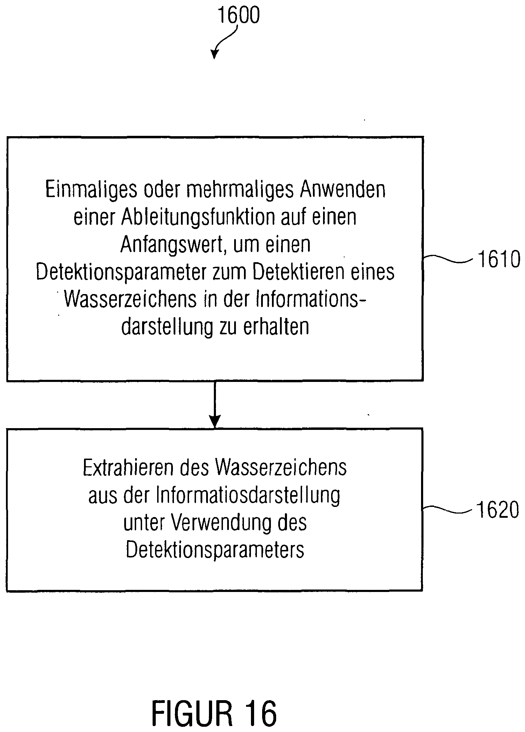

Fig. 16 zeigt ein Flussdiagramm eines Verfahrens zum Detektieren von zumindest einem Wasserzeichen in einer mit dem Wasserzeichen versehenen Informationsdarstellung. Das Verfahren gemäß der Fig. 16 ist in seiner Gesamtheit mit 1600 bezeichnet. Das Verfahren 1600 umfasst in einem ersten Schritt 1610 ein einmaliges oder mehrmaliges Anwenden einer Ableitungsfunktion auf einen Anfangswert, um einen Detektionsparameter zum Detektieren des Wasserzeichens in der Informationsdarstellung zu erhalten. Das Verfahren 1600 umfasst ferner in einem zweiten Schritt 1620 ein Extrahieren des Wasserzeichens aus der Informationsdarstellung unter Verwendung des Detektionsparameters.

Die Verfahren 1200 - 1600 gemäß den Fig. 12 - 16 können im Übrigen um all diejenigen Schritt und/oder Merkmale ergänzt werden, die im Rahmen der vorliegenden Beschreibung auch im Hinblick auf die beschriebenen Vorrichtungen erläutert wurden. Ferner können die im Rahmen der vorliegenden Beschreibung dargestellten Verfahren auch durch ein Computerprogramm realisiert werden.

In anderen Worten, die erfindungsgemäße Vorrichtung und das erfindungsgemäße Verfahren kann in Hardware oder in Software implementiert werden. Die Implementation kann auf einem digitalen Speichermedium, beispielsweise einer Diskette, einer CD, einer DVD, einem ROM, einem PROM, einem EPROM, einem EEPROM, oder einem FLASH-Speicher, mit elektronisch auslesbaren Steuersignalen erfolgen, die so mit einem programmierbaren Computersystem zusammenwirken können, dass das entsprechende Verfahren ausgeführt wird.

Allgemein besteht die vorliegende Erfindung somit auch in einem Computer-Programm-Produkt mit auf einem maschinenlesbaren Träger gespeichertem Programmcode zur Durchführung des erfindungsgemäßen Verfahrens, wenn das Computerprogramm-Produkt auf einem Rechner abläuft. In anderen Worten ausgedrückt, die Erfindung kann als ein Computer-Programm mit einem Programmcode zur Durchführung des erfindungsgemäßen Verfahrens realisiert werden, wenn das Computer-Programm auf einem Computer abläuft.

Ein Ausführungsbeispiel der Erfindung schafft einen Einbetter 300; 700 zum Einbetten eines einzubettenden Wasserzeichens 341; 742 in eine Eingangs-Informationsdarstellung 310; 710, die ein Audiosignal repräsentiert, oder die ein Videosignal repräsentiert, oder die ein Computerprogramm repräsentiert, oder die ein Bild repräsentiert, oder die einen Text repräsentiert, mit folgenden Merkmalen: einem Informations-Hinzufüger 330; 740, der ausgelegt ist, um die Eingangs-Informationsdarstellung 310; 710 mit dem einzubettenden Wasserzeichen 341; 742 und einer hinzuzufügenden Zusatzinformation 343; 762 zu versehen, um eine mit dem einzubettenden Wasserzeichen und der hinzuzufügenden Zusatzinformation versehene Informationsdarstellung 320; 720 zu erhalten, wobei die hinzuzufügende Zusatzinformation eine beschreibende Information umfasst, die die Einbettung zumindest eines Wasserzeichens in die mit dem einzubettenden Wasserzeichen und der Zusatzinformation versehene Informationsdarstellung 320; 720 beschreibt; wobei der Einbetter ausgelegt ist, um die Eingangs-Informationsdarstellung 310; 710 so mit der hinzuzufügenden Zusatzinformation 343; 762 zu versehen, dass die hinzuzufügende Zusatzinformation eine Information darüber trägt, wie viele Wasserzeichen in der mit dem einzubettenden Wasserzeichen und der hinzuzufügenden Zusatzinformation versehenen Informationsdarstellung 320; 720 enthalten sind.

Bei einem bevorzugen Ausführungsbeispiel des Einbetters 300; 700 weist der Informations-Hinzufüger 330; 740 einen Wasserzeichen-Hinzufüger 340; 340b; 340c, der ausgelegt ist, um die Eingangs-Informationsdarstellung oder eine davon abgeleitete Information mit dem einzubettenden Wasserzeichen 341; 742 zu versehen, und einen Zusatzinformations-Hinzufüger 342; 342b; 342c, der ausgelegt ist, um die Eingangs-Informationsdarstellung oder eine davon abgeleitete Information mit der hinzuzufügenden Zusatzinformation zu versehen, auf, wobei der Wasserzeichen-Hinzufüger 340; 340b; 340c und der Zusatzinformations-Hinzufüger 342; 342b; 342c konfiguriert sind, um zusammenzuwirken, um in einem Betrieb eine mit dem einzubettenden Wasserzeichen 341; 742 und der hinzuzufügenden Zusatzinformation 342; 762 versehene Informationsdarstellung zu erzeugen.

Bei einem bevorzugen Ausführungsbeispiel des Einbetters 300; 700 ist der Einbetter ausgelegt, um die Eingangs-Informationsdarstellung 310; 710 so mit der hinzuzufügenden Zusatzinformation 343; 762 zu versehen, dass die hinzuzufügende Zusatzinformation das Vorhandensein des einzubettenden Wasserzeichens 341; 742 in der mit dem einzubettenden Wasserzeichen und der hinzuzufügenden Zusatzinformation versehenen Informationsdarstellung 320; 720 signalisiert.

Bei einem bevorzugen Ausführungsbeispiel des Einbetters 300; 700 ist der Einbetter ausgelegt, um die Eingangs-Informationsdarstellung 310; 710 so mit der hinzuzufügenden Zusatzinformation 343; 762 zu versehen, dass die hinzuzufügende Zusatzinformation eine Information darüber trägt, wie viele Wasserzeichen in der mit dem einzubettenden Wasserzeichen und der hinzuzufügenden Zusatzinformation versehenen Informationsdarstellung 320; 720 enthalten sind.

Bei einem bevorzugen Ausführungsbeispiel des Einbetters 300; 700 ist der Einbetter ausgelegt, um die Eingangs-Informationsdarstellung 310; 710 so mit der hinzuzufügenden Zusatzinformation 343; 762 zu versehen, dass die hinzuzufügende Zusatzinformation zumindest einen von dem Informations-Hinzufüger 330; 740 bei dem Versehen der Eingangs-Informationsdarstellung mit dem einzubettenden Wasserzeichen verwendeten Parameter codiert.

Bei einem bevorzugen Ausführungsbeispiel des Einbetters 300; 700 ist der Einbetter ausgelegt, um die Eingangs-Informationsdarstellung so mit der hinzuzufügenden Zusatzinformation 343; 762 zu versehen, dass die hinzuzufügende Zusatzinformation 343; 762 von einem in der Eingangs-Informationsdarstellung 310; 710 enthaltenen Wasserzeichen abhängig ist.

Ein Ausführungsbeispiel der Erfindung schafft einen Einbetter 300; 700 zum Einbetten eines einzubettenden Wasserzeichens 341; 742 in eine Eingangs-Informationsdarstellung 310; 710, die ein Audiosignal repräsentiert, oder die ein Videosignal repräsentiert, oder die ein Computerprogramm repräsentiert, oder die ein Bild repräsentiert, oder die einen Text repräsentiert, mit folgenden Merkmalen: einem Informations-Hinzufüger 330; 740, der ausgelegt ist, um die Eingangs-Informationsdarstellung 310; 710 mit dem einzubettenden Wasserzeichen 341; 741 und einer hinzuzufügenden Zusatzinformation 343; 762 zu versehen, um eine mit dem einzubettenden Wasserzeichen und der hinzuzufügenden Zusatzinformation versehene Informationsdarstellung 320; 720 zu erhalten, wobei die hinzuzufügende Zusatzinformation eine beschreibende Information umfasst, die die Einbettung zumindest eines Wasserzeichens in die mit dem einzubettenden Wasserzeichen und der Zusatzinformation versehene Informationsdarstellung 320; 720 beschreibt; wobei der Einbetter einen Wasserzeichen-Informations-Erkenner 730 aufweist, der ausgelegt ist, um in der Eingangs-Informationsdarstellung 310; 710 ein Vorhandensein eines Wasserzeichens zu detektieren, und um eine Information über ein Vorhandensein eines Wasserzeichens in der Eingangs-Informationsdarstellung zu liefern; und wobei der Einbetter ausgelegt ist, um die hinzuzufügende Zusatzinformation 343; 762 in Abhängigkeit von der Information über das Vorhandensein eines Wasserzeichens in der Eingangs-Informationsdarstellung 310; 710 festzulegen.

Bei einem bevorzugen Ausführungsbeispiel des Einbetters 300; 700 ist der Wasserzeichen-Informations-Erkenner 730 ausgelegt, um das Vorhandensein einer Wasserzeichen-Synchronisationssequenz in der Eingangs-Informationsdarstellung 310; 710 zu detektieren, und um bei Vorhandensein einer Wasserzeichen-Synchronisationssequenz in der Eingangs-Informationsdarstellung eine Information zu liefern, die das Vorhandensein zumindest eines Wasserzeichens in der Eingangs-Informationsdarstellung anzeigt.

Bei einem bevorzugen Ausführungsbeispiel des Einbetters 300; 700 ist der Wasserzeichen-Informations-Erkenner 730 ausgelegt, um ein Vorhandensein einer Zusatzinformation, die eine Einbettung eines in der Eingangs-Informationsdarstellung vorhandenen Wasserzeichens beschreibt, in der Eingangs-Informationsdarstellung 310; 710 zu detektieren, und um bei Vorhandensein einer Zusatzinformation in der Eingangs-Informationsdarstellung als die Information über das Vorhandensein eines Wasserzeichens eine Information zu liefern, die auf der in der Eingangs-Informationsdarstellung vorhandenen Zusatzinformation basiert.

Bei einem bevorzugen Ausführungsbeispiel des Einbetters 300; 700 ist der Informations-Hinzufüger 330; 740 ausgelegt, um die hinzuzufügende Zusatzinformation 341; 762 in einem Zusatz-Informations-Block der Eingangs-Informationsdarstellung 310; 710, der einem Synchronisations-Informations-Block benachbart ist, hinzuzufügen.

Bei einem bevorzugen Ausführungsbeispiel des Einbetters 300; 700 ist der Informations-Hinzufüger 330; 740 ausgelegt, um die hinzuzufügende Zusatzinformation 341; 762 in einem Zeitschlitz im Anschluss an eine in der Eingangs-Informationsdarstellung 310; 710 enthaltene Synchronisationsinformation hinzuzufügen.

Bei einem bevorzugen Ausführungsbeispiel des Einbetters 300; 700 ist der Informations-Hinzufüger 330; 740 ausgelegt, um die hinzuzufügende Zusatzinformation 341; 762 in einem separaten Frequenzband, zu einer Synchronisationsinformation zeitlich überlappend, zu der Eingangs-Informationsdarstellung 310; 710 hinzuzufügen.

Ein Ausführungsbeispiel der Erfindung schafft einen Einbetter 300; 700 zum Einbetten eines einzubettenden Wasserzeichens 341; 742 in eine Eingangs-Informationsdarstellung 310; 710, die ein Audiosignal repräsentiert, oder die ein Videosignal repräsentiert, oder die ein Computerprogramm repräsentiert, oder die ein Bild repräsentiert, oder die einen Text repräsentiert, mit folgenden Merkmalen: einem Informations-Hinzufüger 330; 740, der ausgelegt ist, um die Eingangs-Informationsdarstellung 310; 710 mit dem einzubettenden Wasserzeichen 341; 742 und einer hinzuzufügenden Zusatzinformation 343; 762 zu versehen, um eine mit dem einzubettenden Wasserzeichen und der hinzuzufügenden Zusatzinformation versehene Informationsdarstellung 320; 720 zu erhalten, wobei die hinzuzufügende Zusatzinformation eine beschreibende Information umfasst, die die Einbettung zumindest eines Wasserzeichens in die mit dem einzubettenden Wasserzeichen und der Zusatzinformation versehene Informationsdarstellung 320; 720 beschreibt; wobei der Einbetter ausgelegt ist, um Ressourcen für eine Einbettung des einzubettenden Wasserzeichens 341; 742 in Abhängigkeit von einer Information über eine Anzahl von in der Eingangs-Informationsdarstellung 310; 710 bereits enthaltenen Wasserzeichen auszuwählen.

Bei einem bevorzugen Ausführungsbeispiel des Einbetters 300; 700 weist der Einbetter einen Einbettungsparameter-Bestimmer 750 auf, der ausgelegt ist, um eine Ableitungsfunktion in Abhängigkeit von der Information über die Anzahl von in der Eingangs-Informationsdarstellung 310; 710 bereits enthaltenen Wasserzeichen einmal oder mehrmals auf einen Anfangswert anzuwenden, um einen Einbettungsparameter zur Einbettung des Wasserzeichens in die Eingangs-Informationsdarstellung zu erhalten, und wobei der Informations-Hinzufüger 330; 740 ausgelegt ist, um die Eingangs-Informationsdarstellung 310; 710 mit dem einzubettenden Wasserzeichen unter Verwendung der Einbettungsparameter zu versehen.

Bei einem bevorzugen Ausführungsbeispiel des Einbetters 300; 700 ist der Einbettungsparameter-Bestimmer 750 ausgelegt, um einen durch einmaliges oder mehrmaliges Anwenden der Ableitungsfunktion auf den Anfangswert erhaltenen Funktionswert als Startwert für einen Berechnung eines Einbettungscodes gemäß einer vorgegebenen Einbettungscode-Berechnungsvorschrift zu verwenden.

Bei einem bevorzugen Ausführungsbeispiel des Einbetters 300; 700 ist die Ableitungsfunktion eine kryptographische Einwegsfunktion.

Ein Ausführungsbeispiel der Erfindung schafft einen Detektor 400; 800 zum Detektieren von zumindest einem Wasserzeichen in einer Eingangs-Informationsdarstellung 410; 810, die ein Audiosignal repräsentiert, oder die ein Videosignal repräsentiert, oder die ein Computerprogramm repräsentiert, oder die ein Bild repräsentiert, oder die einen Text repräsentiert, mit folgenden Merkmalen: einem Einbettungsinformations-Extraktor, der ausgelegt ist, um eine Einbettungsinformation, die eine beschreibende Information im Hinblick auf die Einbettung zumindest eines Wasserzeichens in die Eingangs-Informationsdarstellung umfasst, aus der Eingangs-Informationsdarstellung zu extrahieren; und einem Wasserzeichen-Extraktor 630; 840, der ausgelegt ist, um eine oder mehrere in der Eingangs-Informationsdarstellung 410; 810 enthaltene Wasserzeichen in Abhängigkeit von der Einbettungsinformation zu extrahieren; wobei der Einbettungsinformations-Extraktor 420; 830 ausgelegt ist, um als die Einbettungsinformation eine Zusatzinformation in der Eingangs-Informationsdarstellung 410; 810 zu detektieren, die eine Information über eine Anzahl von in der Eingangs-Informationsdarstellung eingebetteten Wasserzeichen umfasst, und wobei der Detektor ausgelegt ist, um in Abhängigkeit von der Zusatzinformation festzulegen, wie viele Wasserzeichen aus der Eingangs-Informationsdarstellung zu extrahieren sind.

Bei einem bevorzugten Ausführungsbeispiel des Detektors 400; 800 ist der Einbettungsinformations-Extraktor 420; 830 ausgelegt, um als die Einbettungsinformation eine Zusatzinformation in der Informationsdarstellung 410; 810 zu detektieren, die eine Information im Hinblick auf eine Einbettung zumindest eines Wasserzeichens in die Informationsdarstellung umfasst, und der Detektor ist ausgelegt, um zumindest einen Extraktionsparameter für eine Extraktion zumindest eines in der Eingangs-Informationsdarstellung 410; 810 enthaltenen Wasserzeichens in Abhängigkeit von der Information im Hinblick auf die Einbettung zumindest eines Wasserzeichens auszuwählen.

Bei einem bevorzugten Ausführungsbeispiel des Detektors 400; 800 ist der Einbettungsinformations-Extraktor 420; 830 ausgelegt, um als die Einbettungsinformation eine Zusatzinformation in der Eingangs-Informationsdarstellung 410; 810 zu detektieren, die eine Zuordnung eines Zeitschlitzes der Eingangs-Informationsdarstellung zu einem durch den Wasserzeichen-Extraktor 430; 840 aus der Eingangs-Informationsdarstellung 410; 810 zu extrahierenden Wasserzeichen beschreibt, und der Detektor ist ausgelegt, um einen Zeitschlitz für die Extraktion des zu extrahierenden Wasserzeichens in Abhängigkeit von der Zusatzinformation auszuwählen.

Bei einem bevorzugten Ausführungsbeispiel des Detektors 400; 800 ist der Einbettungsinformations-Extraktor 420; 830 ausgelegt, um als die Einbettungsinformation eine Zusatzinformation in der Eingangs-Informationsdarstellung 410; 810 zu detektieren, die eine Zuordnung eines Frequenzbandes der Eingangs-Informationsdarstellung zu einem durch den Wasserzeichen-Extraktor 430; 840 aus der Eingangs-Informationsdarstellung 410; 810 zu extrahierenden Wasserzeichen beschreibt, und der Detektor ist ausgelegt, um ein Frequenzband für die Extraktion des zu extrahierenden Wasserzeichens in Abhängigkeit von der Zusatzinformation auszuwählen.

Bei einem bevorzugten Ausführungsbeispiel des Detektors 400; 800 ist der Einbettungsinformations-Extraktor 420; 830 ausgelegt, um als die Einbettungsinformation eine Zusatzinformation in der Eingangs-Informationsdarstellung 410; 810 zu detektieren, die eine Zuordnung eines Extraktionscodes zu einem durch den Wasserzeichen-Extraktor 430; 840 aus der Eingangs-Informationsdarstellung 410; 810 zu extrahierenden Wasserzeichen beschreibt, und der Detektor ist ausgelegt, um einen Extraktionscode für die Extraktion des zu extrahierenden Wasserzeichens in Abhängigkeit von der Zusatzinformation auszuwählen.

Bei einem bevorzugten Ausführungsbeispiel des Detektors 400; 800 ist der Einbettungsinformations-Extraktor 420; 830 ausgelegt, um als die Einbettungsinformation eine Zusatzinformation in der Eingangs-Informationsdarstellung 410; 810 zu detektieren, die eine Information über eine Anzahl von in der Eingangs-Informationsdarstellung eingebetteten Wasserzeichen umfasst, und der Detektor ist ausgelegt, um in Abhängigkeit von der Zusatzinformation festzulegen, wie viele Wasserzeichen aus der Eingangs-Informationsdarstellung zu extrahieren sind.

Bei einem bevorzugten Ausführungsbeispiel des Detektors 400; 800 ist der Einbettungsinformations-Extraktor 420; 830 ausgelegt, um einen vordefinierten Zeitschlitz der Eingangs-Informationsdarstellung 410; 810, der sich an eine Synchronisationsinformation in der Eingangs-Informationsdarstellung anschließt, nach der Zusatzinformation zu durchsuchen.

Bei einem bevorzugten Ausführungsbeispiel des Detektors 400; 800 ist der Einbettungsinformations-Extraktor 420; 830 ausgelegt, um in der Eingangs-Informationsdarstellung 410; 810 mehrere Einbettungs-Informations-Einheiten zu identifizieren, wobei die Einbettungs-Informations-Einheiten verschiedenen Wasserzeicheneinbettungen in die Eingangs-Informationsdarstellung zugeordnet sind; und der Einbettungsinformations-Extraktor 420; 830 ist ausgelegt, um eine aktuellste Einbettungs-Informations-Einheit aus der Mehrzahl von identifizierten Einbettungs-Informations-Einheiten auszuwählen, und um die Zusatzinformation von der aktuellsten Einbettungs-Informations-Einheit abzuleiten.

Bei einem bevorzugten Ausführungsbeispiel des Detektors 400; 800 ist der Einbettungsinformations-Extraktor 420; 830 ausgelegt, um in der Eingangs-Informationsdarstellung 410; 810 mehrere Einbettungs-Informations-Einheiten zu identifizieren, die verschiedene Wasserzeichen-Anzahlen beschreiben, und um eine Einbettungs-Informationseinheit, die eine höchste Wasserzeichen-Anzahl beschreibt, als eine aktuellste Einbettungs-Informations-Einheit auszuwählen.

Bei einem bevorzugten Ausführungsbeispiel des Detektors 400; 800 ist der Einbettungsinformations-Extraktor 420; 830 ausgelegt, um als die Einbettungsinformation eine zu einem zu extrahierenden Wasserzeichen gehörige Wasserzeichen-Nummer aus der Eingangs-Informationsdarstellung 410; 810 zu extrahieren; wobei der Detektor einen Detektionsparameter-Bestimmer 850 aufweist, der ausgelegt ist, um eine Ableitungsfunktion in Abhängigkeit von der Wasserzeichen-Nummer einmal oder mehrmals auf einen Anfangswert anzuwenden, um einen Extraktionsparameter zur Extraktion des zu extrahierenden Wasserzeichens aus der Eingangs-Informationsdarstellung zu erhalten; und wobei der Wasserzeichen-Extraktor 430; 840 ausgelegt ist, um das zu extrahierende Wasserzeichen unter Verwendung des Extraktionsparameters aus der Eingangs-Informationsdarstellung zu extrahieren.

Bei einem bevorzugten Ausführungsbeispiel des Detektors 400; 800 gibt die Wasserzeichen-Nummer an, wie oft die Ableitungsfunktion auf den Anfangswert anzuwenden ist.

Bei einem bevorzugten Ausführungsbeispiel des Detektors 400; 800 ist die Ableitungsfunktion eine kryptographische Einwegsfunktion.

Ein Ausführungsbeispiel der Erfindung schafft ein Informationssignal 770, das zumindest ein Wasserzeichen und eine beschreibende Information im Hinblick auf die Einbettung des zumindest einen Wasserzeichens in das Informationssignal umfasst; wobei das Informationssignal ein Audiosignal, ein Bildsignal, ein Textsignal oder ein Computerprogrammsignal umfasst; und wobei die beschreibende Information eine Information darüber trägt, wie viele Wasserzeichen in dem Informationssignal enthalten sind.

Bei einem bevorzugten Ausführungsbeispiel des Informationssignals 770 beschreibt die beschreibende Information eine Zuordnung eines Zeitschlitzes des Informationssignals zu dem zumindest einen Wasserzeichen, eine Zuordnung eines Frequenzbandes des Informationssignals zu dem zumindest einen Wasserzeichen, eine Zuordnung eines Extraktionscodes zu dem zumindest einen Wasserzeichen oder eine Anzahl von in dem Informationssignal eingebetteten Wasserzeichen.

**Patentansprüche**

1. Einbetter (300; 700) zum Einbetten eines einzubettenden Wasserzeichens (341; 742) in eine Eingangs-Informationsdarstellung (310; 710), die ein Audiosignal repräsentiert, oder die ein Videosignal repräsentiert, oder die ein Computerprogramm repräsentiert, oder die ein Bild repräsentiert, oder die einen Text repräsentiert, mit folgenden Merkmalen:

   einem Informations-Hinzufüger (330; 740), der ausgelegt ist, um die Eingangs-Informationsdarstellung (310; 710) mit dem einzubettenden Wasserzeichen (341; 742) und einer hinzuzufügenden Zusatzinformation (343; 762) zu versehen, um eine mit dem einzubettenden Wasserzeichen und der hinzuzufügenden Zusatzinformation versehene Informationsdarstellung (320; 720) zu erhalten,
   wobei die hinzuzufügende Zusatzinformation eine beschreibende Information umfasst, die die Einbettung zumindest eines Wasserzeichens in die mit dem einzubettenden Wasserzeichen und der Zusatzinformation versehene Informationsdarstellung (320; 720) beschreibt;
   wobei der Einbetter ausgelegt ist, um die Eingangs-Informationsdarstellung (310; 710) so mit der hinzuzufügenden Zusatzinformation (343; 762) zu versehen, dass die hinzuzufügende Zusatzinformation eine Information darüber trägt, wie viele Wasserzeichen in der mit dem einzubettenden Wasserzeichen und der hinzuzufügenden Zusatzinformation versehenen Informationsdarstellung (320; 720) enthalten sind.

2. Einbetter (300; 700) zum Einbetten eines einzubettenden Wasserzeichens (341; 742) in eine Eingangs-Informationsdarstellung (310; 710), die ein Audiosignal repräsentiert, oder die ein Videosignal repräsentiert, oder die ein Computerprogramm repräsentiert, oder die ein Bild repräsentiert, oder die einen Text repräsentiert, mit folgenden Merkmalen:

   einem Informations-Hinzufüger (330; 740), der ausgelegt ist, um die Eingangs-Informationsdarstellung (310;

710) mit dem einzubettenden Wasserzeichen (341; 742) und einer hinzuzufügenden Zusatzinformation (343; 762) zu versehen, um eine mit dem einzubettenden Wasserzeichen und der hinzuzufügenden Zusatzinformation versehene Informationsdarstellung (320; 720) zu erhalten,

wobei die hinzuzufügende Zusatzinformation eine beschreibende Information umfasst, die die Einbettung zumindest eines Wasserzeichens in die mit dem einzubettenden Wasserzeichen und der Zusatzinformation versehene Informationsdarstellung (320; 720) beschreibt;

wobei der Einbetter ausgelegt ist, um Ressourcen für eine Einbettung des einzubettenden Wasserzeichens (341; 742) in Abhängigkeit von einer Information über eine Anzahl von in der Eingangs-Informationsdarstellung (310; 710) bereits enthaltenen Wasserzeichen auszuwählen.

3. Detektor (400; 800) zum Detektieren von zumindest einem Wasserzeichen in einer Eingangs-Informationsdarstellung (410; 810), die ein Audiosignal repräsentiert, oder die ein Videosignal repräsentiert, oder die ein Computerprogramm repräsentiert, oder die ein Bild repräsentiert, oder die einen Text repräsentiert, mit folgenden Merkmalen:

einem Einbettungsinformations-Extraktor, der ausgelegt ist, um eine Einbettungsinformation, die eine beschreibende Information im Hinblick auf die Einbettung zumindest eines Wasserzeichens in die Eingangs-Informationsdarstellung umfasst, aus der Eingangs-Informationsdarstellung zu extrahieren; und

einem Wasserzeichen-Extraktor (630; 840), der ausgelegt ist, um eine oder mehrere in der Eingangs-Informationsdarstellung (410; 810) enthaltene Wasserzeichen in Abhängigkeit von der Einbettungsinformation zu extrahieren;

wobei der Einbettungsinformations-Extraktor (420; 830) ausgelegt ist, um als die Einbettungsinformation eine Zusatzinformation in der Eingangs-Informationsdarstellung (410; 810) zu detektieren, die eine Information über eine Anzahl von in der Eingangs-Informationsdarstellung eingebetteten Wasserzeichen umfasst, und

wobei der Detektor ausgelegt ist, um in Abhängigkeit von der Zusatzinformation festzulegen, wie viele Wasserzeichen aus der Eingangs-Informationsdarstellung zu extrahieren sind.

4. Verfahren (1300) zum Einbetten eines einzubettenden Wasserzeichens in eine Eingangs-Informationsdarstellung, die ein Audiosignal repräsentiert, oder die ein Videosignal repräsentiert, oder die ein Computerprogramm repräsentiert, oder die ein Bild repräsentiert, oder die einen Text repräsentiert, mit folgendem Schritt:

Versehen (1310) der Eingangs-Informationsdarstellung mit einem Wasserzeichen und einer hinzuzufügenden Zusatzinformation, um eine mit dem Wasserzeichen und der hinzuzufügenden Zusatzinformation versehene Informationsdarstellung zu erhalten,

wobei die hinzuzufügende Zusatzinformation eine beschreibende Information im Hinblick auf eine Einbettung zumindest eines Wasserzeichens in die Eingangs-Informationsdarstellung umfasst;

wobei die Eingangs-Informationsdarstellung (310; 710) so mit der hinzuzufügenden Zusatzinformation (343; 762) versehen wird, dass die hinzuzufügende Zusatzinformation eine Information darüber trägt, wie viele Wasserzeichen in der mit dem einzubettenden Wasserzeichen und der hinzuzufügenden Zusatzinformation versehenen Informationsdarstellung (320; 720) enthalten sind.

5. Verfahren (1300) zum Einbetten eines einzubettenden Wasserzeichens in eine Eingangs-Informationsdarstellung, die ein Audiosignal repräsentiert, oder die ein Videosignal repräsentiert, oder die ein Computerprogramm repräsentiert, oder die ein Bild repräsentiert, oder die einen Text repräsentiert, mit folgendem Schritt:

Versehen (1310) der Eingangs-Informationsdarstellung mit einem Wasserzeichen und einer hinzuzufügenden Zusatzinformation, um eine mit dem Wasserzeichen und der hinzuzufügenden Zusatzinformation versehene Informationsdarstellung zu erhalten,

wobei die hinzuzufügende Zusatzinformation eine beschreibende Information im Hinblick auf eine Einbettung zumindest eines Wasserzeichens in die Eingangs-Informationsdarstellung umfasst;

wobei Ressourcen für eine Einbettung des einzubettenden Wasserzeichens (341; 742) in Abhängigkeit von einer Information über eine Anzahl von in der Eingangs-Informationsdarstellung (310; 710) bereits enthaltenen Wasserzeichen ausgewählt werden.

6. Verfahren (1400) zum Detektieren von zumindest einem Wasserzeichen in einer Eingangs-Informationsdarstellung, die ein Audiosignal repräsentiert, oder die ein Videosignal repräsentiert, oder die ein Computerprogramm repräsentiert, oder die ein Bild repräsentiert, oder die einen Text repräsentiert, mit folgenden Schritten:

Extrahieren (1410) einer Einbettungsinformation, die eine beschreibende Information im Hinblick auf die Einbettung zumindest eines Wasserzeichens in die Eingangs-Informationsdarstellung umfasst, aus der Eingangs-Informationsdarstellung; und

Extrahieren (1420) einer oder mehrerer in der Eingangs-Informationsdarstellung enthaltener Wasserzeichen in Abhängigkeit von der Einbettungsinformation;

wobei als die Einbettungsinformation eine Zusatzinformation in der Eingangs-Informationsdarstellung (410; 810) detektiert wird, die eine Information über eine Anzahl von in der Eingangs-Informationsdarstellung eingebetteten Wasserzeichen umfasst, und

wobei in Abhängigkeit von der Zusatzinformation festgelegt wird, wie viele Wasserzeichen aus der Eingangs-Informationsdarstellung zu extrahieren sind.

7. Computerprogramm zur Durchführung eines Verfahrens gemäß einem der Ansprüche 4 bis 6, wenn das Computerprogramm auf einem Computer abläuft.

8. Informationssignal (770), das zumindest ein Wasserzeichen und eine beschreibende Information im Hinblick auf die Einbettung des zumindest einen Wasserzeichens in das Informationssignal umfasst;

wobei das Informationssignal ein Audiosignal, ein Bildsignal, ein Textsignal oder ein Computerprogrammsignal umfasst; und

wobei die beschreibende Information eine Information darüber trägt, wie viele Wasserzeichen in dem Informationssignal enthalten sind.

**Claims**

1. An embedder (300; 700) for embedding a watermark (341; 742) to be embedded into an input information representation (310; 710) which represents an audio signal, or which represents a video signal, or which represents a computer program, or which represents an image, or which represents a text, comprising:

an information adder (330; 740) implemented to provide the input information representation (310; 710) with the watermark (341; 742) to be embedded and with additional information (343; 762) to be added in order to obtain an information representation (320; 720) provided with the watermark to be embedded and with the additional information to be added,

wherein the additional information to be added comprises descriptive information describing the embedding of at least one watermark into the information representation (320; 720) provided with the watermark to be embedded and with the additional information;

wherein the embedder is implemented to provide the input information representation (310; 710) with the additional information (343; 762) to be added such that the additional information to be added carries information about how many watermarks are contained within the information representation (320; 720) provided with the watermark to be embedded and with the additional information to be added.

2. The embedder (300; 700) for embedding a watermark (341; 742) to be embedded into an input information representation (310; 710) which represents an audio signal, or which represents a video signal, or which represents a computer program, or which represents an image, or which represents a text, comprising:

an information adder (330; 740) implemented to provide the input information representation (310; 710) with the watermark (341; 742) to be embedded and with additional information (343; 762) to be added in order to obtain an information representation (320; 720) provided with the watermark to be embedded and with the additional information to be added,

wherein the additional information to be added comprises descriptive information describing the embedding of at least one watermark into the information representation (320; 720) provided with the watermark to be embedded and with the additional information;

wherein the embedder is implemented to select resources for embedding of the watermark (341; 742) to be embedded as a function of information about a number of watermarks already contained within the input information representation (310; 710).

3. A detector (400; 800) for detecting at least one watermark in an input information representation (410; 810) which represents an audio signal, or which represents a video signal, or which represents a computer program, or which represents an image, or which represents a text, comprising:

an embedding information extractor implemented to extract, from the input information representation, embedding information including descriptive information with regard to the embedding of at least one watermark into the input information representation; and

a watermark extractor (630; 840) implemented to extract one or several watermarks contained in the input information representation (410; 810) as a function of the embedding information;

wherein the embedding information extractor (420; 830) is implemented to detect additional information in the input information representation (410; 810) as the embedding information, said additional information comprising information about a number of watermarks embedded within the input information representation, and

wherein the detector is implemented to specify, as a function of the additional information, how many watermarks are to be extracted from the input information representation.

4. A method (1300) of embedding a watermark to be embedded into an input information representation which represents an audio signal, or which represents a video signal, or which represents a computer program, or which represents an image, or which represents a text, comprising the following steep:

providing (1310) the input information representation with a watermark and with additional information to be added in order to obtain an information representation provided with the watermark and with the additional information to be added,

wherein the additional information to be added includes descriptive information with regard to embedding of at least one watermark into the input information representation;

wherein the input information representation (310; 710) is provided with the additional information (343; 762) to be added such that the additional information to be added carries information about how many watermarks are contained within the information representation (320; 720) provided with the watermark to be embedded and with the additional information to be added.

5. A method (1300) of embedding a watermark to be embedded into an input information representation which represents an audio signal, or which represents a video signal, or which represents a computer program, or which represents an image, or which represents a text, comprising the following step:

providing (1310) the input information representation with a watermark and with additional information to be added in order to obtain an information representation provided with the watermark and with the additional information to be added,

wherein the additional information to be added includes descriptive information with regard to embedding of at least one watermark into the input information representation;

wherein resources for embedding of the watermark (341; 742) to be embedded are selected as a function of information about a number of watermarks already contained within the input information representation (310; 710).

6. A method (1400) of detecting at least one watermark in an input information representation which represents an audio signal, or which represents a video signal, or which represents a computer program, or which represents an image, or which represents a text, comprising the following steps:

extracting (1410), from the input information representation, embedding information including descriptive information with regard to the embedding of at least one watermark into the input information representation; and

extracting (1420) one or several watermarks contained in the input information representation as a function of the embedding information;

wherein additional information in the input information representation (410; 810) is detected as the embedding information, said additional information comprising information about a number of watermarks embedded within the input information representation, and

wherein a specification is made, as a function of the additional information, as to how many watermarks are to be extracted from the input information representation.

7. A computer program for performing a method according to any of claims 4 to 6, when the computer program runs on a computer.

8. An information signal (770) comprising at least one watermark and descriptive information with regard to embedding of the at least one watermark into the information signal;

wherein the information signal comprises an audio signal, an image signal, a text signal, or a computer program signal; and

wherein the descriptive information carries information about how many watermarks are contained within the information signal.

**Revendications**

1. Dispositif d'insertion (300; 700) destiné à l'insertion d'un filigrane à insérer (341; 742) dans une représentation d'information d'entrée (310; 710) qui représente un signal audio ou qui représente un signal vidéo ou qui représente un programme d'ordinateur ou qui représente une image ou qui représente un texte, aux caractéristiques suivantes:

   un additionneur d'information (330; 740) qui est adapté pour pourvoir la représentation d'information d'entrée (310; 710) du filigrane à insérer (341; 742) et d'une information additionnelle (343; 762) à ajouter, pour obtenir une représentation d'information (320; 720) pourvue du filigrane à insérer et de l'information additionnelle à ajouter,
   dans lequel l'information additionnelle à ajouter comporte une information descriptive qui décrit l'insertion d'au moins un filigrane dans la représentation d'information (320; 720) pourvue du filigrane à intégrer et de l'information additionnelle;
   dans lequel le dispositif d'insertion est réalisé pour pourvoir la représentation d'information d'entrée (310; 710) de l'information additionnelle (343; 762) à ajouter de sorte que l'information additionnelle à ajouter porte une information sur la quantité de filigranes qui sont contenus dans la représentation d'information (320; 720) pourvue du filigrane à insérer et de l'information additionnelle à ajouter.

2. Dispositif d'insertion (300; 700) destiné à l'insertion d'un filigrane à insérer (341; 742) dans une représentation d'information d'entrée (310; 710) qui représente un signal audio ou qui représente un signal vidéo ou qui représente un programme d'ordinateur ou qui représente une image ou qui représente un texte, aux caractéristiques suivantes:

   un additionneur d'information (330; 740) qui est réalisé pour pourvoir la représentation d'information d'entrée (310; 710) du filigrane à insérer (341; 742) et d'une information additionnelle (343; 762) à ajouter, pour obtenir une représentation d'information (320; 720) pourvue du filigrane à insérer et de l'information additionnelle à ajouter,
   dans lequel l'information additionnelle à ajouter comporte une information descriptive qui décrit l'insertion d'au moins un filigrane dans la représentation d'information (320; 720) pourvue du filigrane à insérer et de l'information additionnelle;
   dans lequel le dispositif d'insertion est conçu pour sélectionner les ressources pour une insertion du filigrane à insérer (341; 742) en fonction d'une information sur un nombre de filigranes déjà contenus dans la représentation d'information d'entrée (310; 710).

3. Détecteur (400; 800) pour détecter au moins un filigrane dans une représentation d'information d'entrée (410; 810) qui représente un signal audio ou qui représente un signal vidéo ou qui représente un programme d'ordinateur ou qui représente une image ou qui représente un texte, aux caractéristiques suivantes:

   un extracteur d'information d'insertion qui est réalisé pour extraire de la représentation d'information d'entrée une information d'insertion qui comporte une information descriptive en ce qui concerne l'insertion d'au moins un filigrane dans la représentation d'information d'entrée; et
   un extracteur de filigrane (630; 840) qui est conçu pour extraire un ou plusieurs filigranes contenus dans la représentation d'information d'entrée (410; 810) en fonction de l'information d'insertion;
   dans lequel l'extracteur d'information d'insertion (420; 830) est conçu pour détecter, comme information d'insertion, une information additionnelle dans la représentation d'information d'entrée (410; 810) qui comporte une information sur un nombre de filigranes incorporés dans la représentation de l'information d'entrée, et
   dans lequel le détecteur est conçu pour déterminer, en fonction de l'information additionnelle, la quantité de filigranes qui doivent être extraits de la représentation d'information d'entrée.

4. Procédé (1300) pour insérer un filigrane à insérer dans une représentation d'information d'entrée qui représente un signal audio, ou qui représente un signal vidéo, ou qui représente un programme d'ordinateur, ou qui représente une image, ou qui représente un texte, à l'étape suivante consistant à:

   pourvoir (1310) la représentation d'information d'entrée d'un filigrane et d'une information additionnelle à ajouter, pour obtenir une représentation d'information pourvue du filigrane et de l'information additionnelle à ajouter, dans lequel l'information additionnelle à ajouter comporte une information descriptive en ce qui concerne une insertion d'au moins un filigrane dans la représentation d'information d'entrée;

dans lequel la représentation d'information d'entrée (310; 710) est pourvue de l'information additionnelle à ajouter (343; 762) de sorte que l'information additionnelle à ajouter porte une information sur la quantité de filigranes qui sont contenus dans la représentation d'information (320; 720) pourvue du filigrane à insérer et de l'information additionnelle à ajouter.

5. Procédé (1300) pour insérer un filigrane à insérer dans une représentation d'information d'entrée qui représente un signal audio, ou qui représente un signal vidéo, ou qui représente un programme d'ordinateur, ou qui représente une image, ou qui représente un texte, à l'étape suivante consistant à:

pourvoir (1310) la représentation d'information d'entrée d'un filigrane et d'une information additionnelle à ajouter, pour obtenir une représentation d'information pourvue du filigrane et de l'information additionnelle à ajouter, dans lequel l'information additionnelle à ajouter comporte une information descriptive en ce qui concerne une insertion d'au moins un filigrane dans la représentation d'information d'entrée;

dans lequel les ressources pour une insertion du filigrane à insérer (341; 742) sont sélectionnées en fonction d'une information sur un nombre de filigranes déjà contenus dans la représentation d'information d'entrée (310; 710).

6. Procédé (1300) pour insérer au moins un filigrane à insérer dans une représentation d'information d'entrée qui représente un signal audio, ou qui représente un signal vidéo, ou qui représente un programme d'ordinateur, ou qui représente une image, ou qui représente un texte, aux étapes suivantes consistant à:

extraire (1410) de la représentation d'information d'entrée une information d'insertion qui comporte une information descriptive en ce qui concerne l'insertion d'au moins un filigrane dans la représentation d'information d'entrée; et

extraire (1420) un ou plusieurs filigranes contenus dans la représentation d'information d'entrée en fonction de l'information d'insertion;

dans lequel est détectée, comme information d'insertion, une information additionnelle dans la représentation d'information d'entrée (410; 810) qui comporte une information sur un nombre de filigranes insérés dans la représentation d'information d'entrée, et

dans lequel est déterminé, en fonction de l'information additionnelle, la quantité de filigranes qui doivent être extraits de la représentation d'information d'entrée.

7. Programme d'ordinateur pour la mise en oeuvre d'un procédé selon l'une des revendications 4 à 6 lorsque le programme d'ordinateur est exécuté sur un ordinateur.

8. Signal d'information (770) comportant au moins un filigrane et une information descriptive en ce qui concerne l'insertion de l'au moins un filigrane dans le signal d'information;

dans lequel le signal d'information comporte un signal audio, un signal d'image, un signal de texte ou un signal de programme d'ordinateur; et

dans lequel l'information descriptive porte une information sur la quantité de filigranes qui sont contenus dans le signal d'information.

FIGUR 1

EP 2 266 114 B1

EP 2 266 114 B1

200

230

Information über
erstes Wasserzeichen

mit Wasserzeichen
versehene Informationsdarstellung

210

Wasserzeichenextraktor

232

Information über
zweites Wasserzeichen

234

Detektions-
Informations-
Erkenner

Information über
mehrfach verwendbare
Wasserzeicheninformation

222

220

FIGUR 2

330

Informations-Hinzufüger

344

Eingangs-
Informationsdarstellung

340

Wasserzeichen-
Hinzufüger

341 hinzuzufügendes Wasserzeichen

mit Wasserzeichen und
Zusatzinformation versehene
Informationsdarstellung

310

342

Zusatzinformations-
Hinzufüger

320

343 hinzuzufügende Zusatzinformation

346

**FIGUR 3A**

EP 2 266 114 B1

330b

Informations-Hinzufüger

Eingangs-
Informationsdarstellung

310

340b

Wasserzeichen-
Hinzufüger

341 hinzuzufügendes
Wasserzeichen

344b

342b

Zusatz-
informations-
Hinzufüger

343 hinzuzufügende
Zusatzinformation

mit Wasserzeichen und
Zusatzinformation versehene
Informationsdarstellung

320

## FIGUR 3B

EP 2 266 114 B1

Informations-Hinzufüger

342c

340c

Eingangs-
Informationsdarstellung

| Zusatz-
informations-
Hinzufüger |

| Wasserzeichen-
Hinzufüger |

mit Wasserzeichen und
Zusatzinformation versehene
Informationsdarstellung

310

343

hinzuzufügende
Zusatzinformation

341

hinzuzufügendes
Wasserzeichen

320

FIGUR 3C

400

430

mit dem Wasserzeichen versehene
Informationsdarstellung

Wasserzeichenextraktor

Information über
Wasserzeichen

410

432

Einbettungs-
informations-
Extraktor

beschreibende Information
im Hinblick auf die
Einbettung zumindest eines
Wasserzeichens in die
Informationsdarstellung

422

420

FIGUR 4

FIGUR 5

EP 2 266 114 B1

600

mit Wasserzeichen
versehene Informationsdarstellung

610

Wasserzeichenextraktor

Information über
ein Wasserzeichen

634

630

620

Detektionsparameter-Bestimmer

Anfangswert

Einwegsfunktion

Detektionsparameter

624

622

626

640

Indexparameter
(optional)

FIGUR 6

# FIGUR 7A

EP 2 266 114 B1

770

Frequenzband

774

777g — opt.: Zusatzinfo

777f — SYNC | opt.: Zusatzinfo 1

777e — SYNC | opt.: Zusatzinfo 2

777d — SYNC | opt.: Zusatzinfo 3

777c — SYNC | opt.: Zusatzinfo 4

777b — SYNC | opt.: Zusatzinfo 5

777a — SYNC | opt.: Zusatzinfo 6

776a  776b  776c  776d  776e  776f

Zeit

772

778a — Wasserzeichen 1

778b — Wasserzeichen 2

778c — Wasserzeichen 3

778d — Wasserzeichen 4

# FIGUR 7B

780

782 —〜— Wert 1    ◂—— Anfangswert 1

Anwendung der
Einwegsfunktion

784 —〜— Wert 2

Anwendung der
Einwegsfunktion

786 —〜— Wert 3    ◂—— Anfangswert 2

Anwendung der
Einwegsfunktion

788 —〜— Wert 4

Anwendung der
Einwegsfunktion

789 —〜— Wert 5

# FIGUR 7C

790

792 ⟶ Anfangswert

einmalige oder mehrmalige
Anwendung der Einwegsfunktion

794 ⟶ Zwischenergebnis ← Startparameter für
Einbettungscode - Erzeugung

Einbettungscode - Erzeugung

794 ⟶ Einbettungscode /
Detektionscode

# FIGUR 7D

FIGUR 8

mit Wasserzeichen versehene
Informationsdarstellung — 810

800 ↓

840 Wasserzeichen-extraktor

820 Information über erstes Wasserzeichen

822 Information über zweites Wasserzeichen

830 Wasserzeichen-Informations-Erkenner

Erkenner für mehrfach verwend-bare Wasserzeichen-Information

832 Information über mehrach verwend-bare Wasserzeichen-Information

Erkenner für Zusatzinformation

Zusatzinformation — 834

Erkenner für Einbettungsparame-ter eingebetteter Wasserzeichen

836 Information über Einbettungsparameter

Erkenner für Anzahl eingebetteter Wasserzeichen

Information über Anzahl eingebetteter Wasserzeichen — 838

Einbettungs-parameter-Bestimmer — 852 — 850

Einbettungs-Parameter, z.B.
- Einbettungsverfahren
- Einbettungscode
- Einbettungs-Zeitschlitz
- Einbettungs-Frequenzband

Ablauf

Ablauf-steuerung — 860

EP 2 266 114 B1

900

910 — Daten-eingang

920 — FEC Zeit-ver-schachte-lung / Spreizen-C

Bit 1 — $922_1$
Bit 2 — $922_2$
Bit m-1 — $922_{m-1}$
Bit m — $922_m$

Auswählen Sequenz 1 oder 2 / Spreizen M
$930_1$ ... $932_1$
$930_2$ ... $932_2$
$930_{m-1}$ ... $932_{m-1}$
$930_m$ ... $932_m$

Pegel einstellen — $940_1$, $940_2$, $940_{m-1}$, $940_m$

$942_1$, $942_2$, $942_{m-1}$, $942_m$

unbenutze Bänder (0 einfügen)

950 — Synthese-filterbank

unbenutzes Band (0 einfügen)

Pegel einstellen — 990

982 — Synchronisations-sequenzen erzeugen — 980

Pegel-kontrolle — 972

Psycho-Akkustik — 970

952 — Audiosignal verborgene Daten

960

962 — Haupt-Audiosignal

964 — Audio-signal

**FIGUR 9**

51

FIGUR 10

1100

Erkennen einer bereits in der
Informationsdarstellung erhaltenen
Wasserzeichen-Information

~1110

Versehen der Informationsdarstellung
mit dem Wasserzeichen in Abhängigkeit
von der in der Informationsdarstellung
erkannten Wasserzeichen-Information,
um eine mit dem einzubettenden
Wasserzeichen versehene
Informationsdarstellung zu erhaten

~1120

# FIGUR 11

1200

Identifizieren einer mehrfach-verwendbaren
Wasserzeichen-Information in einer
mit einem Wasserzeichen versehenen
Informationsdarstellung — 1210

Extrahieren eines ersten Wasserzeichens
aus der Informationsdarstellung
unter Ausnutzung der
mehrfach-verwendbaren
Wasserzeichen-Information — 1220

Extrahieren eines zweiten Wasserzeichens
aus der Informationsdarstellung
unter Ausnutzung der
mehrfach-verwendbaren
Wasserzeichen-Information — 1230

# FIGUR 12

1300

Versehen einer Eingangs-
Informationsdarstellung mit einem
Wasserzeichen und einer
hinzuzufügenden Zusatzinformation,
um eine mit dem Wasserzeichen
und der hinzuzufügenden
Zusatzinformation versehene
Informationsdarstellung zu erhalten,
wobei die hinzuzufügenden Zusatzinformation
eine beschreibende Information im
Hinblick auf die Einbettung zumindest
eines Wasserzeichens in die
Eingangs-Informationsdarstellung
umfasst

～1310

FIGUR 13

1400

Extrahieren einer Einbettungsinformation,
die eine beschreibende Information im
Hinblick auf die Einbettung zumindest eines
Wasserzeichens in die Informationsdarstellung umfasst, aus der
Informationsdarstellung — 1410

Extrahieren eines oder mehrerer
in der Informationsdarstellung
enthaltener Wasserzeichen
in Abhängigkeit von der
Einbettungsinformation — 1420

# FIGUR 14

1500

Einmaliges oder mehrmaliges Anwenden
einer Ableitungsfunktion auf einen
Anfangswert, um einen
Einbettungsparameter zur Einbettung
des Wasserzeichens in die
Informationsdarstellung zu erhalten

1510

Versehen der Informatiosdarstellung
mit dem Wasserzeichen unter
Verwendung des
Einbettungsparameters

1520

# FIGUR 15

1600

Einmaliges oder mehrmaliges Anwenden
einer Ableitungsfunktion auf einen
Anfangswert, um einen
Detektionsparameter zum Detektieren eines
Wasserzeichens in der Informationsdarstellung zu erhalten

— 1610

Extrahieren des Wasserzeichens
aus der Informatiosdarstellung
unter Verwendung des
Detektionsparameters

— 1620

# FIGUR 16

**IN DER BESCHREIBUNG AUFGEFÜHRTE DOKUMENTE**

**In der Beschreibung aufgeführte Patentdokumente**

- US 2004001608 A1

**In der Beschreibung aufgeführte Nicht-Patentliteratur**

- **X. S. HUA.** Public Multiple Watermarking Resistant to Cropping. *Proceedings of the 6th International Conference on Pattern Recognition and Information Processing, PRIP' 2001,* Mai 2001, 18-20

- **J. G. PROAKIS.** Digital Communication. Mc Graw-Hill, 1995
- **J. G. PROAKIS.** Digital Communications. Mc Graw-Hill, 1995